(19) Europäisches Patentamt
European Patent Office
Office européen des brevets

(11) EP 2 116 585 B1

(12) EUROPEAN PATENT SPECIFICATION

(45) Date of publication and mention of the grant of the patent:
**09.05.2018 Bulletin 2018/19**

(21) Application number: **08720775.9**

(22) Date of filing: **20.02.2008**

(51) Int Cl.:
***C08K 5/45*** *(2006.01)* ***C08K 5/00*** *(2006.01)*

(86) International application number:
**PCT/JP2008/052894**

(87) International publication number:
**WO 2008/105301 (04.09.2008 Gazette 2008/36)**

(54) **ULTRAVIOLET ABSORBER COMPOSITION**

ULTRAVIOLETTLICHT ABSORBIERENDE ZUSAMMENSETZUNG

COMPOSITION ABSORBANT LE RAYONNEMENT ULTRAVIOLET

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **20.02.2007 JP 2007040030**
**28.09.2007 JP 2007255720**

(43) Date of publication of application:
**11.11.2009 Bulletin 2009/46**

(73) Proprietor: **FUJIFILM Corporation**
**Tokyo 106-8620 (JP)**

(72) Inventors:
- **HANAKI, Naoyuki**
  **Minami-ashigara-shi**
  **Kanagawa 250-0193 (JP)**
- **YAWATA, Toshihiko**
  **Minami-ashigara-shi**
  **Kanagawa 250-0193 (JP)**
- **MIKOSHIBA, Hisashi**
  **Minami-ashigara-shi**
  **Kanagawa 250-0193 (JP)**

(74) Representative: **Hoffmann Eitle**
**Patent- und Rechtsanwälte PartmbB**
**Arabellastraße 30**
**81925 München (DE)**

(56) References cited:
**EP-A1- 1 300 700**
**JP-A- 09 263 694**
**JP-A- 11 218 602**
**JP-A- 63 225 382**
**JP-A- 2002 169 020**
**JP-A- 2002 179 850**
**JP-A- 2003 136 842**
**JP-A- 2003 177 235**
**JP-A- 2005 154 565**
**JP-B- 49 011 155**
**US-A- 3 694 211**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

**Description**

TECHNICAL FIELD

The present invention relates to an ultraviolet absorbent composition.

BACKGROUND ART

Ultraviolet absorbents have been used in combination with various resins for providing the resins with ultraviolet-absorptivity. Both inorganic and organic ultraviolet absorbents are used. The inorganic ultraviolet absorbents (see, for example, JP-A-5-339033 ("JP-A" means unexamined published Japanese patent application), JP-A-5-345639 and JP-A-6-56466) are superior in durability properties such as weather resistance and heat resistance. However, the freedom in selecting the compound is limited, because the absorption wavelength is determined by the band gap of the compound. In addition, there is no inorganic absorbent that absorbs the light in a long-wavelength ultraviolet (UV-A) range of 320 to 400 nm. And any such absorbent that absorbs long-wavelength ultraviolet would have color because it would have absorption also in the visible range. It is known that a film having a shielding effect over a wide ultraviolet range can be obtained by coating a cerium oxide-based ultraviolet-shielding agent that blocks the UV-A range onto the surface of a specific titanic acid having a UV-B range blocking property (see, for example, JP-A-2006-316107).

In contrast, the freedom in designing the absorbent structure is much wider for organic ultraviolet absorbents, and thus, it is possible to obtain absorbents having various absorption wavelengths by designing the absorbent chemical structure properly.

Various organic ultraviolet absorbent systems have been studied, and for absorption in the long-wavelength ultraviolet range, it is conceivable either to use an absorbent having the wavelength of maximal absorption in the long-wavelength ultraviolet range or to use a high concentration of absorbent. However, the absorbents described in, for example, JP-A-6-145387 and JP-A-2003-177235 having the wavelength of maximal absorption in the long-wavelength ultraviolet range are inferior in light stability, and their absorption capacity declines over time.

In contrast, benzophenone- and benzotriazole-based ultraviolet absorbents are relatively higher in light stability, and increase in concentration or film thickness leads to relatively clean blocking of the light in the longer-wavelength range (see, for example, JP-T-2005-517787 ("JP-T" means published Japanese translation of PCT application) and JP-A-7-285927). However, when such an ultraviolet absorbent is applied as mixed with a resin or the like, the film thickness is limited to several tens of μm at the most. For utilizing the film thickness to block the light in the longer-wavelength range, it is necessary to add the ultraviolet absorbent to a considerably high concentration. However, simple increase in concentration only results in a problem of precipitation and bleed-out of the ultraviolet absorbent during long-term use. In addition, an ultraviolet absorbent having the wavelength of maximal absorption in the long-wavelength ultraviolet range but also having absorption in the range of 400 nm or more becomes yellowish when used, only to deteriorate the tone of the color image after transmission. Accordingly, increase in concentration leads to distinct problems. Under the circumstances, there is a need for an ultraviolet absorbent that blocks the light in a wide ultraviolet range and yet has no absorption in the visible range. Further, JP-A-60-170842 and JP-B-49-11155 ("JP-B" means examined Japanese patent publication) each describes a five-membered ring compound containing two sulfur atoms.

EP-A-1 300 700 teaches an ultraviolet light absorbing polymer film, coating, or molded article UV filter element comprising a polymer phase having molecularly dispersed therein

a) a first ultraviolet absorbing dibenzoylmethane compound of formula (I)

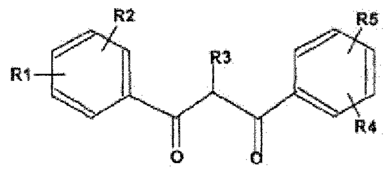

where R1 through R5 are each independently hydrogen, halogen, nitro, or hydroxyl, or further substituted or unsubstituted alkyl, alkenyl, aryl, alkoxy, acyloxy, ester, carboxyl, alkyl thio, aryl thio, alkyl amine, aryl amine, alkyl nitrile, aryl nitrile, arylsulfonyl, or 5-6 member heterocycle ring groups, and

b) a second ultraviolet light absorbing compound which absorbs ultraviolet light at a wavelength for which the first compound is deficient at absorbing.

JP-A-2002-169020 discloses an optical film containing a UV absorbing copolymer having units of a UV absorbing

monomer and an ethylenically unsaturated monomer and having the maximum absorption measured in a methylene chloride solvent at a wavelength in the range of 345-460 nm and a UV absorbent having the maximum absorption at a shorter wavelength than that of the UV absorbing copolymer by ≥5 nm.

DISCLOSURE OF INVENTION

The present invention overcomes the aforementioned problems to enable provision of an ultraviolet absorbent composition having excellent ultraviolet absorptivity in both the UV-A and the UV-B ranges and yet having no absorption in the visible range.

The inventors conducted intensive studies on compounds having absorption in the ultraviolet range and also studies into making the compounds block the light in the wider ultraviolet range and the UV light in the long-wavelength ultraviolet range more effectively and yet have no absorption in the visible range. As a result, the inventors found that it is not easy to solve the above problems with a single molecular compound that does not have a plurality of ultraviolet-absorbing structures. When the light in the entire ultraviolet range is blocked with a single molecule ultraviolet absorbent, the absorption intensity mostly becomes smaller, and thus, increase in addition amount is needed to block the ultraviolet light effectively. The increase in addition amount, which may lead to bleed-out, is undesirable. The compound having absorption in a wide wavelength range has broad absorption spectra with its wavelength of maximal absorption at the center. Thus, when a wavelength range to be blocked reliably and a wavelength range to be transmitted reliably are close to each other, it is quite difficult to satisfy both requirements at the same time. On the contrary, the compound having sharp absorption blocks the light only in a narrow range with its wavelength of maximal absorption at the center.

Based on these findings, it might be thought that it is possible to provide an ultraviolet absorbent composition blocking the light in the entire ultraviolet range and the light in the long-wavelength ultraviolet range effectively, by using an ultraviolet absorbent that does not have absorption on the long-wavelength side of the visible range but has sufficient absorption in the ultraviolet range, i.e., an ultraviolet absorbent having a steep spectrum in the long-wavelength range for absorption in the long-wavelength ultraviolet range and additionally another ultraviolet absorbent for absorption in the other range where absorption is insufficient. However, when ultraviolet absorbents properly selected according to the aforementioned finding were used in combination, poor compatibility with the polymer resulted in a problem of bleed-out of the ultraviolet absorbents, and moreover poor solubility in the solvent caused a problem of inferior operating efficiency.

Further, the inventors studied such ultraviolet-absorbing compounds having such a spectral shape. As described in Sumio Tokita "Chemistry Seminar 9. Color Chemistry" (Maruzen, 1982), p. 150 to 161, the spectral shape of a compound is constantly related to the energy level of its electron states as well as the levels of vibration and rotation. Restriction of the factors of molecular vibration and rotation would be effective in narrowing the absorbent width and giving a sharper spectral shape. However, even when the factors of vibration and rotation are restricted, the spectral shape may broaden, if the structure has side absorption in addition to its main absorption, the intensity of the side absorption is large, and the side absorption occurs in a wavelength range significantly separated from that of the main absorption. It was difficult to sharpen the spectral shape of a common ultraviolet absorbent, such as the benzotriazole- and triazine-based absorbents, which have been generally used as ultraviolet absorbents having broad absorption, for the above reasons. The inventors considered it essential for sharpening the spectral shape to depart from these structures and select a compound in the structure wherein the contribution of vibration and rotation is smaller and there is smaller side absorption. As a result, it was found to be possible to solve the problems in absorption effectively by using the compound represented by any one of formulae (2) to (4), (B-I) and (B-Ia) satisfying the requirements above as the ultraviolet absorbent. The inventors have also found that when the compound represented by any one of formulae (2) to (4), (B-I) and (B-Ia) is used as the ultraviolet absorbent, it is possible to solve the aforementioned problems of compatibility with a polymer and solubility in a solvent.

The present invention has been made on the basis of these findings.

According to a first aspect, the present invention provides an ultraviolet absorbent composition, comprising:

at least one kind of ultraviolet absorbent A having an absorption maximum wavelength of from 350 nm to 400 nm, a half value width of 55 nm or less and a molar extinction coefficient of 20,000 or more at the absorption maximum wavelength; and

at least one kind of ultraviolet absorbent B having an absorption maximum wavelength of 350 nm or less and showing 30% or more of absorbance at 320 nm of the absorbance at the absorption maximum wavelength;

wherein the absorption wavelength molar extinction coefficient and the half value width are determined by preparing a solution in ethyl acetate as a solvent at a concentration of approximately 5 x $10^{-5}$ mol/$dm^3$ and by measurement using a quartz cell having an optical path of 10mm, the half value width being the width of the absorption band at

half the maximum absorption; and

wherein the ultraviolet absorbent A comprises a compound represented by Formula (4) or Formula (B-Ia);

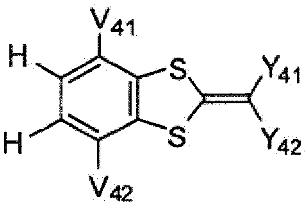

Formula (4)

wherein $Y_{41}$ and $Y_{42}$ each independently represents a monovalent substituent; one of $Y_{41}$ and $Y_{42}$ represents a cyano group, and the other represents a substituted or unsubstituted alkylcarbonyl group, a substituted or unsubstituted arylcarbonyl group, a substituted or unsubstituted heterocyclic carbonyl group, a substituted or unsubstituted alkylsulfonyl group, or a substituted or unsubstituted

Formula (B－Ｉa)

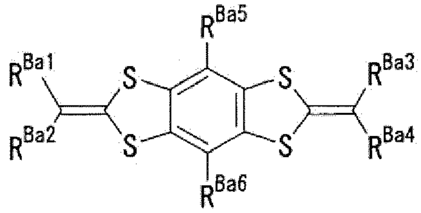

arylsulfonyl group; and $V_{41}$ and $V_{42}$ each independently represents a hydrogen atom or a monovalent substituent;

wherein $R^{Ba1}$, $R^{Ba2}$, $R^{Ba3}$ and $R^{Ba4}$ each independently represents a monovalent substituent; at least one of $R^{Ba1}$, $R^{Ba2}$, $R^{Ba3}$ and $R^{Ba4}$ represents a cyano group, a substituted or unsubstituted alkoxycarbonyl group, a substituted or unsubstituted aryloxycarbonyl group, a substituted or unsubstituted carbamoyl group, a substituted or unsubstituted alkylcarbonyl group, a substituted or unsubstituted arylcarbonyl group, a substituted or unsubstituted alkylsulfonyl group, or a substituted or unsubstituted arylsulfonyl group; and $R^{Ba5}$ and $R^{Ba6}$ each independently represent a substituted or unsubstituted alkoxy group, a substituted or unsubstituted aryloxy group, a substituted or unsubstituted acyloxy group, a substituted or unsubstituted alkoxycarbonyloxy group, a substituted or unsubstituted aryloxycarbonyloxy group, a substituted or unsubstituted carbamoyloxy group, a substituted or unsubstituted amino group, a substituted or unsubstituted acylamino group, or a substituted or unsubstituted carbamoylamino group.

Preferably the ultraviolet absorbent composition according to Claim 1, wherein the ultraviolet absorbent B is an ultraviolet absorbent having the absorption maximum wavelength of less than 320 nm.

Preferably the ultraviolet absorbent composition according to Claim 1, wherein the ultraviolet absorbent B is an ultraviolet absorbent having the absorption maximum wavelength of from 320 nm to 350 nm.

Preferably the ratio of the ultraviolet absorbent A to the ultraviolet absorbent B is in the range of 1:4 to 2:1.

Preferably at least one of the pair of $R^{Ba1}$ and $R^{Ba2}$ and the pair of $R^{Ba3}$ and $R^{Ba4}$ does not form any ring.

Preferably the pair of $R^{Ba1}$ and $R^{Ba2}$ and the pair of $R^{Ba3}$ and $R^{Ba4}$ do not form any ring.

Preferably the ultraviolet absorbent B comprises a compound represented by Formula (IIa) or formula (IIb):

[Chemical formula 6]

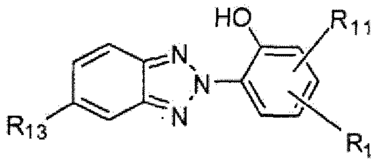

(IIa)

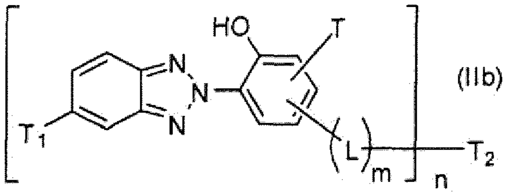

(IIb)

wherein $R^{11}$ represents a hydrogen atom, a substituted or unsubstituted alkyl group, a substituted or unsubstituted cycloalkyl group, or a substituted or unsubstituted aryl group;

$R^{12}$ represents a hydrogen atom, a halogen atom, a substituted or unsubstituted alkyl group, or a substituted or unsubstituted aryl group;

$R^{13}$ represents a hydrogen atom, a halogen atom, a substituted or unsubstituted alkyl group, a substituted or unsubstituted alkoxy group, or -$COOR_{14}$ group wherein $R_{14}$ represents a hydrogen atom, a substituted or unsubstituted alkyl group, or a substituted or unsubstituted aryl group;

T represents a hydrogen atom, or a substituted or unsubstituted alkyl group;

$T_1$ represents a hydrogen atom, a halogen atom, a substituted or unsubstituted alkyl group, a substituted or unsubstituted aryl group, or a substituted or unsubstituted alkoxy group;

L represents a divalent linking group or a single bond;

m represents 0 or 1;

[Chemical formula 7]

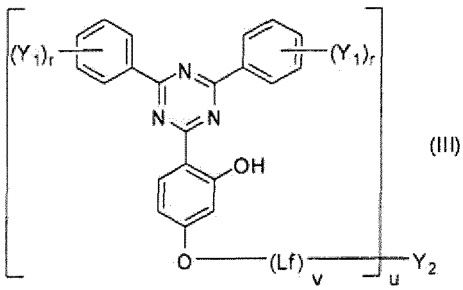

(III)

n represents an integer of 1 to 4; and

when n is 1, $T_2$ represents a halogen atom, a substituted or unsubstituted alkyl group, or a substituted or unsubstituted aryl group; when n is 2, $T_2$ represents a divalent substituent; when n is 3, $T_2$ represents a trivalent substituent; and when n is 4, $T_2$ represents a tetravalent substituent.

Preferably the ultraviolet absorbent B comprises a compound represented by Formula (III):

wherein the substituent $Y_1$ represents a hydrogen atom, a hydroxyl group, a substituted or unsubstituted alkyl group, a substituted or unsubstituted aryl group, or a substituted or unsubstituted alkoxy group;

Lf represents a divalent linking group or a single bond;

u represents 1 or 2;

v represents 0 or 1;

r represents an integer of 1 to 3; and

when u is 1, $Y_2$ represents a hydrogen atom, a substituted or unsubstituted alkyl group, or a substituted or unsubstituted aryl group; and when u is 2, $Y_2$ represents a divalent substituent.

Preferably the ultraviolet absorbent B comprises a compound represented by Formula (IVa) or Formula (IVb):

[Chemical formula 8]

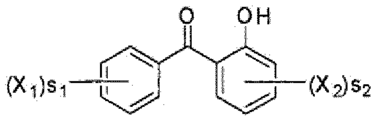 (IVa) 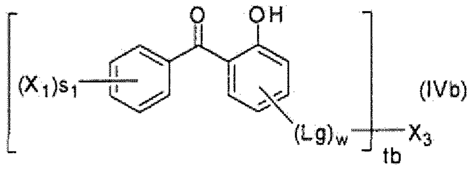 (IVb)

wherein, in Formula (IVa), $X_1$ and $X_2$ each independently represents a hydrogen atom, a halogen atom, a hydroxyl group, a substituted or unsubstituted alkyl group, a substituted or unsubstituted phenyl group, a substituted or unsubstituted alkoxy group, a substituted or unsubstituted alkylsulfonyl group, a substituted or unsubstituted arylsulfonyl group, a sulfonic acid group, a substituted or unsubstituted alkyloxycarbonyl group, a substituted or unsubstituted aryloxycarbonyl group, or a substituted or unsubstituted amino group; and s1 and s2 each independently represents an integer of 1 to 3; and

wherein, in formula (IVb), $X_1$ represents a hydrogen atom, a halogen atom, a hydroxyl group, a substituted or unsubstituted alkyl group, a substituted or unsubstituted phenyl group, a substituted or unsubstituted alkoxy group, a substituted or unsubstituted alkylsulfonyl group, a substituted or unsubstituted arylsulfonyl group, a sulfonic acid group, a substituted or unsubstituted alkyloxycarbonyl group, a substituted or unsubstituted aryloxycarbonyl group, or a substituted or unsubstituted amino group;

s1 represents an integer of 1 to 3;

Lg represents a divalent substituent or a single bond;

w represents 0 or 1;

tb represents 1 or 2; and

when tb is 1, $X_3$ represents a hydrogen atom, a halogen atom, a hydroxyl group, a substituted or unsubstituted alkyl group, a substituted or unsubstituted phenyl group, a substituted or unsubstituted alkoxy group, a substituted or unsubstituted alkylsulfonyl group, a substituted or unsubstituted arylsulfonyl group, a sulfonic acid group, a substituted or unsubstituted alkyloxycarbonyl group, a substituted or unsubstituted aryloxycarbonyl group, or a substituted or unsubstituted amino group; and when tb is 2, $X_3$ represents a divalent substituent.

Preferably the ultraviolet absorbent B comprises at least one kind of compound selected from the following compound group B:

[Compound Group B]
Compound represented by Formula (IIa) described above

(II-1) 2-(2'-hydroxy-3',5'-di-t-amylphenyl)benzotriazole
(II-2) 2-(3-t-butyl-5-methyl-2-hydroxyphenyl)-5-chlorobenzotriazole
(II-3) 2-(2-hydroxy-5-t-octylphenyl)benzotriazole
(II-4) 2-ethylhexyl-3-[3-t-butyl-4-hydroxy-5-(5-chloro-2H-benzotriazole-2-yl)phenyl] propionate
(II-5) 2-(2H-benzotriazole-2-yl)-6-dodecyl-4-methyl-phenol
(II-6) 2-(2H-benzotriazole-2-yl)-4-t-butylphenol
(II-7) 2-(2H-benzotriazole-2-yl)-6-(1-methyl-1-phenylethyl)-4-(1,1-3,3-tetramethylbutyl)phenol
(II-8) 2-(2H-benzotriazole-2-yl)-4-methylphenol
(II-9) 2-(2H-benzotriazole-2-yl)-4,6-bis(1-methyl-1-phenylethyl)phenol

- Compound represented by Formula (IIb) described above

    (II-10) 2,2'-methylene-bis[6-(2H-benzotriazole-2-yl)-4-(1,1,3,3-tetramethylbutyl)phenol]

- Compound represented by Formula (III) described above

    (III-1) 2,4-bis(2-hydroxy-4-butoxyphenyl)-6-(2,4-dibutoxyphenyl)-1,3,5-triazine

(III-2) 2,6-bis(2,4-dimethylphenyl)-4-(2-hydroxy-4-octyloxyphenyl)-1,3,5-triazine
(III-3) 2-[4,6-bis(2,4-dimethylphenyl)-1,3,5-triazine-2-yl]-5-[2-hydroxy-3-(2-ethylhexyloxy)propoxy]phenol
(III-4) 2-[2-hydroxy-4-(hexyloxy)phenyl]-4,6-diphenyl-1,3,5-triazine
(III-5) 6-(4-methoxyphenyl)-2,4-bis[4-(2-ethylhexyloxy)-2-hydroxyphenyl]-1,3,5-triazine

- Compound represented by Formula (IVa) or (IVb) described above

(IV-1) hexyl 2-(4-diethylamino-2-hydroxybenzoyl)benzoate
(IV-2) 2,2'-dihydroxy-4,4'-dimethoxybenzophenone
(IV-3) 2-hydroxy-4-methoxybenzophenone
(IV-4) 1,4-bis(4-benzoy1-3-hydroxyphenoxy)butane
(IV-5) 2-hydroxy-4-octoxybenzophenone
(IV-6) 2-hydroxy-4-methoxybenzophenone-5-sulfonic acid
(IV-7) 2,2',4,4'-tetrahydroxybenzophenone

According to a second aspect, the present invention provides an ultraviolet absorbent dispersion comprising the ultraviolet absorbent composition in accordance with the above first aspect.
According to a third aspect, the present invention provides an ultraviolet absorbent solution comprising the ultraviolet absorbent composition in accordance with the above first aspect.
According to a fourth aspect, the present invention provides a polymer material comprising the ultraviolet absorbent composition in accordance with the above first aspect.
Other and further features and advantages of the invention will appear more fully from the following description, taking the accompanying drawing into consideration.

## BRIEF DESCRIPTION OF DRAWINGS

[Fig. 1] Fig. 1 shows preferred absorption spectrum of the ultraviolet absorbents A and B for use in the present invention.

## BEST MODE FOR CARRYING OUT INVENTION

Hereinafter, the present invention will be described in detail.
The ultraviolet absorbent composition according to the present invention characteristically comprises at least one kind of ultraviolet absorbent A and at least one kind of ultraviolet absorbent B each having a particular absorption spectral shape.
The blending ratio of the ultraviolet absorbent A to the ultraviolet absorbent B may be arbitrary. The ratio of the ultraviolet absorbent A to the ultraviolet absorbent B (A:B) is arbitrary excluding 0:1 and 1:0. It is preferably 1:9 to 7:3, more preferably 1:5 to 3:2, and particularly preferably 1:4 to 2:1. The blending ratio in the present invention is expressed by molar ratio. It is possible to convert the molar ratio to the weight ratio, when the molecular weight of the ultraviolet absorbent is known, and thus, those with normal skill in the art can mix the ingredients based on weight ratio.
The ultraviolet absorbent composition according to the present invention preferably includes two or less kinds of compounds, particularly preferably one kind of compound, as the ultraviolet absorbent A. It preferably includes three or less kinds of compounds, more preferably two or less kinds of compounds, and particularly preferably one kind of compound, as the ultraviolet absorbent B.
The ultraviolet absorbent having a particular absorption spectral shape according to the present invention particular will be described below.
The ultraviolet absorbent A characteristically has an absorption maximum wavelength of 350 nm or more and 400 nm or less and a half value width of 55 nm or less. The ultraviolet absorbent B characteristically has an absorption maximum wavelength of 350 nm or less and showing 30% or more of absorbance at 320 nm of the absorbance at the absorption maximum wavelength. In particular, the absorbance of the ultraviolet absorbent B at 320 nm is preferably 50% or more of the absorbance at the absorption maximum wavelength.
The ultraviolet absorbent B is a compound having an absorption maximum wavelength of 350 nm or less and showing 30% or more of absorbance at 320 nm of the absorbance at the absorption maximum wavelength. For example, as shown in Fig. 1, the material can be classified into an ultraviolet absorbent (B-(1)) having an absorption maximum wavelength of less than 320 nm and an ultraviolet absorbent (B-(2)) having an absorption maximum wavelength of from 320 nm to 350 nm. Fig. 1 shows preferable absorption spectra of the ultraviolet absorbent A and the ultraviolet absorbent B for use in the present invention.

The absorption maximum wavelength and the half value specified in the present invention can be determined easily by a skilled person in the art. The measuring methods are described, for example, in Chemical Society of Japan Ed., "Experimental Chemistry Lecture, Chapter 7 Spectroscopy II", 4th Ed., (Maruzen, 1992), p. 180 to 186. Specifically, they are determined by dissolving a sample in a suitable solvent and measuring the spectrum in a spectrophotometer by using two quartz or glass cells for the sample and control. For example, the solvent for use is required to be capable of dissolving the sample, have no absorption in the measurement wavelength range, have smaller interaction with the solute molecule, and have relatively low volatility. Any solvent may be used, as long as it satisfies the conditions above. In the present invention, the measurement is made by using ethyl acetate (EtOAc) as the solvent.

The absorption maximum wavelength and the half value width of the dyes in the present invention are determined by preparing a solution in ethyl acetate as the solvent at a concentration of approximately $5 \times 10^{-5}$ $mol \cdot dm^{-3}$ and by measurement while using a quartz cell having an optical path length of 10 mm.

The spectral half value width is described, for example, in Chemical Society of Japan Ed., "Experimental Chemistry Lecture, Chapter 3 Basic Operation III", 4th Ed., (Maruzen, 1991), p. 154. The half value width is described in the literature above by using wave number as abscissa, but the half value width is plotted against wavelength in the present invention and thus, the unit of the half value width is nm. Specifically, it is defined as the width of the absorption band at an absorbance of 1/2 of that at the absorption maximum wavelength and used as an indicator of the absorption spectral shape. A spectrum having a smaller half value width is a sharp spectrum, while that having a large half value width, a broad spectrum. An ultraviolet absorbent giving a broad spectrum has absorption in a wider range from the absorption maximum wavelength to the long-wavelength side. For this reason, for shielding the light in the long-wavelength ultraviolet range effectively without yellowing, an ultraviolet absorbent showing a spectrum having a smaller half value width is preferable.

As described in Sumio Tokita, "Chemistry Seminar 9, Color Chemistry ", (Maruzen, 1982), p. 154 to 155, the absorption intensity, that is the oscillator intensity of light, is proportional with the integral of the molar extinction coefficient. When the absorption spectra is symmetrical, the oscillator intensity is proportional to the product of the absorbance at the absorption maximum wavelength and the half value width (in such a case, the half value width is a value expressed by wavelength), which means that a compound having a spectrum having a smaller half value width has larger absorbance at the absorption maximum wavelength, even when the transition moment is the same. Such an ultraviolet absorbent has an advantage that it is possible to block the light in the range around the absorption maximum wavelength effectively even when it is added in a small amount, but the absorbance drops rapidly as the wavelength is shifted slightly from the absorption maximum wavelength, prohibiting light blocking over a wide range.

The ultraviolet absorbent A in the present invention characteristically has an absorption maximum wavelength of from 350 nm to 400 nm and a half value width of 55 nm or less. The use of the ultraviolet absorbent A having the absorption of the above-described wavelength range in combination with the ultraviolet absorbent B is suitable for the coverage of the ultraviolet absorption range. However, a possibility of yellow-color development of a composition has been expected. In view of the possibility, it was difficult for a skilled person in the art to come up with the combination of these ultraviolet absorbents.

Hereinafter, the ultraviolet absorbent A for use in the present invention will be described.

The ultraviolet absorbent A characteristically has an absorption maximum wavelength of from 350 nm to 400 nm, a half value width of 55 nm or less and a molar extinction coefficient of 20,000 or more at the absorption maximum wavelength. The ultraviolet absorbent A preferably has an absorption maximum wavelength of 360 nm or more and 385 nm or less. When the ultraviolet absorbent A having such the suitable absorption maximum wavelength is used in combination with the ultraviolet absorbent B, it is possible to cover the entire UV-A range of 350 nm to 400 nm with a small risk of color development. The molar extinction coefficient at the absorption maximum wavelength is preferably 30,000 or more, more preferably 40,000 or more, and particularly preferably 50,000 or more. If the coefficient is less than 20,000, the absorption efficiency of the ultraviolet absorbent per unit weight becomes worse. In view of the absorption efficiency, a great amount of the ultraviolet absorbent has to be used in order to completely absorb the ultraviolet range. This is not preferable because of problems such that the working efficiency becomes worse and a possibility of bleed out arises. It has been found that as the molar extinction coefficient at the absorption maximum wavelength becomes larger toward a degree of 50,000 or more, the half value width becomes narrower, so that the possibility of color development can be lessened. The molar extinction coefficient is defined, for example, in Chemical Society of Japan Ed., "New Experimental Chemistry Lecture, Chapter 9 Analytical Chemistry [II]", (Maruzen, 1977), p. 244, and can be determined, together with the absorption maximum wavelength and the half value width above.
The ultraviolet absorbent A comprises a compound represented by Formula (4) of Formula (B-Ia).

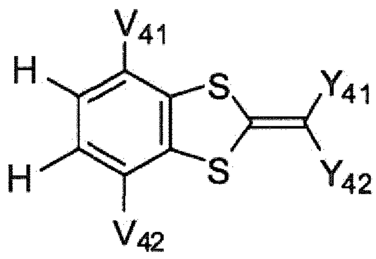

Formula (4)

In formula (4), $Y_{41}$ and $Y_{42}$ each independently represent a monovalent substituent; one of $Y_{41}$ and $Y_{42}$ represents a cyano group, and the other represents a substituted or unsubstituted alkylcarbonyl group, a substituted or unsubstituted arylcarbonyl group, a substituted or unsubstituted heterocyclic carbonyl group, a substituted or unsubstituted alkylsulfonyl group, or a substituted or unsubstituted arylsulfonyl group.

It is preferable that one of $Y_{41}$ and $Y_{42}$ is a cyano group, and the other is a substituted or unsubstituted alkylcarbonyl group, a substituted or unsubstituted arylcarbonyl group, or a substituted or unsubstituted heterocyclic carbonyl group. It is especially preferable that one of $Y_{41}$ and $Y_{42}$ is a cyano group, and the other is a substituted or unsubstituted alkylcarbonyl group, or a substituted or unsubstituted arylcarbonyl group. Further, it is preferable that $Y_{41}$ and $Y_{42}$ do not bind to each other to form any ring with other atom. It is further preferable that one of $Y_{41}$ and $Y_{42}$ is a cyano group, and the other is a substituted or unsubstituted alkylcarbonyl group having 3 to 18 carbon atoms, or a substituted or unsubstituted arylcarbonyl group having 7 to 18 carbon atoms.

$V_{41}$ and $V_{42}$ each independently represent a hydrogen atom or a monovalent substituent. Examples of the monovalent substituent include a halogen atom, a mercapto group, a cyano group, a carboxyl group, a phosphoric acid group, a sulfo group, a hydroxy group, a carbamoyl group, a sulfamoyl group, a nitro group, an alkoxy group, an aryloxy group, an acyl group, an acyloxy group, an acylamino group, a sulfonyl group, a sulfinyl group, a sulfonylamino group, an amino group, a substituted amino group, an ammonium group, a hydrazino group, a ureido group, an imido group, an alkyl- or aryl-thio group, a substituted or unsubstituted alkenylthio group, an alkoxycarbonyl group, an aryloxycarbonyl group, a unsubstituted alkyl group, a substituted alkyl group, a substituted or unsubstituted aryl group, and a substituted or unsubstituted heterocyclic group. Specific examples of these substituents include those groups recited as examples of $Y_{41}$ and $Y_{42}$. The substituent may be further substituted, and multiple substituents, if present, may be the same as or different from each other. In the present case, the substituent is the above-described monovalent substituent. In addition, the substituents may bind to each other to form a ring.

$V_{41}$ and $V_{42}$ each are preferably a cyano group, a nitro group, a hydroxyl group, an alkoxy group, an aryloxy group, or an acyloxy group; and particularly preferably an alkoxy group, an aryloxy group, or an acyloxy group.

A preferable combination of the substituents in the formula (4) is such a combination that one of $Y_{41}$ and $Y_{42}$ is a cyano group, and the other is a substituted or unsubstituted alkylcarbonyl group having 3 to 18 carbon atoms, or a substituted or unsubstituted arylcarbonyl group having 7 to 18 carbon atoms; and both $V_{41}$ and $V_{42}$ are an alkoxy group, an aryloxy group, or an acyloxy group.

The compound represented by formula (4) can be synthesized according to any one of the methods described or cited in Journal of Chemical Crystallography, 27, 1997, p. 516, right column, line 3 to p. 520, right column, line 15; Liebigs Annalen der Chemie, 726, p. 106, line 15 to p. 109, line 37; JP-A-49-1115, p. 3, left column, line 7 to p. 5, left column, line 8; Bioorganic & Medicinal Chemistry Letters, 7, 1997, p. 652, lines 9 to 19; Journal of Organic Chemistry, 43, 1978, p. 2153, left column, lines 2 to 12; JP-A-4-338759, p. 4, left column, line 2 to p. 5, left column, line 2; JP-A-3-54566, p. 7, left column, line 6 to p. 8, left column, line 10; Synthesis, 1986, p. 968, left column, lines 1 to 22, or a method similar to that.

Hereinafter, typical examples of the compound represented by formula (4) that can be used in the present invention will be described below, but the present invention is not restricted thereby.

[Examples of the compound corresponding to that represented by formula (4)]

(S-01)

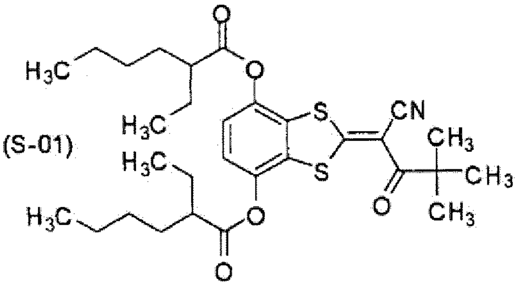

(S-02)

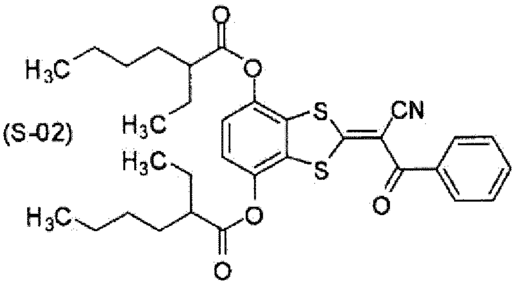

(S-03)

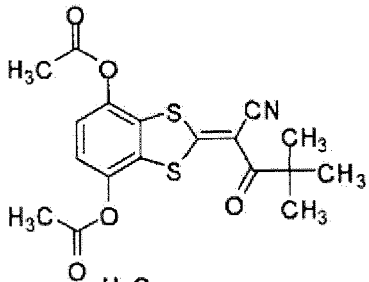

(S-04)

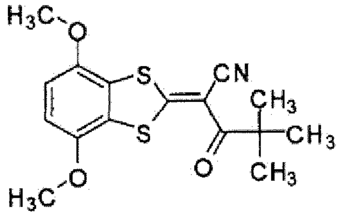

(S-05)

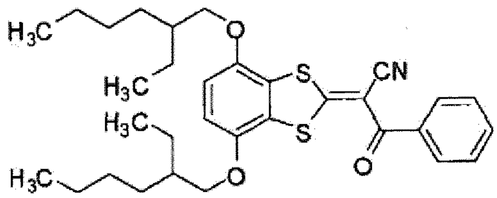

(S-06)

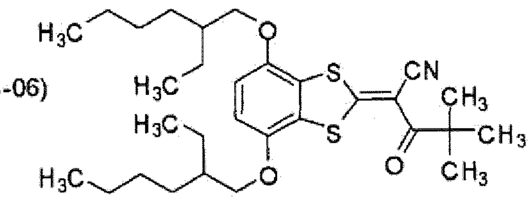

(S-07)

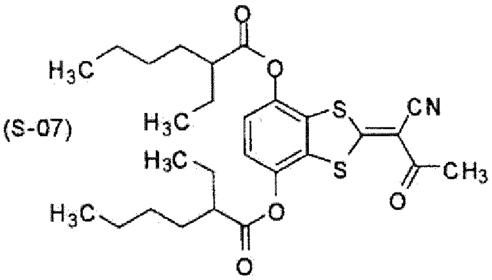

(S-08)

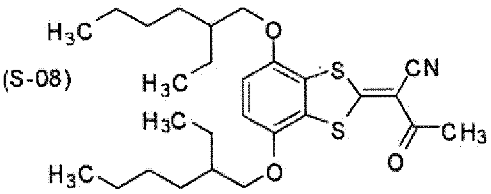

(S-09)

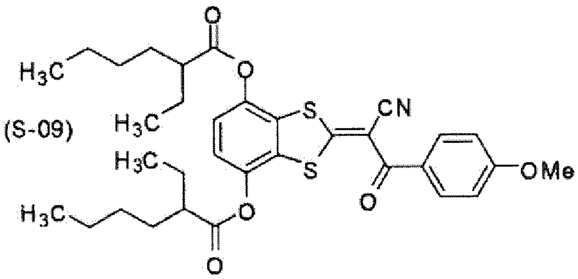

(S-10)

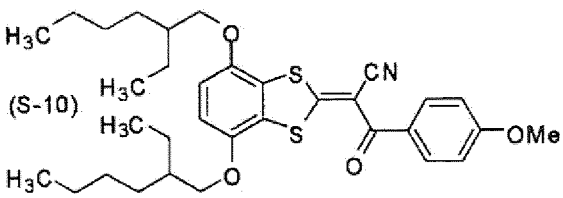

(S-11)

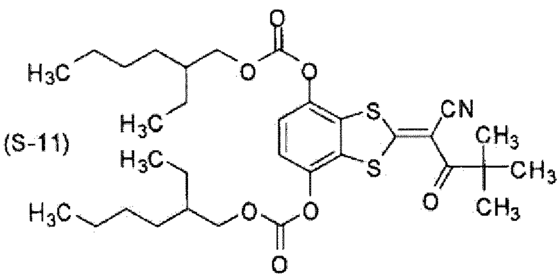

(S-12)

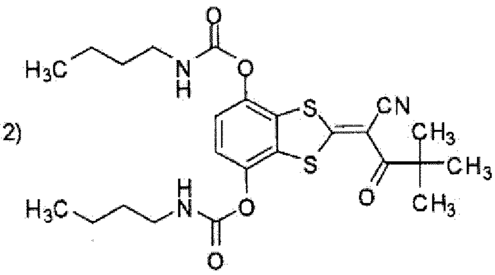

(S-13)

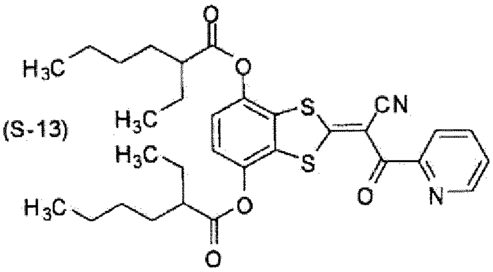

(S-14)

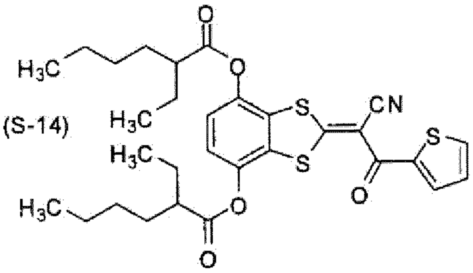

(S-15)

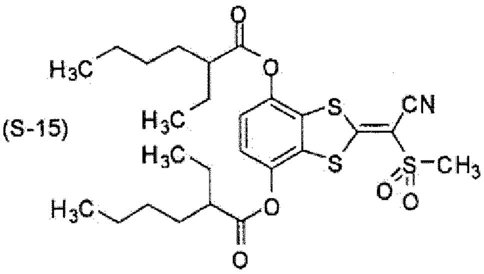

(S-16)

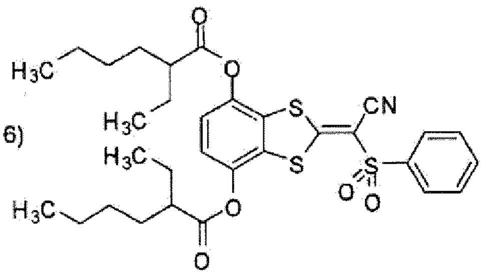

Next the compound represented by formula (B-Ia) will be described.

Formula (B-Ia)

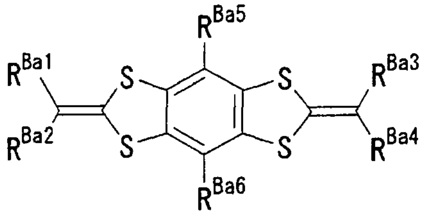

In formula (B-Ia), $R^{Ba1}$, $R^{Ba2}$, $R^{Ba3}$ and $R^{Ba4}$ each represent a monovalent substituent. However, at least one of $R^{Ba1}$, $R^{Ba2}$, $R^{Ba3}$ and $R^{Ba4}$ represents a cyano group, an alkoxycarbonyl group having 1 to 20 carbon atoms (preferably 1 to 10 carbon atoms), an aryloxycarbonyl group having 6 to 20 carbon atoms (preferably 6 to 10 carbon atoms), a carbamoyl group having 1 to 20 carbon atoms (preferably 1 to 10 carbon atoms), an alkylcarbonyl group having 1 to 20 carbon atoms (preferably 1 to 10 carbon atoms), an arylcarbonyl group having 6 to 20 carbon atoms (preferably 6 to 10 carbon atoms), an alkylsulfonyl group having 1 to 20 carbon atoms (preferably 1 to 10 carbon atoms) or an arylsulfonyl

group having 6 to 20 carbon atoms (preferably 6 to 10 carbon atoms).

It is preferable that $R^{Ba1}$, $R^{Ba2}$, $R^{Ba3}$, and $R^{Ba4}$ are a monovalent substituent by which at least one of the combination of ($R^{Ba1}$, $R^{Ba2}$) and the combination of ($R^{Ba3}$, $R^{Ba4}$) form no ring.

It is especially preferable that each of $R^{Ba1}$, $R^{Ba2}$, $R^{Ba3}$, and $R^{Ba4}$ is a monovalent substituent by which neither the combination of ($R^{Ba1}$, $R^{Ba2}$) nor the combination of ($R^{Ba3}$, $R^{Ba4}$) forms a ring.

Absence of ring formation provides such advantages that the ultraviolet absorbent is able to exhibit an excellent long-wavelength ultraviolet absorption performance, and also a self-yellow color development of the ultraviolet absorbent can be prevented.

In the present specification, examples of the monovalent substituent that does not form any ring include a straight-chain or branched alkyl group having 1 to 20 carbon atoms (preferably 1 to 10 carbon atoms) (e.g., methyl, ethyl), an aryl group having 6 to 20 carbon atoms (preferably 6 to 10 carbon atoms) (e.g., phenyl, naphthyl), a cyano group, an alkoxycarbonyl group having 1 to 20 carbon atoms (preferably 1 to 10 carbon atoms) (e.g., methoxycarbonyl), an aryloxycarbonyl having 6 to 20 carbon atoms (preferably 6 to 10 carbon atoms) (e.g., phenoxycarbonyl), a substituted or unsubstituted carbamoyl group having 1 to 20 carbon atoms (preferably 1 to 10 carbon atoms) (e.g., carbamoyl, N-phenylcarbamoyl, N,N-dimethylcarbamoyl), an alkylcarbonyl group having 1 to 20 carbon atoms (preferably 1 to 10 carbon atoms) (e.g., acetyl), an arylcarbonyl group having 6 to 20 carbon atoms (preferably 6 to 10 carbon atoms) (e.g., benzoyl), a nitro group, a substituted or unsubstituted sulfamoyl group having 0 to 20 carbon atoms (preferably 0 to 10 carbon atoms) (e.g., sulfamoyl, N-phenylsulfamoyl), an alkylsulfonyl group having 1 to 20 carbon atoms (preferably 1 to 10 carbon atoms) (e.g., methansulfonyl), an arylsulfonyl group having 6 to 20 carbon atoms (preferably 6 to 10 carbon atoms) (e.g., benzenesulfonyl), and a four- to seven-membered (preferably five- to six-membered) heterocyclic group (e.g., pyridyl, morpholino). The substituent may be further substituted, and multiple substituents, if present, may be the same as or different from each other.

Herein, at least one of the monovalent substituents $R^{Ba1}$, $R^{Ba2}$, $R^{Ba3}$ and $R^{Ba4}$ is a cyano group, an alkoxycarbonyl group having 1 to 20 carbon atoms (preferably 1 to 10 carbon atoms), an aryloxycarbonyl group having 6 to 20 carbon atoms (preferably 6 to 10 carbon atoms), a carbamoyl group having 1 to 20 carbon atoms (preferably 1 to 10 carbon atoms), an alkylcarbonyl group having 1 to 20 carbon atoms (preferably 1 to 10 carbon atoms), an arylcarbonyl group having 6 to 20 carbon atoms (preferably 6 to 10 carbon atoms), an alkylsulfonyl group having 1 to 20 carbon atoms (preferably 1 to 10 carbon atoms) or an arylsulfonyl group having 6 to 20 carbon atoms (preferably 6 to 10 carbon atoms).

$R^{Ba1}$, $R^{Ba2}$, $R^{Ba3}$ and $R^{Ba4}$ each are particularly preferably selected from a cyano group, an alkoxycarbonyl group having 1 to 20 carbon atoms (preferably 1 to 10 carbon atoms), an aryloxycarbonyl group having 6 to 20 carbon atoms (preferably 6 to 10 carbon atoms), a carbamoyl group having 1 to 20 carbon atoms (preferably 1 to 10 carbon atoms), an alkylcarbonyl group having 1 to 20 carbon atoms (preferably 1 to 10 carbon atoms), an arylcarbonyl group having 6 to 20 carbon atoms (preferably 6 to 10 carbon atoms), an alkylsulfonyl group having 1 to 20 carbon atoms (preferably 1 to 10 carbon atoms) or an arylsulfonyl group having 6 to 20 carbon atoms (preferably 6 to 10 carbon atoms) or an arylsulfonyl group having 6 to 20 carbon atoms (preferably 6 to 10 carbon atoms). It is more preferable that a pair of $R^{1a}$ and $R^{2a}$, and a pair of $R^{3a}$ and $R^{4a}$ are same in terms of combination of the members in each pair.

$R^{Ba5}$ and $R^{Ba6}$ each represent an alkoxy group having 1 to 20 carbon atoms (preferably 1 to 10 carbon atoms), an aryloxy group having 6 to 20 carbon atoms (preferably 6 to 10 carbon atoms), an acyloxy group having 1 to 20 carbon atoms (preferably 1 to 10 carbon atoms), an alkoxycarbonyloxy group having 1 to 20 carbon atoms (preferably 1 to 10 carbon atoms), an aryloxycarbonyloxy group having 6 to 20 carbon atoms (preferably 6 to 10 carbon atoms), a carbamoyloxy group having 1 to 20 carbon atoms (preferably 1 to 10 carbon atoms), an amino group having 0 to 20 carbon atoms (preferably 0 to 10 carbon atoms), an acylamino group having 1 to 20 carbon atoms (preferably 1 to 10 carbon atoms), or a carbamoylamino group having 1 to 20 carbon atoms (preferably 1 to 10 carbon atoms).

$R^{Ba5}$ and $R^{Ba6}$ may further have a substituent. Examples of the substituent include the monovalent substituents described above. Examples of a bivalent substituent include a carbonyl group and an imino group. Multiple substituents, when present, may be the same as or different from each other. The substituents may bind to each other, forming a fused ring or a spiro ring.

Hereinafter, typical examples of the compound represented by formula (B-Ia) that can be used in the present invention will be described below, but the present invention is not restricted thereby.

[Chemical formula 20]

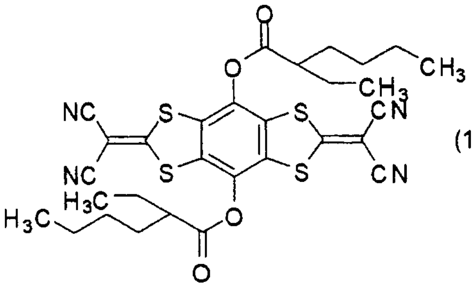
(1)

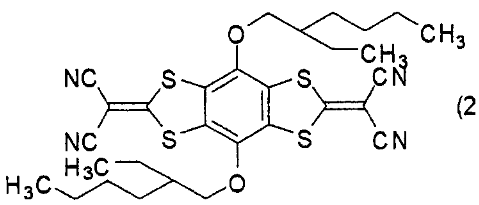
(2)

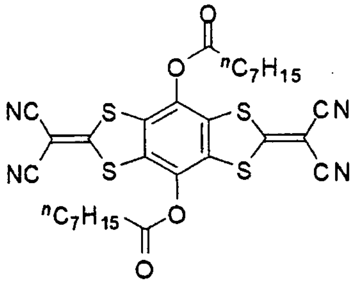
(3)

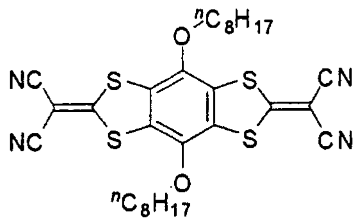
(4)

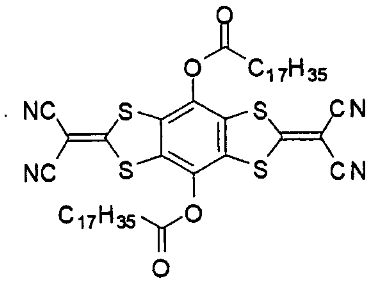
(5)

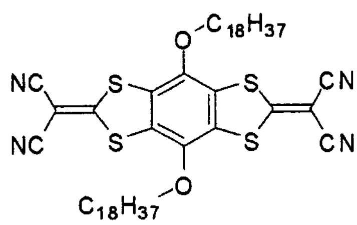
(6)

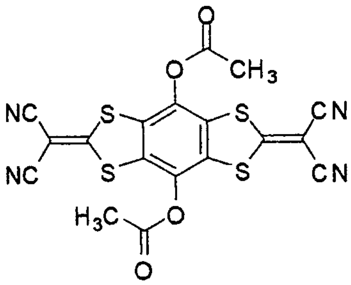
(7)

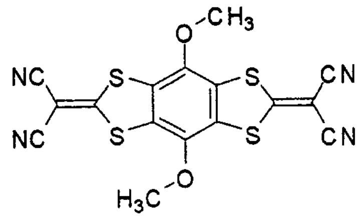
(8)

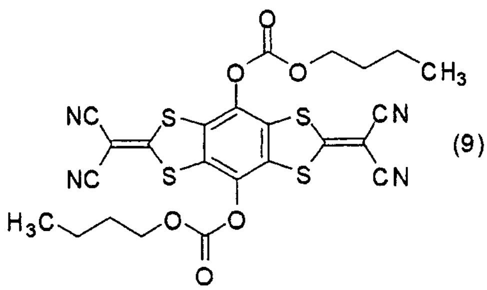
(9)

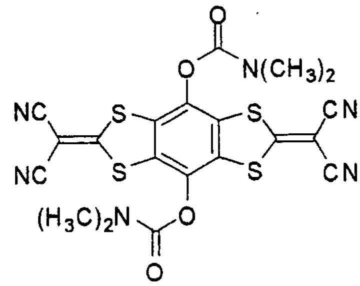
(10)

[Chemical formula 21]

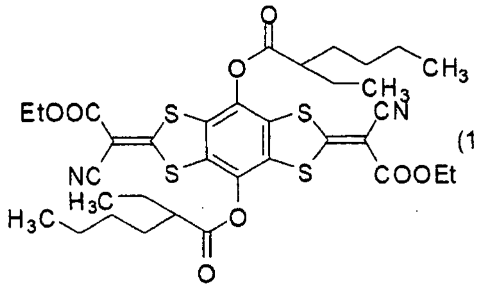
(11)

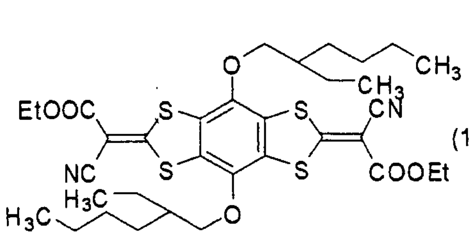
(12)

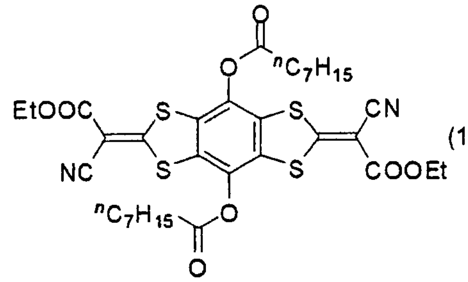
(13)

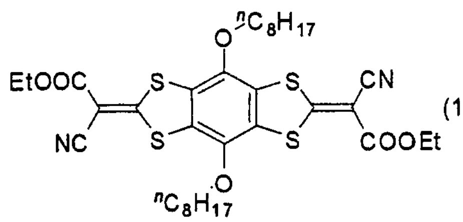
(14)

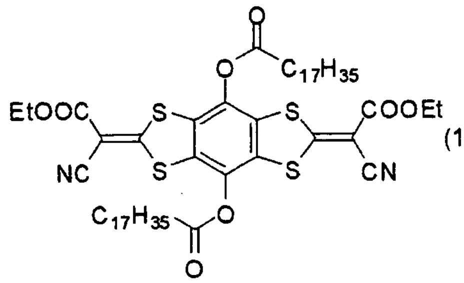
(15)

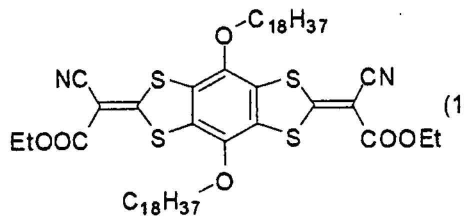
(16)

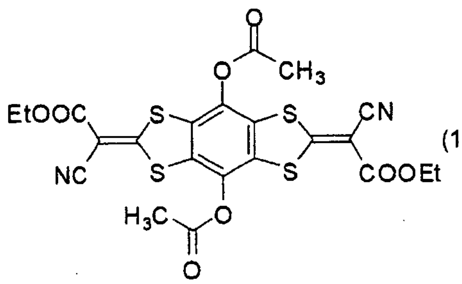
(17)

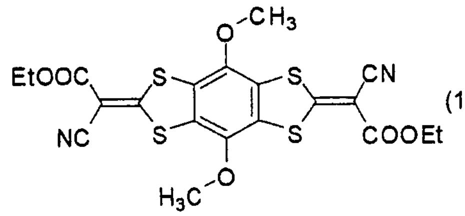
(18)

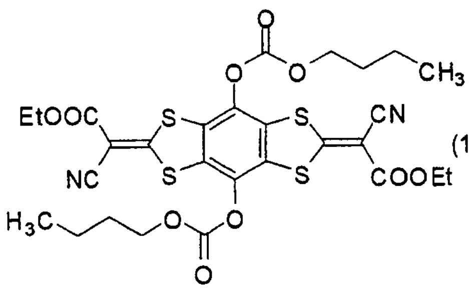
(19)

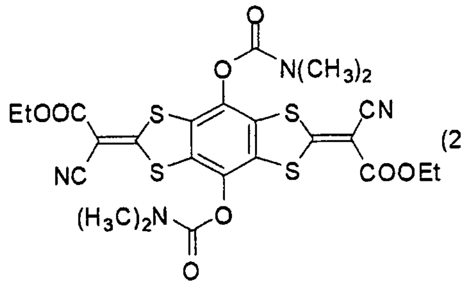
(20)

[Chemical formula 22]

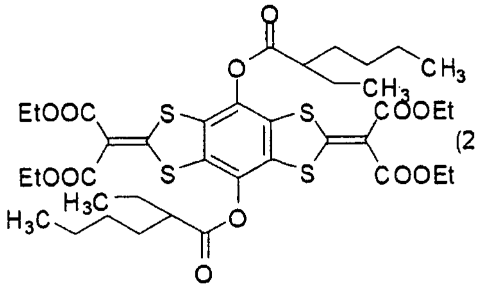
(21)

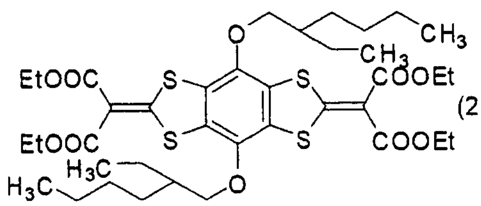
(22)

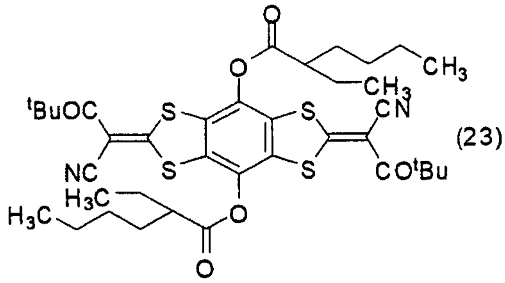
(23)

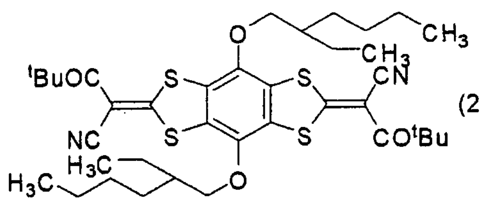
(24)

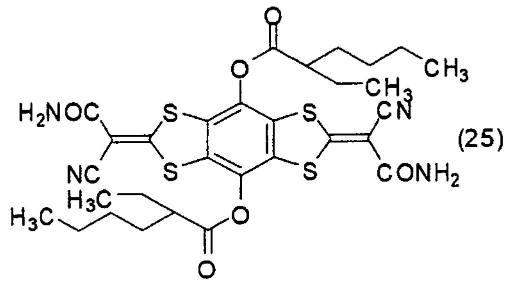
(25)

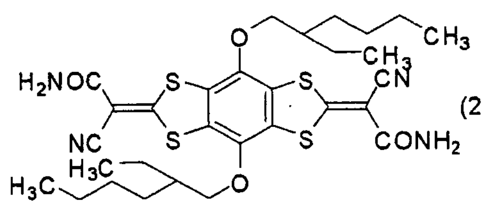
(26)

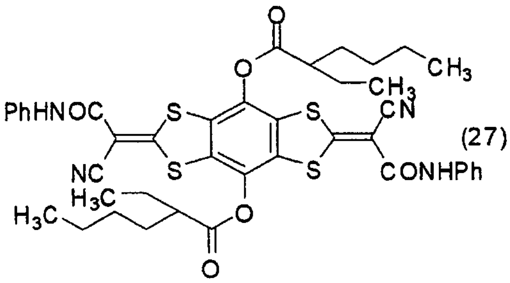
(27)

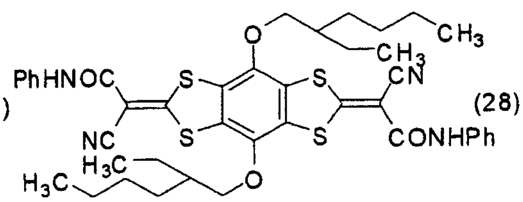
(28)

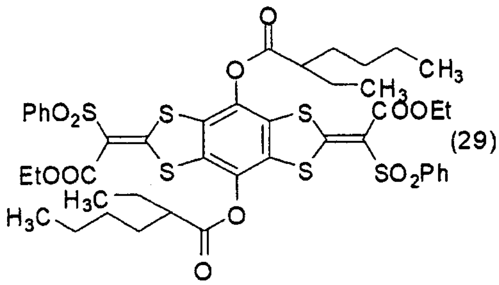
(29)

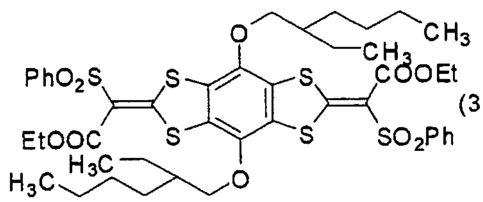
(30)

[Chemical formula 23]

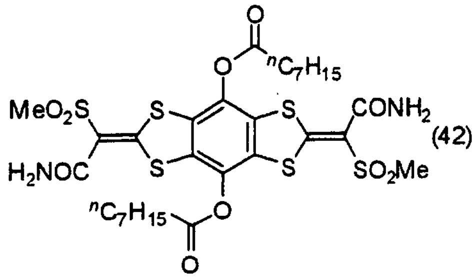
(42)

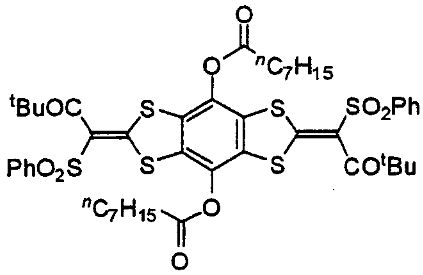
(43)

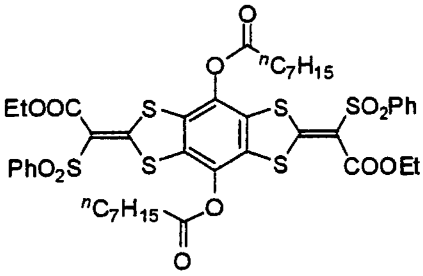
(44)

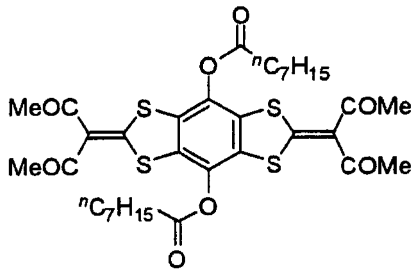
(45)

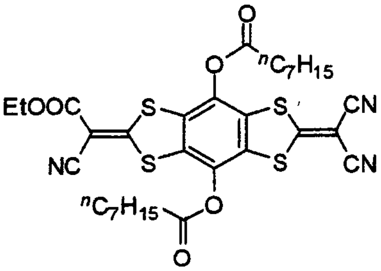
(46)

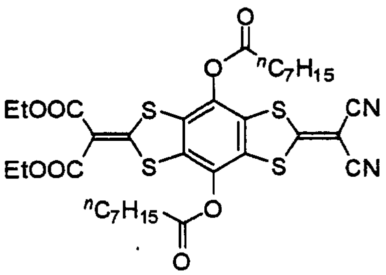
(47)

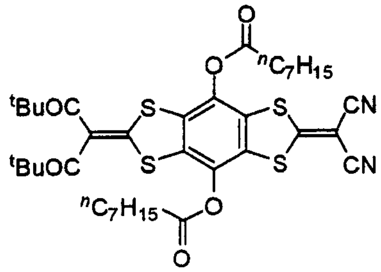
(48)

[Chemical formula 24]

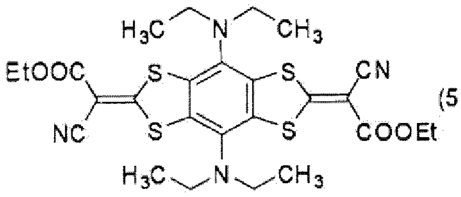

(53)

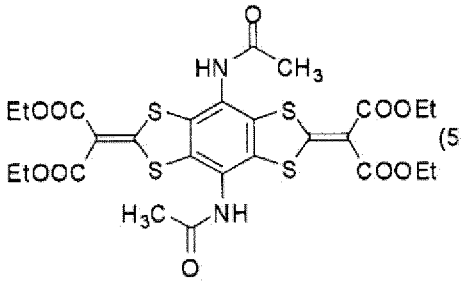

(54)

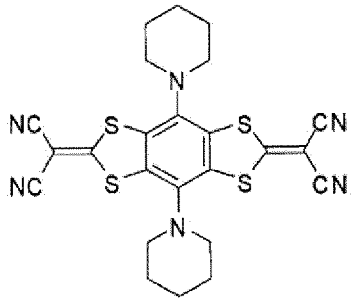

(55)

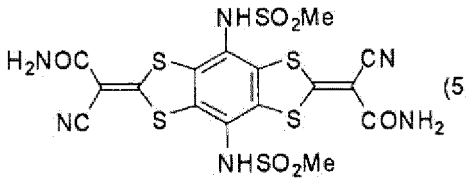

(56)

[Chemical formula 25]

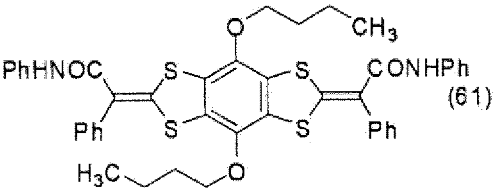
(61)

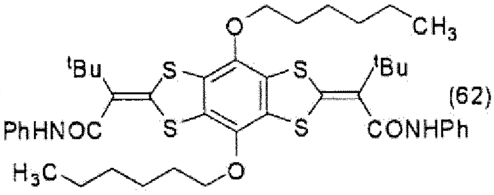
(62)

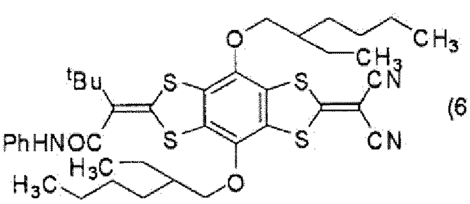
(63)

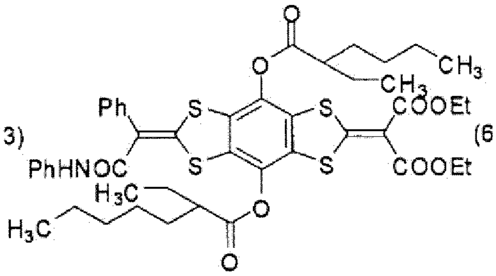
(64)

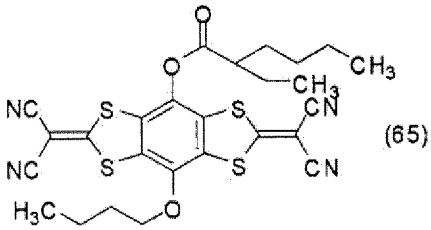
(65)

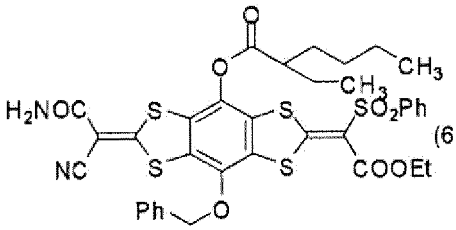
(66)

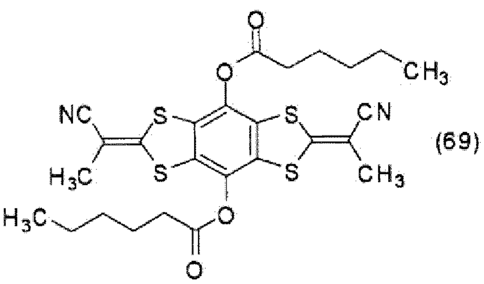
(69)

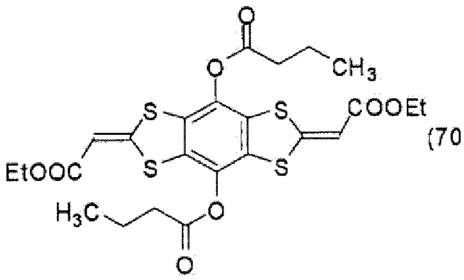
(70)

[Chemical formula 26]

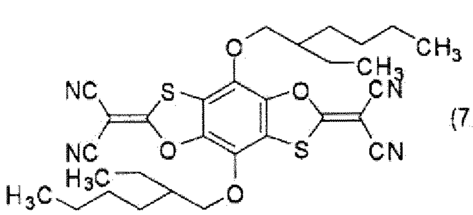
(73)

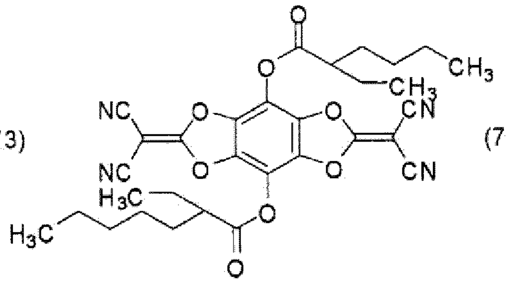
(74)

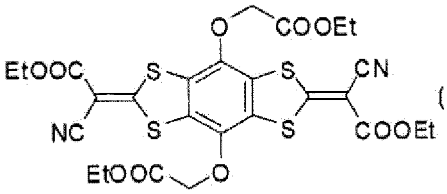
(78)

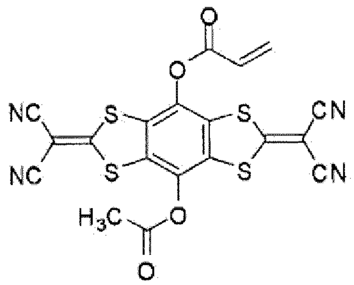
(79)

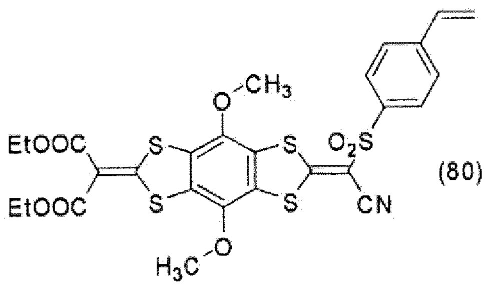
(80)

[Chemical formula 27]

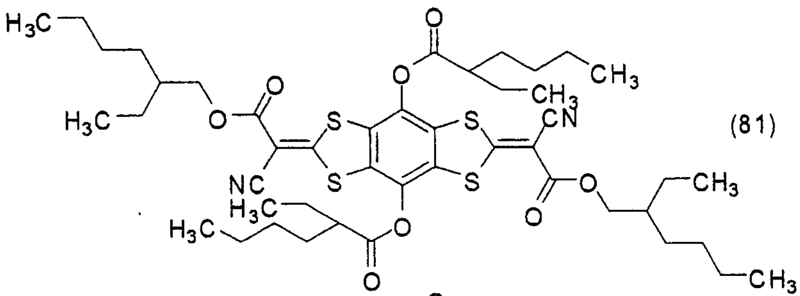

(81)

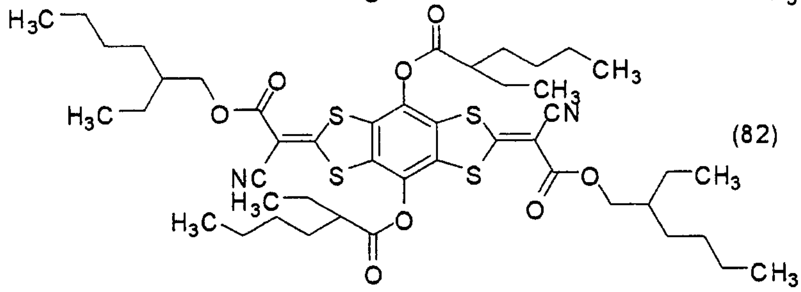

(82)

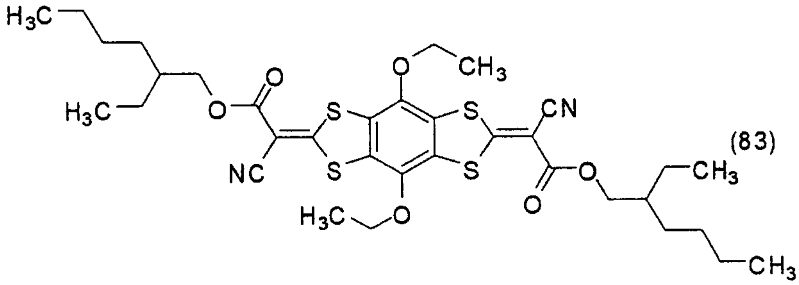

(83)

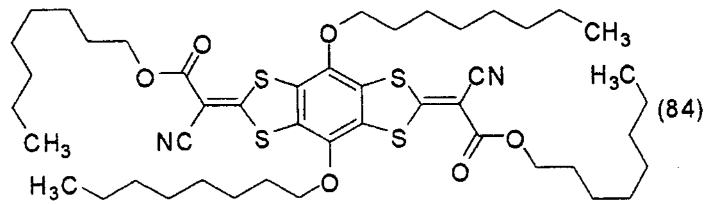

(84)

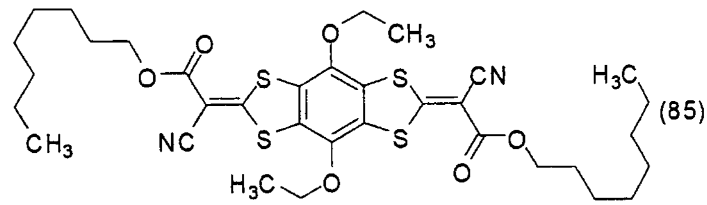

(85)

[Chemical formula 28]

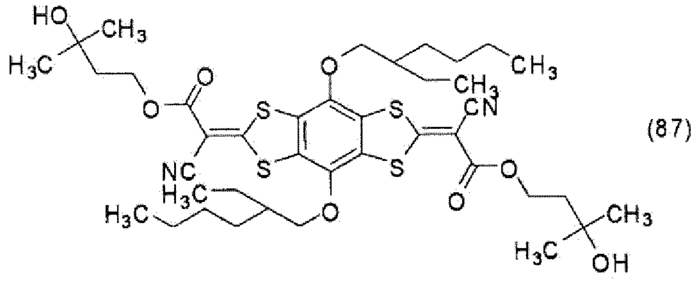

(87)

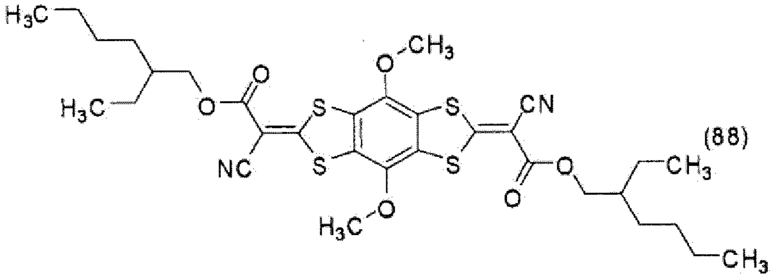

(88)

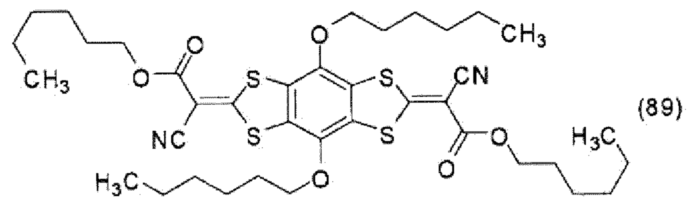

(89)

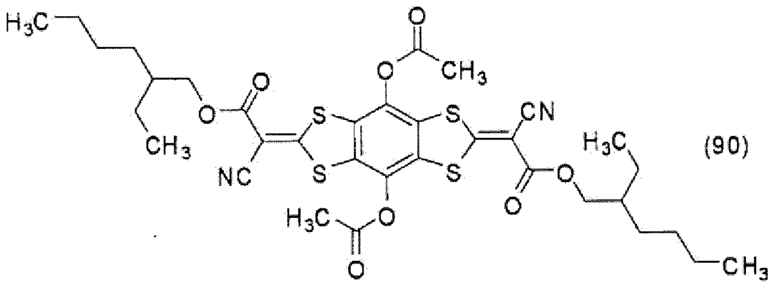

(90)

[Chemical formula 29]

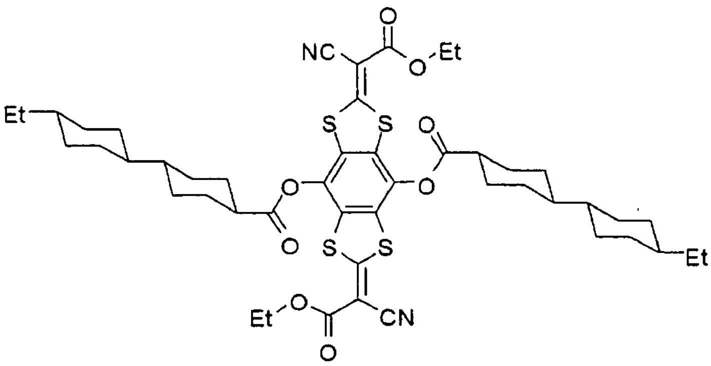

(91)

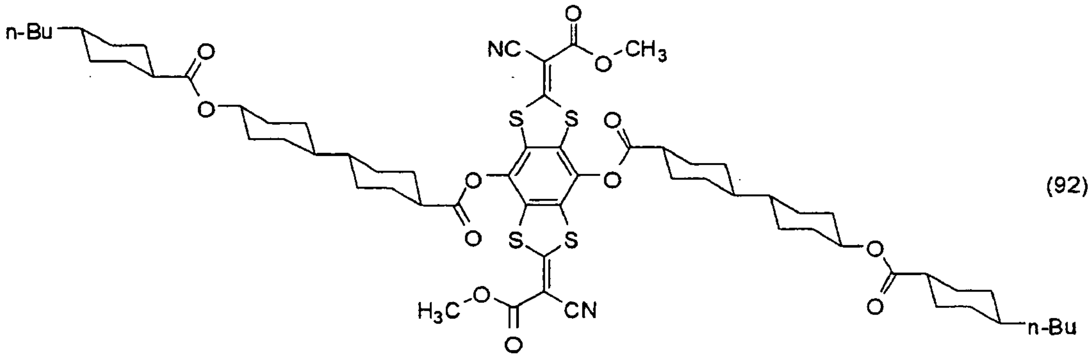

(92)

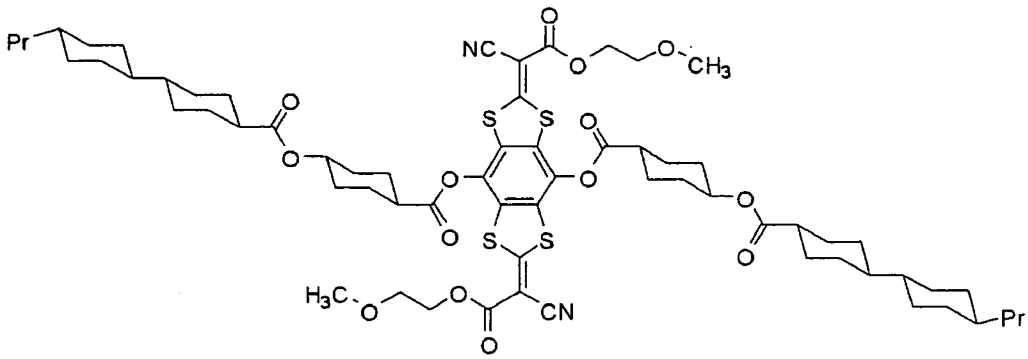

(93)

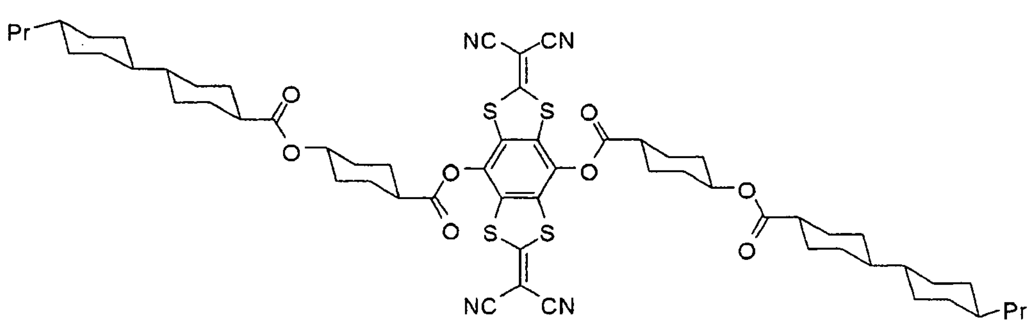

(94)

[Chemical formula 30]

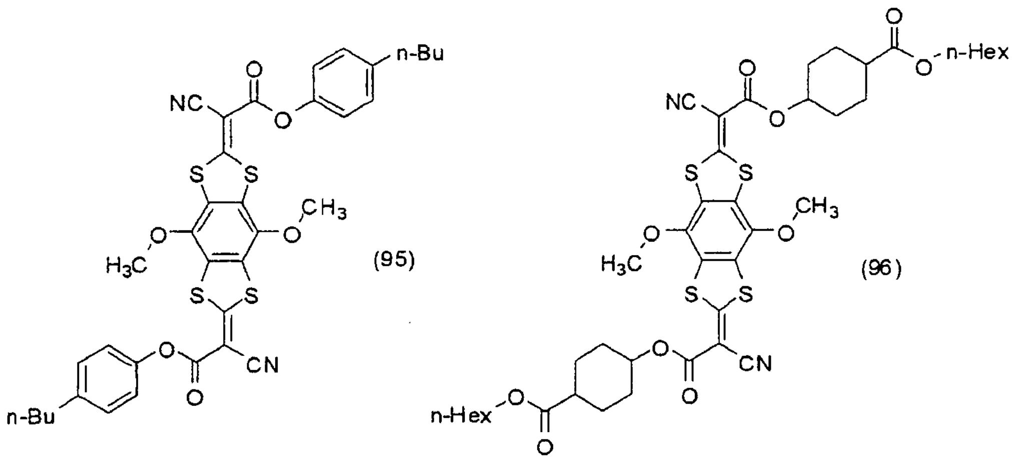

(95)

(96)

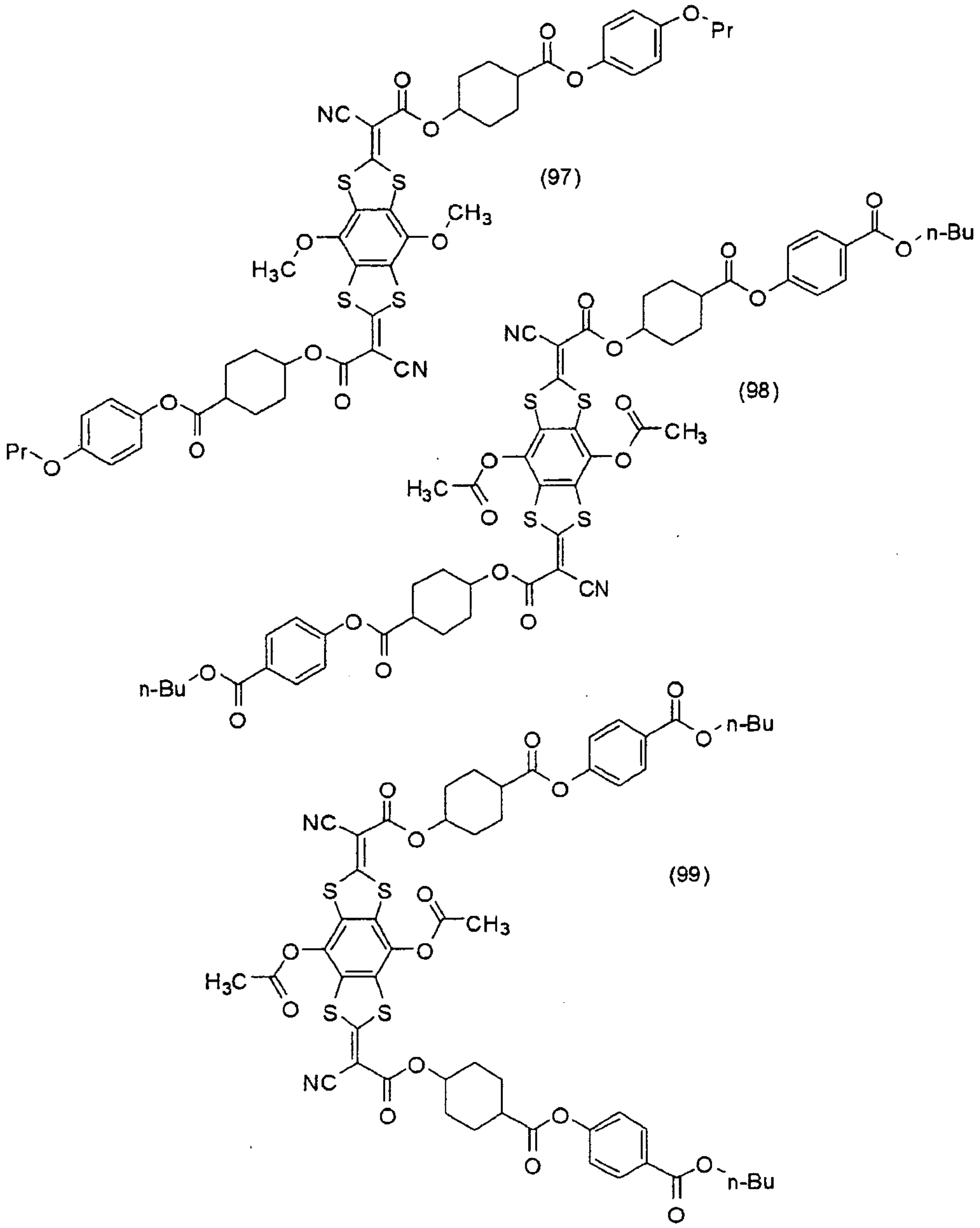

(97)

(98)

(99)

[Chemical formula 31]

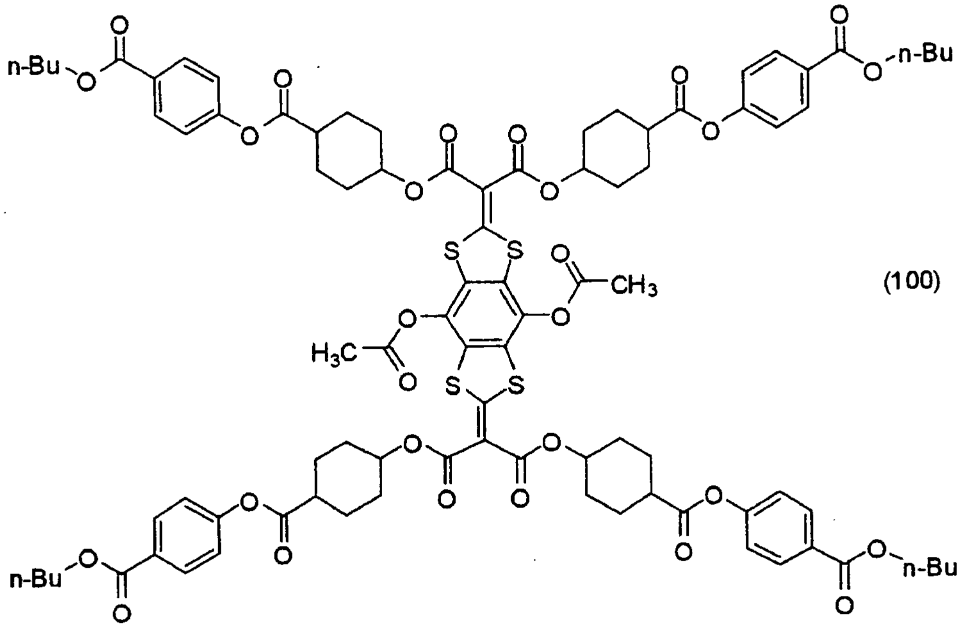

(100)

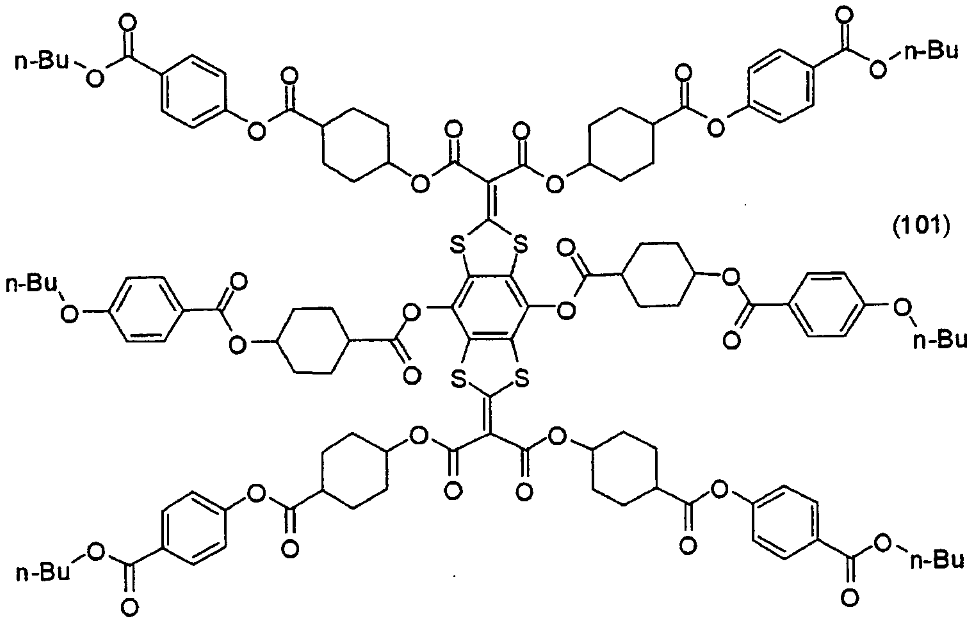

(101)

[Chemical formula 32]

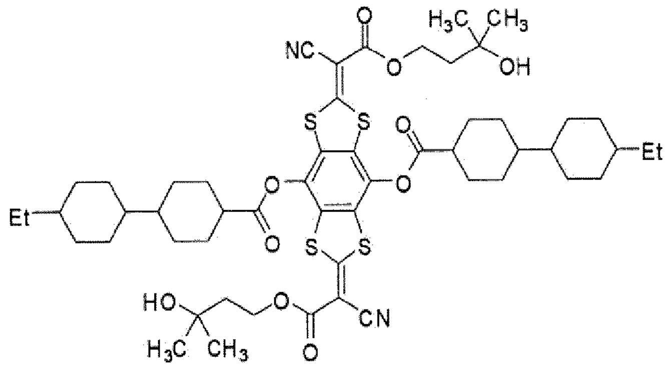

(104)

[Chemical formula 33]

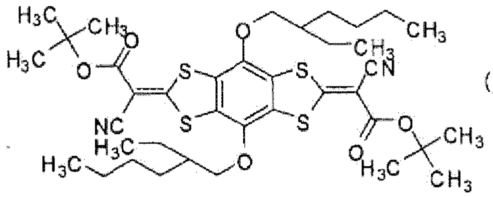

(122)

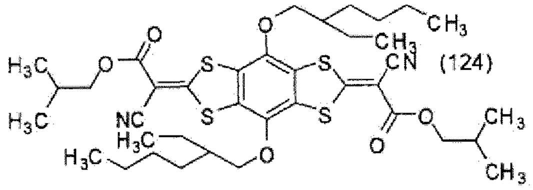

(124)

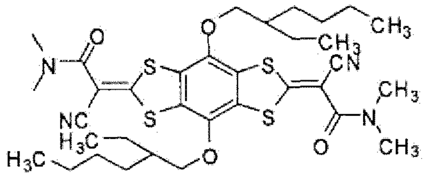

(126)

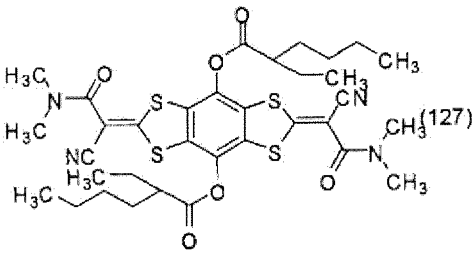

(127)

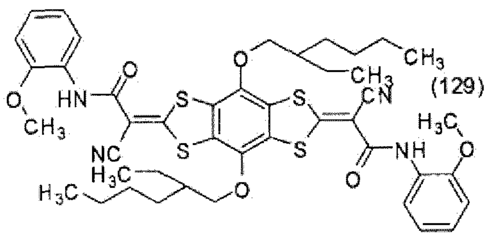

(129)

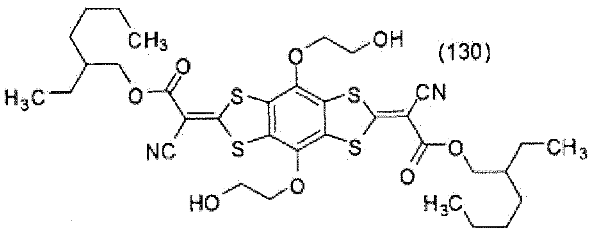

(130)

[Chemical formula 34]

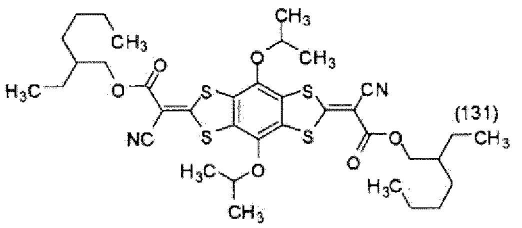
(131)

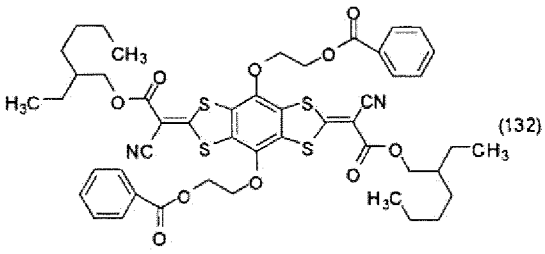
(132)

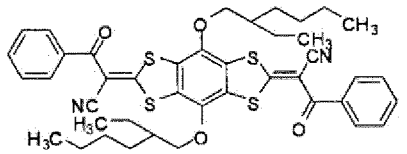
(134)

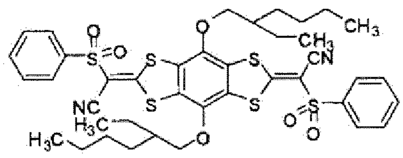
(136)

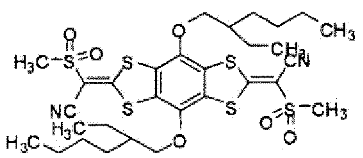
(138)

The compound represented by formula (B-Ia) above can be synthesized by any method. For example, such a compound can be synthesized by introducing desirable substituents into a synthetic intermediate, a compound represented by formula (B-Ia) wherein $R^{Ba5}$ and $R^{Ba6}$ are a hydroxy group, and by alkylation or acylation.

For example, the synthetic intermediate represented by formula (B-Ia) wherein $R^{Ba5}$ and $R^{Ba6}$ are a hydroxy group can be synthesized according to the method in any one of known patents and literatures, for example, JP-A-63-225382, p. 3, right upper column, line 1 to left lower column, line 1 Reference Examples; and Liebigs Ann. Chem., 1969, vol. 726, p. 103-109, lines 5 to 12, p. 109.

In addition, the compound represented by formula (B-Ia) above can be synthesized according to the synthetic routes for preparation of similar compounds described, for example, in Journal of Organic Chemistry, 1990, vol. 55, p. 5347-5350, experimental section on p. 5349, right column, line 27; ibid., 1994, vol. 59, p. 3077-3081, p. 3081, lines 11 to 16; Tetrahedron Letters, 1991, vol. 32, p. 4897-4900, p. 4897, line 9 to p. 4899, line 3; ibid., 1977, vol. 26, p. 2225, Table 1; Tetrahedron, 1993, vol. 49, p. 3035-3042, p. 3037, lines 11 to 20 and p. 3040, lines 22 to 38; Journal of the American Chemical Society, 1958, vol. 80, p. 1662-1664, p. 1664, right column, lines 6 to 15; ibid., 1995, vol. 117, p. 9995-10002, p. 9996, right column, line 12 to p. 9997, left column, line 46; JP-A-6-80672, p. 4, left column, line 43 to right column, line 45; Phosphorus, Sulfur, and Silicon, 1997, vol. 120 & 121, p. 121-143, p. 123, line 18 to p. 124, line 3; Chem. Commun., 2004, p. 1758-1759, p. 1758, left column, lines 44 to 54; Germany Patent No. 3728452, p. 4, line 46 to p. 5, line 16; JP-A-51-100097, p. 3, left upper column, line 3 to p. 4, left lower column, line 4; and JP-T-5-506428, p. 12, right lower column, line 1 to p. 35, right lower column, line 1.

For example, the exemplified compound (1) can be synthesized by allowing carbon disulfide and malononitrile to react with each other in the presence of sodium hydroxide to obtain a disodium salt, and allowing the disodium salt to react with chloranile, and then allowing the resultant product to react with 2-ethylhexanoyl chloride in the presence of a base. The exemplified compound (2) can be synthesized by allowing carbon disulfide and malononitrile to react with each other in the presence of sodium hydroxide to obtain a disodium salt, and allowing the disodium salt to react with chloranile, and then allowing the resultant product to react with 2-ethylhexyl bromide in the presence of a base.

The exemplified compound (11) can be synthesized by allowing carbon disulfide and cyanoethyl acetate to react with each other in the presence of potassium hydroxide to obtain a dipotassium salt, allowing the dipotassium salt to react with chloranil and allowing the resulting compound to react with 2-ethylhaxanoyl chloride in the presence of a base.

When $R^{Ba1}$ and $R^{Ba2}$, $R^{Ba3}$ and $R^{Ba4}$ or $R^{Ba5}$ and $R^{Ba6}$ are different from each other, the compound represented

by formula (B-Ia) may have a geometrical isomer wherein the respective groups are exchanged. Such a geometrical isomer is also included in the compound represented by formula (B-Ia) that can be used in the present invention, even when only one geometrical isomer is described in the present specification. In addition, even if a mixture of the geometrical isomers is formed in the preparative or purification process, only a typical isomeric structure is shown in the present specification. When the compound is a geometrical isomer mixture, the abundance ratio is arbitrary between 0:1 to 1:0.

The compound represented by any one of formulae (4) and (B-Ia) that can be used in the present invention may have a tautomer, depending on its structure and the environment to which the compound is exposed. In the present specification, only a typical tautomer is described, but other tautomers different from that described in the present specification are also included in the compound that can be used in the present invention compound.

The compound represented by any one of formulae (4) and (B-Ia) that can be used in the present invention may have an isotopic element (such as $^{2}H$, $^{3}H$, $^{13}C$, $^{15}N$, $^{17}O$, or $^{18}O$).

A polymer having the structure of the compound represented by any one of formulae (4) and (B-Ia) above in its recurring unit as the ultraviolet absorptive group can also be used favorably in the present invention. Hereinafter, examples of the recurring unit containing the structure of the compound represented by formula (4) or (B-Ia) above will be shown.

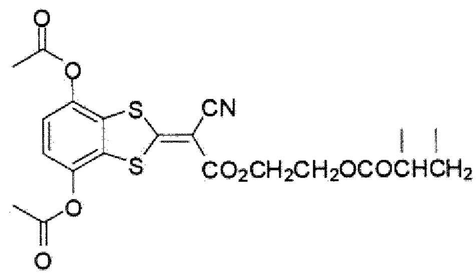

[Chemical formula 36]

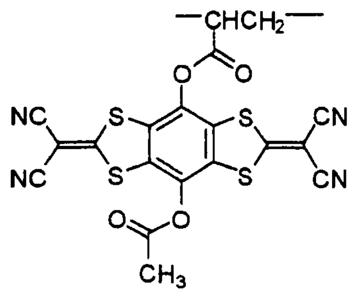

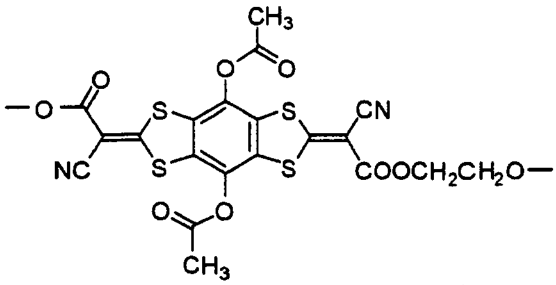

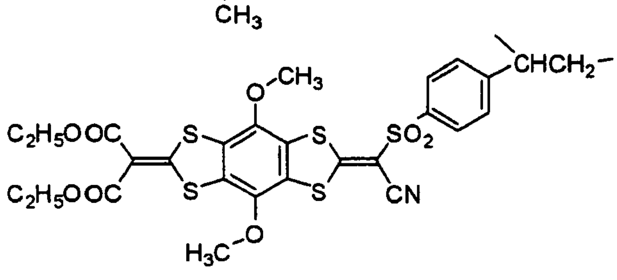

The polymer may be a homopolymer having one kind of recurring unit or a copolymer having two or more kinds of recurring units. It may be a copolymer having another recurring unit additionally. Hereinafter, examples of the other

recurring unit are shown.

[Chemical formula 37]

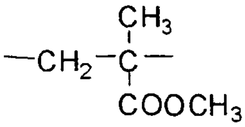 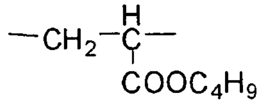 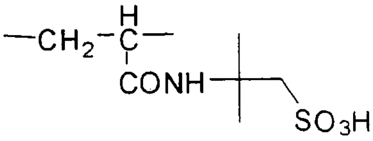

Examples of the polymer having the ultraviolet absorbent structure in the recurring unit are described, for example, in JP-B-1-53455, left column, line 39 to p. 12, right column, line 38; JP-A-61-189530, p. 3, right upper column, line 8 to p. 7, left lower column, line 15; JP-A-62-260152, right lower column, line 3 to p. 12, right upper column, line 10; JP-A-63-53544, left upper column, line 1 to p. 15, right lower column, line 19; JP-A-63-56651, p. 2, right upper column, line 10 to p. 14, left lower column, line 3; EP Patent No. 27242, p. 4, line 29 to p. 16, line 34; and WO 2006/009451 pamphlet, p. 3, line 28 to p. 26, line 1. The polymer can be prepared with reference to the methods described in these Patent Documents.

Hereinafter, the ultraviolet absorbent B for use in the present invention will be described.

The ultraviolet absorbent B characteristically shows 30% or more, preferably of 50% or more, of absorbance at 320 nm of the absorbance at the absorption maximum wavelength. If the absorbance at 320 nm is less than 30% of the absorbance at the absorption maximum wavelength, a wavelength range that cannot be entirely covered by both the ultraviolet absorbent A and the ultraviolet absorbent B generates in the range of 310 nm to 330 nm. The absorption maximum wavelength of the ultraviolet absorbent B is preferably 350 nm or less.

As the ultraviolet absorbent B that has an absorption maximum wavelength of 350 nm or less and showing 30% or more of absorbance at 320 nm of the absorbance at the absorption maximum wavelength, two types of the ultraviolet absorbent, i.e., the ultraviolet absorbent B-(1) having an absorption maximum wavelength of 320 nm or less and the ultraviolet absorbent B-(2) having an absorption maximum wavelength of from 320 nm to 350 nm, are considered as described above. These ultraviolet absorbents may be properly selected in accordance with their end-use.

For example, it is especially preferable that the ultraviolet absorbent B-(1) is used when any other short-wavelength ultraviolet-absorbing element is not present at the time of, for example, kneading the ultraviolet absorbent into a plastic molding, or a polymer. On account that any other element capable of absorbing a short-wavelength ultraviolet of 300 nm or less is not present at the time of kneading the ultraviolet absorbent into the plastic molding, or the polymer, usage of the ultraviolet absorbent B-(1) enables to prevent the plastic molding itself and its content from ultraviolet lays without another short-wavelength ultraviolet range-absorbing filter. Further, such unexpected effects that both compatibility with respect to a polymer and light fastness are improved are achieved by using the ultraviolet absorbent B-(1) in combination with the ultraviolet absorbent A that is used in the present invention.

It is especially preferable that the ultraviolet absorbent B-(2) is used when another short-wavelength ultraviolet-absorbing element is present at the time of, for example, coating the ultraviolet absorbent on a glass film or dissolving the ultraviolet absorbent with a polymer to coat on a substrate. The ultraviolet absorbent B-(2) is excellent in shielding efficiency (capability) light of around 320 nm, and is capable of efficiently absorbing a short-wavelength ultraviolet range of 300 nm or less. However, it is sometimes difficult for the ultraviolet absorbent B-(2) to absorb the short-wavelength ultraviolet range. Accordingly, it is preferable that the ultraviolet absorbent B-(2) is coated on a polymer or a glass substrate capable of shielding efficiently the short-wavelength ultraviolet range and capable of using as a filter. Further, in the solvent-coating process, improvement of both solubility to the solvent (for example, ethyl acetate, methylethyl ketone, toluene) and light fastness are unexpectedly achieved by using the ultraviolet absorbent B-(2) in combination with the ultraviolet absorbent A that is used in the present invention.

The ultraviolet absorbent B may have any structure if these conditions are satisfied. Examples thereof include those described, for example, in Yasuichi Okatsu Ed., "Development of Polymer Additives and Environmental Measures" (CMC Publishing, 2003), Chapter 2; and Toray Research Center Inc., Technical Survey Dept., Ed., "New Trend of Functional Polymer Additives" (Toray Research Center Inc., 1999), Chapter 2.3.1. Examples thereof include ultraviolet absorbing structures such as triazine-based, benzotriazole-based, benzophenone-based, cyanine-based, dibenzoylmethane-based, cinnamic acid-based, acrylate-based, benzoic ester-based, and oxalic diamide-based compounds. Specific examples thereof are described, for example, in Fine Chemicals, 2004, May, p. 28 to 38; Toray Research Center Inc., Technical Survey Dept., Ed., "New Trend of Functional Polymer Additives" (Toray Research Center Inc., 1999), p. 96 to 140; and Yasuichi Okatsu Ed., "Development of Polymer Additives and Environmental Measures" (CMC Publishing, 2003), p. 54 to 64.

From the consideration of the latitude of the molar extinction coefficient at 320 nm, benzotriazole-based, benzophenone-based, salicylic acid-based, acrylate-based and triazine-based compounds are preferable. Among these

compounds, benzotriazole-based, benzophenone-based and triazine-based compounds, each of which is excellent in light fastness, are more preferable. When these preferable ultraviolet absorbent B is used in combination with the ultraviolet absorbent A comprising of the compound represented by any one of the aforementioned formulae (2), (3), (4), (B-I) and (B-Ia), it is possible to absorb efficiently the ultraviolet range without a problem of color development.

The benzotriazole-based compound is preferably a compound having an effective absorption wavelength of approximately 270 to 380 nm that is represented by formula (IIa) or (IIb). The compound represented by formula (IIa) or (IIb) will be described in detail.

[Chemical formula 38]

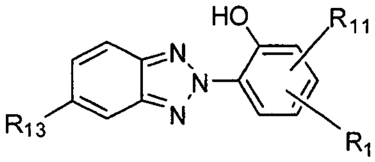
(IIa)

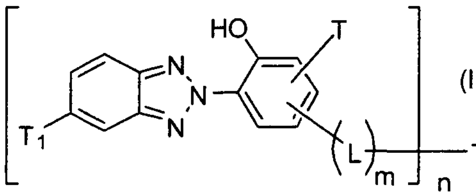
(IIb)

(In formula (IIa),
$R_{11}$ represents a hydrogen atom, a substituted or unsubstituted alkyl group, a substituted or unsubstituted cycloalkyl group, or a substituted or unsubstituted aryl group,
$R_{12}$ represents a hydrogen atom, a halogen atom, a substituted or unsubstituted alkyl group, or a substituted or unsubstituted aryl group, and
$R_{13}$ represents a hydrogen atom, a halogen atom, a substituted or unsubstituted alkyl group, a substituted or unsubstituted alkoxy group, or -COOR$_{14}$ group (herein, $R_{14}$ represents a hydrogen atom, a substituted or unsubstituted alkyl group or a substituted or unsubstituted aryl group.))

(In formula (IIb),
T represents a hydrogen atom or a substituted or unsubstituted alkyl group,
$T_1$ represents a hydrogen atom, a halogen atom, a substituted or unsubstituted alkyl group, a substituted or unsubstituted aryl group, or a substituted or unsubstituted alkoxy group,
L represents a divalent linking group or a single bond;
m represents 0 or 1;
n represents an integer of 1 to 4; and
when n is 1, $T_2$ represents a halogen atom, a substituted or unsubstituted alkyl group or a substituted or unsubstituted aryl group; when n is 2, $T_2$ represents a divalent substituent; when n is 3, $T_2$ represents a trivalent substituent; and when n is 4, $T_2$ represents a tetravalent substituent.)

(Formula (IIa))

$R_{11}$ represents a hydrogen atom, a substituted or unsubstituted alkyl group, a substituted or unsubstituted cycloalkyl group or a substituted or unsubstituted aryl group.

$R_{11}$ is preferably a substituted or unsubstituted alkyl group having 1 to 18 carbon atoms, a substituted or unsubstituted cycloalkyl group having 5 to 18 carbon atoms or a substituted or unsubstituted aryl group having 6 to 24 carbon atoms; and particularly preferably a substituted or unsubstituted alkyl group having 1 to 18 carbon atoms or a substituted or unsubstituted alkyl group having 1 to 18 carbon atoms.

The substituted alkyl group, the substituted cycloalkyl group, and the substituted aryl group each are referred to as an alkyl group, a cycloalkyl group, and an aryl group, each of which has a monovalent substituent at an arbitrary position thereof, respectively. Examples of the monovalent substituent include a halogen atom (e.g., fluorine atom, chlorine atom, bromine atom, and iodine atom), a straight-chain or branched alkyl group having 1 to 20 carbon atoms (preferably 1 to 10 carbon atoms) (e.g., methyl, ethyl), an aryl group having 6 to 20 carbon atoms (preferably 6 to 10 carbon atoms) (e.g., phenyl, naphthyl), a cyano group, a carboxyl group, an alkoxycarbonyl group having 1 to 20 carbon atoms (preferably 1 to 10 carbon atoms) (e.g., methoxycarbonyl), an aryloxycarbonyl group having 6 to 20 carbon atoms (preferably 6 to 10 carbon atoms) (e.g., phenoxycarbonyl), a substituted or unsubstituted carbamoyl group having 0 to 20 carbon atoms (preferably 0 to 10 carbon atoms) (e.g., carbamoyl, N-phenylcarbamoyl, N,N-dimethylcarbamoyl), an alkylcarbonyl group having 1 to 20 carbon atoms (preferably 1 to 10 carbon atoms) (e.g., acetyl), an arylcarbonyl group having 6 to 20 carbon atoms (preferably 6 to 10 carbon atoms) (e.g., benzoyl), a nitro group, a substituted or unsubstituted amino group having 0 to 20 carbon atoms (preferably 0 to 10 carbon atoms) (e.g., amino, dimethylamino, anilino), an acylamino group having 1 to 20 carbon atoms (preferably 1 to 10 carbon atoms) (e.g., acetamido, ethoxycarbonylamino),

a sulfonamido group having 0 to 20 carbon atoms (preferably 0 to 10 carbon atoms) (e.g., methanesulfonamido), an imido group having 2 to 20 carbon atoms (preferably 2 to 10 carbon atoms) (e.g., succinimido, phthalimido), an imino group having 1 to 20 carbon atoms (preferably 1 to 10 carbon atoms) (e.g., benzylideneamino), a hydroxy group, an alkoxy group having 1 to 20 carbon atoms (preferably 1 to 10 carbon atoms) (e.g., methoxy), an aryloxy group having 6 to 20 carbon atoms (preferably 6 to 10 carbon atoms) (e.g., phenoxy), an acyloxy group having 1 to 20 carbon atoms (preferably 1 to 10 carbon atoms) (e.g., acetoxy), an alkylsulfonyloxy group having 1 to 20 carbon atoms (preferably 1 to 10 carbon atoms) (e.g., methanesulfonyloxy), an arylsulfonyloxy group having 6 to 20 carbon atoms (preferably 6 to 10 carbon atoms) (e.g., benzenesulfonyloxy), a sulfo group, a substituted or unsubstituted sulfamoyl group having 0 to 20 carbon atoms (preferably 0 to 10 carbon atoms) (e.g., sulfamoyl, N-phenylsulfamoyl), an alkylthio group having 1 to 20 carbon atoms (preferably 1 to 10 carbon atoms) (e.g., methylthio), an arylthio group having 6 to 20 carbon atoms (preferably 6 to 10 carbon atoms) (e.g., phenylthio), an alkylsulfonyl group having 1 to 20 carbon atoms (preferably 1 to 10 carbon atoms) (e.g., methansulfonyl), an arylsulfonyl group having 6 to 20 carbon atoms (preferably 6 to 10 carbon atoms) (e.g., benzenesulfonyl), and a four- to seven-membered (preferably five- to six-membered) heterocyclic group (e.g., pyridyl, morpholino).

$R_{12}$ represents a hydrogen atom, a halogen atom, a substituted or unsubstituted alkyl group or a substituted or unsubstituted aryl group. $R_{12}$ is preferably a hydrogen atom, a chlorine atom, a substituted or unsubstituted alkyl group having 1 to 18 carbon atoms, a substituted or unsubstituted cycloalkyl group having 5 to 18 carbon atoms or a substituted or unsubstituted aryl group having 6 to 24 carbon atoms; and particularly preferably a hydrogen atom, a chlorine atom, a substituted or unsubstituted alkyl group having 1 to 18 carbon atoms or a substituted or unsubstituted aryl group having 6 to 24 carbon atoms.

$R_{13}$ represents a hydrogen atom, a halogen atom, a substituted or unsubstituted alkyl group, a substituted or unsubstituted alkoxy group or $-COOR_{14}$ group (herein, $R_{14}$ represents a hydrogen atom, a substituted or unsubstituted alkyl group or a substituted or unsubstituted aryl group). $R_{13}$ is preferably a hydrogen atom, a chlorine atom, a substituted or unsubstituted alkyl group having 1 to 18 carbon atoms, a substituted or unsubstituted alkoxy group having 1 to 18 carbon atoms, or $-COOR_{14}$ group (herein, $R_{14}$ represents a hydrogen atom, a substituted or unsubstituted alkyl group having 1 to 18 carbon atoms or a substituted or unsubstituted aryl group having 6 to 24 carbon atoms).

$R_{11}$ and $R_{12}$ may be substituted at an arbitrary position of the benzene ring. The substitution at 2- or 4- position to a hydroxyl group is preferable.

(Formula (IIb))

T represents a hydrogen atom or a substituted or unsubstituted alkyl group. T is preferably a hydrogen atom or a substituted or unsubstituted alkyl group having 1 to 18 carbon atoms.

$T_1$ represents a hydrogen atom, a halogen atom, a substituted or unsubstituted alkyl group, a substituted or unsubstituted aryl group or a substituted or unsubstituted alkoxy group. $T_1$ is preferably a hydrogen atom, a chlorine atom, a substituted or unsubstituted alkyl group having 1 to 18 carbon atoms, a substituted or unsubstituted aryl group having 6 to 24 carbon atoms or substituted or unsubstituted alkoxy group having 1 to 18 carbon atoms.

-L- represents a divalent linking group or a single bond. m represents 0 or 1.

The case where m is 0 (zero) means that $T_2$ directly bonds with the benzene ring without involving L, that is -L- represents a single bond.

The divalent linking group -L- is explained. -L- is a divalent substituent represented by formula (a).

Formula (a) $$-(L_1)_{m1}-(L_2)_{m2}-(L_3)_{m3}-(L_4)_{m4}-(L_5)_{m5}-$$

In formula (a), m1, m2, m3, m4 and m5 each represent an integer of 0 to 2.

$L_1$, $L_2$, $L_3$, $L_4$ and $L_5$ each independently represent -CO-, -O-, $-SO_2-$, -SO-, $-NR_L-$, a substituted or unsubstituted divalent alkyl group, a substituted or unsubstituted divalent alkenyl group, or a substituted or unsubstituted divalent aryl group. $R_L$ represents a hydrogen atom, a substituted or unsubstituted alkyl group or a substituted or unsubstituted aryl group.

Examples of $R_L$ include a hydrogen atom, a methyl group, an ethyl group, a propyl group, a hexyl group, an octyl group, a phenyl group, and a naphthyl group. The group may be substituted with one or more monovalent substituents at any position of the alkyl or aryl group. The monovalent substituent is, for example, a monovalent substituent described above. $R_L$ is preferably a substituted or unsubstituted alkyl group having 3 to 20 carbon atoms or a substituted or unsubstituted aryl group having 6 to 14 carbon atoms; and more preferably a substituted or unsubstituted alkyl group having 6 to 12 carbon atoms or a substituted or unsubstituted aryl group having 6 to 10 carbon atoms.

Preferred examples of the divalent substituent -L- include $-O-CO-C_2H_4-CO-O-$, $-O-CO-C_3H_6-$, $-NH-CO-C_3H_6-CO-NH-$, $-NH-CO-C_4H_8-$, $-CH_2-$, $-C_2H_4-$, $-C_3H_6-$, $-C_4H_8-$, $-C_5H_{10}-$, $-C_8H_{16}-$, $-C_4H_8-CO-O-$, $-C_6H_4-C_6H_4-$ and $-NH-SO_2-C_3H_6-$.

In formula (IIb), n represents an integer of 1 to 4.

When n is 1, $T_2$ represents a halogen atom, a substituted or unsubstituted alkyl group or a substituted or unsubstituted aryl group. When n is 1, $T_2$ is preferably a chlorine atom, a substituted or unsubstituted alkyl group having 1 to 18 carbon atoms, or a substituted or unsubstituted aryl group having 6 to 24 carbon atoms.

When n is 2, $T_2$ represents a divalent substituent. When n is 2, examples of T include the same examples as the above-described divalent substituent -L-. When n is 2, T is preferably $-CH_2-$, $-O-CO-C_2H_4-CO-O-$, or $-NH-CO-C_3H_6-CO-NH-$.

When n is 3, $T_2$ represents a trivalent substituent. The trivalent substituent is explained. Specifically, the trivalent substituent is a trivalent alkyl group, a trivalent aryl group, or a substituent represented by the following formula.

[Chemical formula 39]

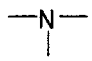

The trivalent substituent is preferably a trivalent alkyl group having 1 to 8 carbon atoms, a trivalent aryl group having 6 to 14 carbon atoms, or a substituent represented by the following formula.

[Chemical formula 40]

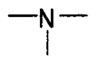

When n is 4, $T_2$ represents a tetravalent substituent. The tetravalent substituent is explained. Specifically, the tetravalent substituent is a tetravalent alkyl group, or a tetravalent aryl group. Among the tetravalent substituents, a tetravalent alkyl group having 1 to 8 carbon atoms and a tetravalent aryl group having 6 to 14 carbon atoms are preferable.

In formula (IIb), it is especially preferable that n is 1 or 2.

Specifically, the components of the formula (IIb) are preferably combined as follows:

When n is 1, a preferable combination is that T is a hydrogen atom, or a substituted or unsubstituted alkyl group having 1 to 18 carbon atoms; $T_1$ is a hydrogen atom, a chlorine atom, a substituted or unsubstituted alkyl group having 1 to 18 carbon atoms, a substituted or unsubstituted aryl group having 6 to 24 carbon atoms, or a substituted or unsubstituted alkoxy group having 1 to 18 carbon atoms; L is $-O-CO-C_3H_6-$, $-CH_2-$, $-C_3H_6-$, $-C_5H_{10}-$, $-C_8H_{16}-$, $-NH-CO-C_4H_8-$ or a single bond; and $T_2$ is a chlorine atom, a substituted or unsubstituted alkyl group having 1 to 18 carbon atoms, or a substituted or unsubstituted aryl group having 6 to 24 carbon atoms.

When n is 2, a preferable combination is that T is a hydrogen atom, or a substituted or unsubstituted alkyl group having 1 to 18 carbon atoms; $T_1$ is a hydrogen atom, a chlorine atom, a substituted or unsubstituted alkyl group having 1 to 18 carbon atoms, a substituted or unsubstituted aryl group having 6 to 24 carbon atoms, or a substituted or unsubstituted alkoxy group having 1 to 18 carbon atoms; L is $-CH_2-$ or a single bond; and $T_2$ is $-CH_2-$, $-O-CO-C_2H_4-CO-O-$ or $NH-CO-C_3H_6-CO-NH-$.

Further, when n is 2, a preferable another combination is that m is 0; T is a hydrogen atom, or a substituted or unsubstituted alkyl group having 1 to 18 carbon atoms; $T_1$ is a hydrogen atom, a chlorine atom, a substituted or unsubstituted alkyl group having 1 to 18 carbon atoms, a substituted or unsubstituted aryl group having 6 to 24 carbon atoms, or a substituted or unsubstituted alkoxy group having 1 to 18 carbon atoms; and $T_2$ is $-CH_2-$, $-O-CO-C_2H_4-CO-O-$, or $-NH-CO-C_3H_6-CO-NH-$.

Typical examples of the compound represented by formula (IIa) or (IIb) include 2-(2'-hydroxy-5'-methylphenyl)benzotriazole, 2-(2'-hydroxy-5'-t-butylphenyl)benzotriazole, 2-(2'-hydroxy-3'-t-butyl-5'-methylphenyl)-5-chlorobenzotriazole, 2-(2'-hydroxy-3',5'-di-t-butylphenyl)-5-chlorobenzotriazole, 2-(2'-hydroxy-3'-dodecyl-5'-methylphenyl)-5-chlorobenzotriazole, 2-(2'-hydroxy-3',5'-di-t-amylphenyl)benzotriazole, 2-(2'-hydroxy-5'-(1,1,3,3-tetramethylbutyl)phenyl)benzotriazole, 2-(2'-hydroxy-4'-octyloxyphenyl)benzotriazole, 2-(2'-hydroxy-3'-(3,4,5,6-tetrahydrophthalimidylmethyl)-5'-methylbenzyl)phenyl)benzotriazole, 2-(3'-sec-butyl-5'-t-butyl-2'-hydroxyphenyl)benzotriazole, 2-(3',5'-bis-($\alpha$,$\alpha$-dimethylbenzyl)-2'-hydroxyphenyl)benzotriazole, 2-(3'-t-butyl-2'-hydroxy-5'-(2-octyloxycarbonylethyl)phenyl)-5-chlorobenzotriazole, 2-(3'-t-butyl-5'-[2-(2-ethylhexyloxy)-carbonylethyl]-2'-hydroxyphenyl)-5-chloro-benzotriazole, 2-(3'-t-butyl-2'-hydroxy-5'-(2-methoxycarbonylethyl)phenyl)-5-chloro-benzotriazole, 2-(3'-t-butyl-2'-hydroxy-5'-(2-methoxycarbonylethyl)phenyl)benzotriazole, 2-(3'-t-butyl-2'-hydroxy-5'-(2-octyloxycarbonylethyl)phenyl)benzotriazole, 2-(3'-t-butyl-5'-[2-(2-ethylhexyloxy)carbonylethyl]-2'-hydroxyphenyl)benzotriazole, 2-(3'-dodecyl-2'-hydroxy-5'-methylphenyl)benzotriazole, 2-(3'-t-butyl-2'-hydroxy-5'-(2-isooctyloxycarbonylethyl)phenylbenzotriazole, 2,2'-methylene-bis[4-(1,1,3,3-tetramethylbutyl)-6-benzotriazole-2-ylphenol], ester exchange products of 2-[3'-t-butyl-5'-(2-methoxycarbonylethyl)-2'-hydroxyphenyl]-2H-benzotriazole and polyethylene glycol 300; and the compound represented by the following formula:

$[R-CH_2CH_2-COO-CH_2CH_2]_2$ [Chemical formula 41]

(wherein, R represents 3'-tert-butyl-4'-hydroxy-5'-2H-benzotriazol-2-ylphenyl, 2-[2'-hydroxy-3'-(α,α-dimethylbenzyl)-5'-(1,1,3,3-tetramethylbutyl)-phenyl]benzotriazole; or 2-[2'-hydroxy-3'-(1,1,3,3-tetramethylbutyl)-5'-(α,α-dimethylbenzyl)-phenyl]benzotriazole).

The triazine-based compound is preferably a compound having an effective absorption wavelength of approximately 270 to 380 nm that is represented by formula (III).

[Chemical formula 42]

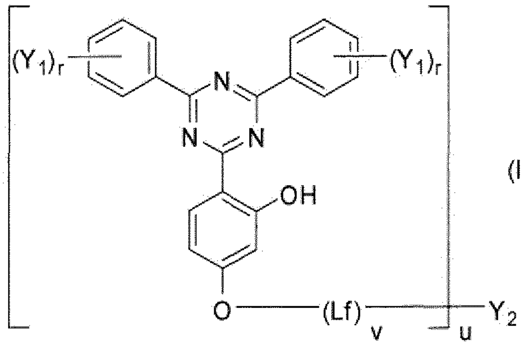

(III)

(In formula (III),
the substituent $Y_1$ represents a hydrogen atom, a hydroxyl group, a substituted or unsubstituted alkyl group, a substituted or unsubstituted aryl group, or a substituted or unsubstituted alkoxy group;
Lf represents a divalent linking group or a single bond;
u represents 1 or 2;
v represents 0 or 1;
r represents an integer of 1 to 3; and
when u is 1, $Y_2$ represents a hydrogen atom, a substituted or unsubstituted alkyl group or a substituted or unsubstituted aryl group; and when u is 2, $Y_2$ represents a divalent substituent.

$Y_1$ represents a hydrogen atom, a hydroxyl group, a substituted or unsubstituted alkyl group, a substituted or unsubstituted aryl group or a substituted or unsubstituted alkoxy group. $Y_1$ is preferably a hydrogen atom, a hydroxyl group, a substituted or unsubstituted alkyl group having 1 to 18 carbon atoms, a substituted or unsubstituted aryl group having 6 to 24 carbon atoms or a substituted or unsubstituted alkoxy group having 1 to 18 carbon atoms.

Lf represents a divalent linking group or a single bond. u represents 1 or 2. r represents an integer of 1 to 3. v represents 0 or 1. When v is 0, Lf represents a single bond.

The divalent linking group -Lf- is explained. The divalent linking group -Lf- is a divalent substituent represented by formula (b).

Formula (b) $-(Lf_1)_{mf1}-(Lf_2)_{mf2}-(Lf_3)_{mf3}-(Lf_4)_{mf4}-(Lf_5)_{mf5}-$

In formula (b), mf1 to mf5 each represent an integer of 0 to 2.

$Lf_1$, $Lf_2$, $Lf_3$, $Lf_4$ and $Lf_5$ each independently represent -CO-, -O-, $-SO_2-$, -SO-, $-NRf_L-$, a substituted or unsubstituted divalent alkyl group, a substituted or unsubstituted divalent alkenyl group, or a substituted or unsubstituted divalent aryl group. $Rf_L$ represents a hydrogen atom, a substituted or unsubstituted alkyl group or a substituted or unsubstituted aryl group.

Examples of $Rf_L$ include a hydrogen atom, a methyl group, an ethyl group, a propyl group, a hexyl group, an octyl group, a phenyl group, and a naphthyl group. The group may be substituted with one or more monovalent substituents at any position of the alkyl or aryl groups. The monovalent substituent is, for example, a monovalent substituent described above. $Rf_L$ is preferably a substituted or unsubstituted alkyl group having 3 to 20 carbon atoms or a substituted or unsubstituted aryl group having 6 to 14 carbon atoms; and more preferably a substituted or unsubstituted alkyl group having 6 to 12 carbon atoms or a substituted or unsubstituted aryl group having 6 to 10 carbon atoms.

Preferred examples of the divalent substituent -Lf- include $-O-CO-C_2H_4-CO-O-$, $-O-CO-C_3H_6-$, -NH-CO-

$C_3H_6$-CO-NH-, -NH-CO-$C_4H_8$-, -$CH_2$-, -$C_2H_4$-, -$C_3H_6$-, -$C_4H_8$-, -$C_5H_{10}$-, -$C_8H_{16}$-, -$C_4H_8$-CO-O-, -$C_6H_4$-$C_6H_4$- and -NH-$SO_2$-$C_3H_6$-.

When u is 1, $Y_2$ represents a hydrogen atom, a substituted or unsubstituted alkyl group or a substituted or unsubstituted aryl group. When u is 1, $Y_2$ is preferably a hydrogen atom, a substituted or unsubstituted alkyl group having 1 to 18 carbon atoms, or a substituted or unsubstituted aryl group having 6 to 24 carbon atoms.

When u is 2, $Y^2$ represents a divalent substituent. Examples of the divalent substituent include the same examples as the aforementioned divalent substituent -L-. $Y_2$ is preferably a substituted or unsubstituted divalent alkyl group, a substituted or unsubstituted divalent alkenyl group, a substituted or unsubstituted divalent aryl group, -$CH_2CH(OH)CH_2$-O-$Y_{11}$-$OCH_2CH(OH)CH_2$, -CO-$Y_{12}$-CO-, -CO-NH-$Y_{13}$-NH-CO-, or -$(CH_2)_t$-$CO_2$-$Y_{14}$-OCO-$(CH_2)_t$.

Herein, t is 1, 2 or 3;

$Y_{11}$ represents a substituted or unsubstituted alkylene group, phenylene group, or -phenylene-M-phenylene- (wherein, M represents -O-, -S-, -$SO_2$-, -$CH_2$- or -$C(CH_3)_2$-);

$Y_{12}$ represents a substituted or unsubstituted divalent alkyl group, a substituted or unsubstituted divalent alkenyl group or a substituted or unsubstituted divalent aryl group;

$Y_{13}$ represents a substituted or unsubstituted divalent alkyl group or a substituted or unsubstituted divalent aryl group; and $Y_{14}$ represents a substituted or unsubstituted divalent alkyl group or a substituted or unsubstituted divalent aryl group.

That is, when u is 2, $Y_2$ is preferably a substituted or unsubstituted divalent alkyl group having 1 to 18 carbon atoms, a substituted or unsubstituted divalent aryl group having 6 to 24 carbon atoms, -$CH_2CH(OH)CH_2$-O-$CH_2$-$OCH_2CH(OH)CH_2$-, -$CH_2CH(OH)CH_2$-O-$C(CH_3)_2$-$OC_8H_{16}$-, or -$(CH_2)_2$-$CO_2$-$C_2H_4$-OCO-$(CH_2)_2$-.

Typical examples of the compound represented by formula (III) include 2-(4-butoxy-2-hydroxyphenyl)-4,6-di(4-butoxyphenyl)-1,3,5-triazine, 2-(4-butoxy-2-hydroxyphenyl)-4,6-di(2,4-dibutoxyphenyl)-1,3,5-triazine, 2,4-di(4-butoxy-2-hydroxyphenyl)-6-(4-butoxyphenyl)-1,3,5-triazine, 2,4-di(4-butoxy-2-hydroxyphenyl)-6-(2,4-dibutoxyphenyl)-1,3,5-triazine, 2,4,6-tris(2-hydroxy-4-octyloxyphenyl)-1,3,5-triazine, 2-(2-hydroxy-4-octyloxyphenyl)-4,6-bis(2,4-dimethylphenyl)-1,3,5-triazine, 2-(2,4-dihydroxyphenyl)-4,6-bis(2,4-dimethylphenyl)-1,3,5-triazine, 2,4-bis(2-hydroxy-4-propyloxyphenyl)-6-(2,4-dimethylphenyl)-1,3,5-triazine, 2-(2-hydroxy-4-octyloxyphenyl)-4,6-bis(4-methylphenyl)-1,3,5-triazine, 2-(2-hydroxy-4-dodecyloxyphenyl)-4,6-bis(2,4-dimethylphenyl)-1,3,5-triazine, 2-(2-hydroxy-4-tridecyloxyphenyl)-4,6-bis(2,4-dimethylphenyl)-1,3,5-triazine, 2-[2-hydroxy-4-(2-hydroxy-3-butyloxypropoxy)phenyl]-4,6-bis(2,4-dimethyl)-1,3,5-triazine, 2-[2-hydroxy-4-(2-hydroxy-3-octyloxypropyloxy)phenyl]-4,6-bis(2,4-dimethyl)-1,3,5-triazine, 2-[4-(dodecyloxy/tridecyloxy-2-hydroxypropoxy)-2-hydroxyphenyl]-4,6-bis(2,4-dimethylphenyl)-1,3,5-triazine, 2-[2-hydroxy-4-(2-hydroxy-3-dodecyloxypropoxy)phenyl]-4,6-bis(2,4-dimethylphenyl)-1,3,5-triazine, 2-(2-hydroxy-4-hexyloxy)phenyl-4,6-diphenyl-1,3,5-triazine, 2-(2-hydroxy-4-methoxyphenyl)-4,6-diphenyl-1,3,5-triazine, 2,4,6-tris(2-hydroxy-4-(3-butoxy-2-hydroxypropoxy)phenyl)-1,3,5-triazine, 2-(2-hydroxyphenyl)-4-(4-methoxyphenyl)-6-phenyl-1,3,5-triazine, 2-{2-hydroxy-4-[3-(2-ethylhexyl-1-oxy)-2-hydroxy-propyloxy]phenyl}-4,6-bis(2,4-dimethylphenyl)-1,3,5-triazine and 2-(2-hydroxy-4-(2-ethylhexyl)oxy)phenyl-4,6-di(4-phenyl)phenyl-1,3,5-triazine.

The benzophenone-based compound is preferably a compound having an effective absorption wavelength of approximately 270 to 380 nm that is represented by formula (IVa) or (IVb).

[Chemical formula 43]

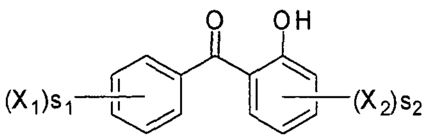
(IVa)

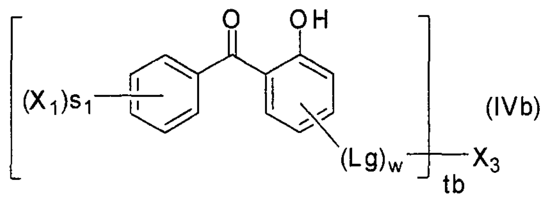
(IVb)

(In formula (IVa), $X_1$ and $X_2$ each independently represent a hydrogen atom, a halogen atom, a hydroxyl group, a substituted or unsubstituted alkyl group, a substituted or unsubstituted phenyl group, a substituted or unsubstituted alkoxy group, a substituted or unsubstituted alkylsulfonyl group, a substituted or unsubstituted arylsulfonyl group, a sulfonic acid group, a substituted or unsubstituted alkyloxycarbonyl group, a substituted or unsubstituted aryloxycarbonyl group or a substituted or unsubstituted amino group; and s1 and s2 each independently represent an integer of 1 to 3.)

(In formula (IVb), $X_1$ represents a hydrogen atom, a halogen atom, a hydroxyl group, a substituted or unsubstituted alkyl group, a substituted or unsubstituted phenyl group, a substituted or unsubstituted alkoxy group, a substituted or unsubstituted alkylsulfonyl group, a substituted or unsubstituted arylsulfonyl group, a sulfonic acid group, a substituted or unsubstituted alkyloxycarbonyl group, a substituted or unsubstituted aryloxycarbonyl group or a substituted or unsubstituted amino group; s1 represents an integer of 1 to 3;

Lg represents a divalent substituent or a single bond; w represents 0 or 1;

tb represents 1 or 2; and when tb is 1, $X_3$ represents a hydrogen atom, a halogen atom, a hydroxyl group, a substituted or unsubstituted alkyl group, a substituted or unsubstituted phenyl group, a substituted or unsubstituted alkoxy group, a substituted or unsubstituted alkylsulfonyl group, a substituted or unsubstituted arylsulfonyl group, a sulfonic acid group, a substituted or unsubstituted alkyloxycarbonyl group, a substituted or unsubstituted aryloxycarbonyl group or a substituted or unsubstituted amino group; and when tb is 2, $X_3$ represents a divalent substituent.

(Formula (IVa))

$X_1$ and $X_2$ each independently represent a hydrogen atom, a halogen atom, a hydroxyl group, a substituted or unsubstituted alkyl group, a substituted or unsubstituted phenyl group, a substituted or unsubstituted alkoxy group, a substituted or unsubstituted alkylsulfonyl group, a substituted or unsubstituted arylsulfonyl group, a sulfonic acid group, a substituted or unsubstituted alkyloxycarbonyl group, a substituted or unsubstituted aryloxycarbonyl group or a substituted or unsubstituted amino group. $X_1$ and $X_2$ each are preferably a hydrogen atom, a chlorine atom, a hydroxyl group, a substituted or unsubstituted alkyl group having 1 to 18 carbon atoms, a substituted or unsubstituted aryl group having 6 to 24 carbon atoms, a substituted or unsubstituted alkoxy group having 1 to 18 carbon atoms, a substituted or unsubstituted alkyloxycarbonyl group having 2 to 18 carbon atoms, a substituted or unsubstituted aryloxycarbonyl group having 7 to 24 carbon atoms, a sulfonic acid group or a substituted or unsubstituted amino group having 1 to 16 carbon atoms; and particularly preferably a hydrogen atom, a hydroxyl group, a substituted or unsubstituted alkoxy group having 1 to 18 carbon atoms, a sulfonic acid group or a substituted or unsubstituted amino group having 1 to 16 carbon atoms.

(Formula (IVb))

tb is 1 or 2, w is 0 or 1, and s1 is an integer of 1 to 3.

The substituent $X_1$ represents a hydrogen atom, a halogen atom, a hydroxyl group, a substituted or unsubstituted alkyl group, a substituted or unsubstituted phenyl group, a substituted or unsubstituted alkoxy group, a substituted or unsubstituted alkylsulfonyl group, a substituted or unsubstituted arylsulfonyl group, a sulfonic acid group, a substituted or unsubstituted alkyloxycarbonyl group, a substituted or unsubstituted aryloxycarbonyl group or a substituted or unsubstituted amino group.

$X_1$ is preferably a hydrogen atom, a chlorine atom, a hydroxyl group, a substituted or unsubstituted alkyl group having 1 to 18 carbon atoms, a substituted or unsubstituted aryl group having 6 to 24 carbon atoms, a substituted or unsubstituted alkoxy group having 1 to 18 carbon atoms, a substituted or unsubstituted alkyloxycarbonyl group having 2 to 18 carbon atoms, a substituted or unsubstituted aryloxycarbonyl group having 7 to 24 carbon atoms, a sulfonic acid group or a substituted or unsubstituted amino group having 1 to 16 carbon atoms; and particularly preferably a hydrogen atom, a hydroxyl group, a substituted or unsubstituted alkoxy group having 1 to 18 carbon atoms, a sulfonic acid group or a substituted or unsubstituted amino group having 1 to 16 carbon atoms.

-Lg- represents a divalent linking group or a single bond. w represents an integer of 0 or 1. The case where w is 0 (zero) means that $X_3$ directly bonds with the benzene ring without involving Lg, that is -Lg- represents a single bond.

The divalent linking group -Lg- is explained. The divalent linking group Lg is a divalent substituent represented by formula (c).

Formula (c) $-(Lg_1)_{mg1}-(Lg_2)_{mg2}-(Lg_3)_{mg3}-(Lg_4)_{mg4}-(Lg_5)_{mg5}-$

In formula (c), mg1, mg2, mg3, mg4 and mg5 each represent an integer of 0 to 2.

$Lg_1$, $Lg_2$, $Lg_3$, $Lg_4$ and $Lg_5$ each independently represent -CO-, -O-, $-SO_2-$, -SO-, $-NRg_L-$, a substituted or unsubstituted divalent alkyl group, a substituted or unsubstituted divalent alkenyl group, or a substituted or unsubstituted divalent aryl group. $Rg_L$ represents a hydrogen atom, a substituted or unsubstituted alkyl group or a substituted or unsubstituted aryl group.

Examples of $Rg_L$ include a hydrogen atom, a methyl group, an ethyl group, a propyl group, a hexyl group, an octyl group, a phenyl group, and a naphthyl group. The group may be substituted with one or more monovalent substituents at any position of the alkyl or aryl groups. The monovalent substituent is, for example, a monovalent substituent described above. $Rg_L$ is preferably a substituted or unsubstituted alkyl group having 3 to 20 carbon atoms or a substituted or unsubstituted aryl group having 6 to 14 carbon atoms; and more preferably a substituted or unsubstituted alkyl group having 6 to 12 carbon atoms or a substituted or unsubstituted aryl group having 6 to 10 carbon atoms.

That is, preferred examples of the divalent substituent -Lg- include -O-, $-O-CO-C_2H_4-CO-O-$, $-O-C_4H_8-O-$, $-O-CO-C_3H_6-$, $-NH-CO-C_3H_6-CO-NH-$, $-NH-CO-C_4H_8-$, $-CH_2-$, $-C_2H_4-$, $-C_3H_6-$, $-C_4H_8-$, $-C_5H_{10}-$, $-C_8H_{16}-$, $-C_4H_8-CO-O-$, $-C_6H_4-C_6H_4-$, and $-NH-SO_2-C_3H_6-$.

When tb is 1, $X_3$ represents a hydrogen atom, a halogen atom, a hydroxyl group, a substituted or unsubstituted phenyl group, a substituted or unsubstituted alkyl group, a substituted or unsubstituted alkoxy group, a substituted or

unsubstituted alkylsulfonyl group, a substituted or unsubstituted arylsulfonyl group, a sulfonic acid group, a substituted or unsubstituted alkyloxycarbonyl group, a substituted or unsubstituted aryloxycarbonyl group or a substituted or unsubstituted amino group.

When tb is 1, $X_3$ is preferably a hydrogen atom, a hydroxyl group, a chlorine atom, a substituted or unsubstituted alkyl group having 1 to 18 carbon atoms, a substituted or unsubstituted aryl group having 6 to 24 carbon atoms, a substituted or unsubstituted alkoxy group having 1 to 18 carbon atoms, a substituted or unsubstituted alkyloxycarbonyl group having 2 to 18 carbon atoms, a substituted or unsubstituted aryloxycarbonyl group having 7 to 24 carbon atoms, a sulfonic acid group, or a substituted or unsubstituted amino group having 1 to 16 carbon atoms.

$X_3$ is particularly preferably a hydrogen atom, a hydroxyl group, a substituted or unsubstituted alkoxy group having 1 to 18 carbon atoms, a sulfonic acid group, or a substituted or unsubstituted amino group having 1 to 16 carbon atoms.

When tb is 2, $X_3$ represents a divalent substituent.

When tb is 2, examples of $X_3$ include the same examples as the above-described divalent substituent -L-. When tb is 2, $X_3$ is preferably $-CH_2-$, $-C_4H_8-$, $-O-C_4H_8-O-$, $-O-CO-C_2H_4-CO-O-$, or $-NH-CO-C_3H_6-CO-NH-$.

In formula (IVb), tb is particularly preferably 1.

That is, the component of formula (IVb) is preferable combined as follows.

Specifically, when tb is 1, a preferable combination is that

$X_1$ is a hydrogen atom, a hydroxyl group, a substituted or unsubstituted alkoxy group having 1 to 18 carbon atoms, a sulfonic acid group, or a substituted or unsubstituted amino group having 1 to 16 carbon atoms;

Lg is -O-, $-O-CO-C_2H_4-CO-O-$, $-O-C_4H_8-O-$, $-O-CO-C_3H_6-$, $-NH-CO-C_3H_6-CO-NH-$, $-NH-CO-C_4H_8-$, $-CH_2-$, $-C_2H_4-$, $-C_3H_6-$, $-C_4H_8-$, $-C_5H_{10}-$, $-C_8H_{16}-$, $-C_4H_8-CO-O-$, $-C_6H_4-C_6H_4-$, $-NH-SO_2-C_3H_6-$, or a single bond; and

$X_3$ is a hydrogen atom, a hydroxyl group, a chlorine atom, a substituted or unsubstituted alkyl group having 1 to 18 carbon atoms, a substituted or unsubstituted aryl group having 6 to 24 carbon atoms, a substituted or unsubstituted alkoxy group having 1 to 18 carbon atoms, a substituted or unsubstituted alkyloxycarbonyl group having 2 to 18 carbon atoms, a substituted or unsubstituted aryloxycarbonyl group having 7 to 24 carbon atoms, a sulfonic acid group, or a substituted or unsubstituted amino group having 1 to 16 carbon atoms.

When tb is 2, a preferable combination is that

$X_1$ is a hydrogen atom, a hydroxyl group, a substituted or unsubstituted alkoxy group having 1 to 18 carbon atoms, a sulfonic acid group, or a substituted or unsubstituted amino group having 1 to 16 carbon atoms;

Lg is -O-, $-O-CO-C_2H_4-CO-O-$, $-O-C_4H_8-O-$, $-O-CO-C_3H_6-$, $-NH-CO-C_3H_6-CO-NH-$, $-NH-CO-C_4H_8-$, $-CH_2-$, $-C_2H_4-$, $-C_3H_6-$, $-C_4H_8-$, $-C_5H_{10}-$, $-C_8H_{16}-$, $-C_4H_8-CO-O-$, $-C_6H_4-C_6H_4-$, $-NH-SO_2-C_3H_6-$, or a single bond; and

$X_3$ is $-CH_2-$, $-C_4H_8-$, $-O-C_4H_8-O-$, $-O-CO-C_2H_4-CO-O-$, or $-NH-CO-C_3H_6-CO-NH-$.

Typical examples of the benzophenone-based compound include 2,4-dihydroxybenzophenone, 2-hydroxy-4-methoxybenzophenone, 2-hydroxy-4-octyloxybenzophenone, 2-hydroxy-4-decyloxybenzophenone, 2-hydroxy-4-dodecyloxybenzophenone, 2-hydroxy-4-benzyloxybenzophenone, 2-hydroxy-4-(2-hydroxy-3-methacryloxypropoxy)benzophenone, 2-hydroxy-4-methoxy-5-sulfobenzophenone, 2-hydroxy-4-methoxy-5-sulfobenzophenone trihydrate, 2-hydroxy-4-methoxy-2'-carboxybenzophenone, 2-hydroxy-4-octadecyloxybenzophenone, 2-hydroxy-4-diethylamino-2'-hexyloxycarbonylbenzophenone, 2,2'-dihydroxy-4-methoxybenzophenone, 2,2',4,4'-tetrahydroxybenzophenone, 2,2'-dihydroxy-4,4'-dimethoxybenzophenone, and 1,4-bis(4-benzyloxy-3-hydroxyphenoxy)butane.

The salicylic acid-based compound above is preferably a compound having an effective absorption wavelength of approximately 290 to 330 nm, and typical examples thereof include phenyl salicylate, 4-t-butylphenyl salicylate, 4-octylphenyl salicylate, dibenzoylresorcinol, bis(4-t-butylbenzoyl)resorcinol, benzoylresorcinol, 2,4-di-t-butylphenyl 3,5-di-t-butyl-4-hydroxysalicylate, and hexadecyl 3,5-di-t-butyl-4-hydroxysalicylate.

The acrylate-based compound above is preferably a compound having an effective absorption wavelength of approximately 270 to 350 nm, and typical examples thereof include 2-ethylhexyl 2-cyano-3,3-diphenylacrylate, ethyl 2-cyano-3,3-diphenylacrylate, isooctyl 2-cyano-3,3-diphenylacrylate, hexadecyl 2-cyano-3-(4-methylphenyl)acrylate, methyl 2-cyano-3-methyl-3-(4-methoxyphenyl)cinnamate, butyl 2-cyano-3-methyl-3-(4-methoxyphenyl)cinnamate, methyl 2-carbomethoxy-3-(4-methoxyphenyl)cinnamate 2-cyano-3-(4-methylphenyl)acrylate salt, 1,3-bis(2'-cyano-3,3'-diphenylacryloyl)oxy)-2,2-bis(((2'-cyano-3,3'-diphenylacryloyl)oxy)methyl)propane, and N-(2-carbomethoxy-2-cyanovinyl)-2-methylindoline.

The oxalic diamide-based compound above is preferably a compound having an effective absorption wavelength of approximately 250 to 350 nm, and typical examples thereof include 4,4'-dioctyloxyoxanilide, 2,2'-dioctyloxy-5,5'-di-t-butyloxanilide, 2,2'-didodecyloxy-5,5'-di-t-butyloxanilide, 2-ethoxy-2'-ethyloxanilide, N,N'-bis(3-dimethylaminopropyl)oxamide, 2-ethoxy-5-t-butyl-2'-ethyloxanilide, and 2-ethoxy-2'-ethyl-5,4'-di-t-butyloxanilide.

The ultraviolet absorbent B is particular preferably a compound selected from the following compound group B.

The compound group B includes the following compounds (II-1) to (IV-6).

[1] Compound represented by formula (IIa) described above

(II-1) 2-(2-hydroxy-3',5'-di-t-amylphenyl)benzotriazole
(II-2) 2-(3-t-butyl-5-methyl-2-hydroxyphenyl)-5-chlorobenzotriazole
(II-3) 2-(2-hydroxy-5-t-octylphenyl)benzotriazole
(II-4) 2-ethylhexyl-3-[3-t-butyl-4-hydroxy-5-(5-chloro-2H-benzotriazole-2-yl)phenyl] propionate
(II-5) 2-(2H-benzotriazole-2-yl)-6-dodecyl-4-methyl-phenol
(II-6) 2-(2H-benzotriazole-2-yl)-4-t-butylphenol
(II-7) 2-(2H-benzotriazole-2-yl)-6-(1-methyl-1-phenylethyl)-4-(1,1-3,3-tetramethylbutyl)phenol
(II-8) 2-(2H-benzotriazole-2-yl)-4-methylphenol
(II-9) 2-(2H-benzotriazole-2-yl)-4,6-bis(1-methyl-1-phenylethyl)phenol

[2] Compound represented by formula (IIb) described above

(II-10) 2,2'-methylene-bis[6-(2H-benzotriazole-2-yl)-4-(1,1,3,3-tetramethylbutyl)phenol]

[3] Compound represented by formula (III) described above

(III-1) 2,4-bis(2-hydroxy-4-butoxyphenyl)-6-(2,4-dibutoxyphenyl)-1,3,5-triazine
(III-2) 2,6-bis(2,4-dimethylphenyl)-4-(2-hydroxy-4-octyloxyphenyl)-1,3,5-triazine
(III-3) 2-[4,6-bis(2,4-dimethylphenyl)-1,3,5-triazine-2-yl]-5-[2-hydroxy-3-(2-ethylhexyloxy)propoxy]phenol
(III-4) 2-[2-hydroxy-4-(hexyloxy)phenyl]-4,6-diphenyl-1,3,5-triazine
(III-5) 6-(4-mehtoxyphenyl)-2,4-bis[4-(2-ethylhexyloxy)-2-hydroxyphenyl]-1,3,5-triazine

[4] Compound represented by formula (IV) described above

(IV-1) hexyl 2-(4-diethylamino-2-hydroxybenzoyl)benzoate
(IV-2) 2,2'-dihydroxy-4,4'-dimethoxybenzophenone
(IV-3) 2-hydroxy-4-methoxybenzophenone
(IV-4) 1,4-bis(4-benzoyl-3-hydroxyphenoxy)butane
(IV-5) 2-hydroxy-4-octoxybenzophenone
(IV-6) 2-hydroxy-4-methoxybenzophenone-5-sulfonic acid
(IV-7) 2,2',4,4'-tetrahydroxybenzophenone

The compound (II-1) has the following structure, and is commercially available as trade name Tinuvin 328 (manufactured by Ciba Specialty Chemicals).

The compound (II-2) has the following structure, and is commercially available as trade name Tinuvin 326 (manufactured by Ciba Specialty Chemicals).

The compound (II-3) has the following structure, and is commercially available as trade name Tinuvin 329 (manufactured by Ciba Specialty Chemicals).

The compound (II-4) has the following structure, and is commercially available as trade name Tinuvin 109 (manufactured by Ciba Specialty Chemicals).

The compound (II-5) has the following structure, and is commercially available as trade name Tinuvin 171 (manufactured by Ciba Specialty Chemicals).

The compound (II-6) has the following structure, and is commercially available as trade name Tinuvin PS (manufactured by Ciba Specialty Chemicals).

The compound (II-7) has the following structure, and is commercially available as trade name Tinuvin 928 (manufactured by Ciba Specialty Chemicals).

The compound (II-8) has the following structure, and is commercially available as trade name Tinuvin P (manufactured by Ciba Specialty Chemicals).

The compound (II-9) has the following structure, and is commercially available as trade name Tinuvin 234 (manufactured by Ciba Specialty Chemicals).

The compound (II-10) has the following structure, and is commercially available as trade name Tinuvin 360 (manufactured by Ciba Specialty Chemicals).

The compound (III-1) has the following structure, and is commercially available as trade name Tinuvin 460 (manufactured by Ciba Specialty Chemicals).

The compound (III-2) has the following structure, and is commercially available as trade name Cyasorb UV-116 (manufactured by CYTEC Company Ltd.).

The compound (III-3) has the following structure, and is commercially available as trade name Tinuvin 405 (manufactured by Ciba Specialty Chemicals).

The compound (III-4) has the following structure, and is commercially available as trade name Tinuvin 1577 (manufactured by Ciba Specialty Chemicals).

The compound (III-5) has the following structure, and is commercially available as trade name Tinosorb S (manufactured by Ciba Specialty Chemicals).

The compound (IV-1) has the following structure, and is commercially available as trade name Uvinul A plus (manufactured by BASF Japan Ltd.).

The compound (IV-2) has the following structure, and is commercially available as trade name Uvinul 3049 (manufactured by BASF Japan Ltd.).

The compound (IV-3) has the following structure, and is commercially available as trade name Visorb 110 (manufactured by KYODO CHEMICAL CO., LTD.).

The compound (IV-4) has the following structure, and is commercially available as trade name Seesorb 151 (manufactured by SHIPRO KASEI KAISHA LTD.).

The compound (IV-5) has the following structure, and is commercially available as trade name Chimassorb 81 (manufactured by Ciba Specialty Chemicals).

The compound (IV-6) has the following structure, and is commercially available as trade name Uvinul MS40 (manufactured by BASF Japan Ltd.).

The compound (IV-7) has the following structure, and is commercially available as trade name Uvinul 3050 (manufactured by BASF Japan Ltd.).

[Chemical formula 44]

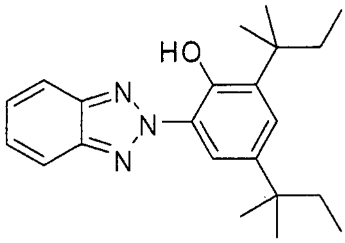
(II-1)

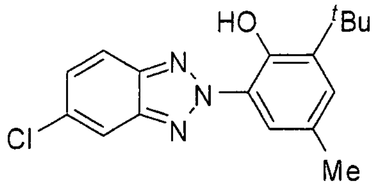
(II-2)

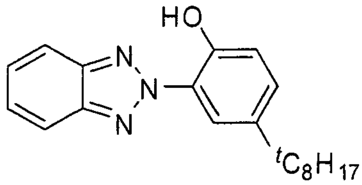
(II-3)

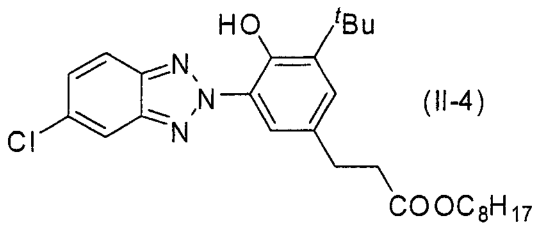
(II-4)

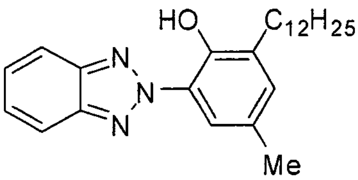
(II-5)

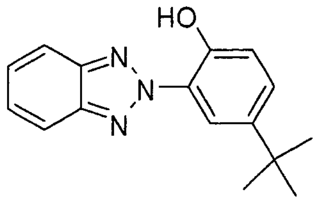
(II-6)

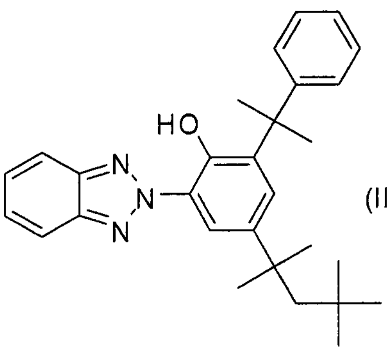
(II-7)

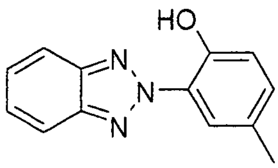
(II-8)

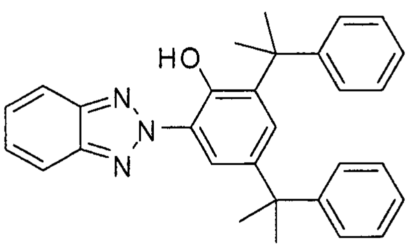
(II-9)

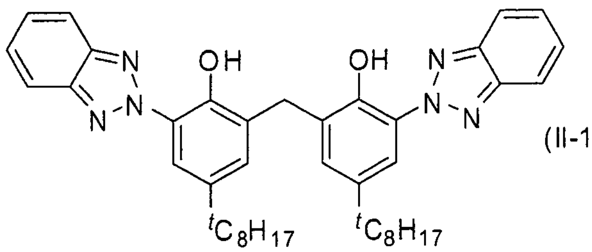
(II-10)

[Chemical formula 45]

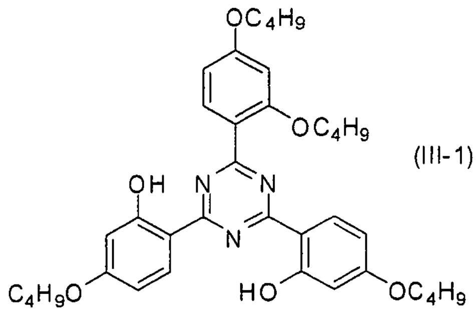

(III-1)

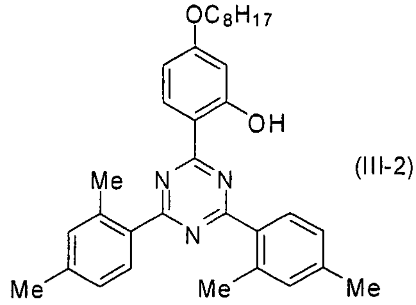

(III-2)

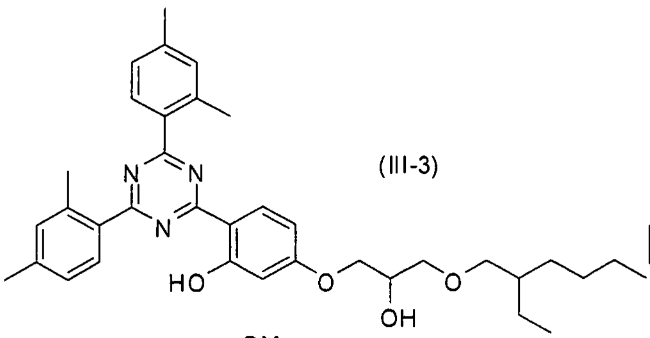

(III-3)

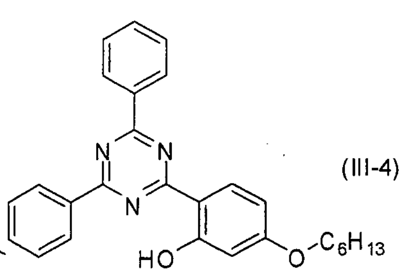

(III-4)

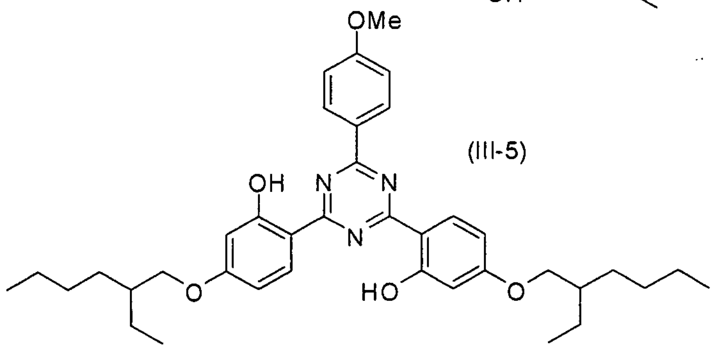

(III-5)

[Chemical formula 46]

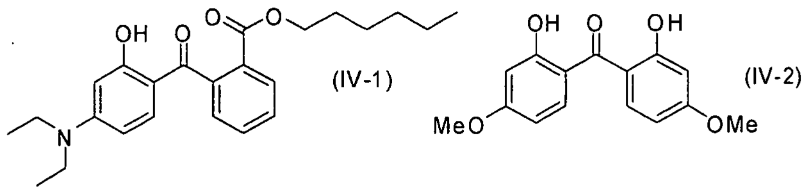

(IV-1) (IV-2)

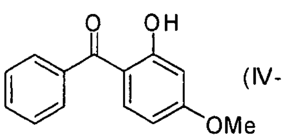

(IV-3)

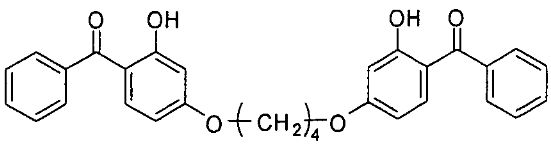

(IV-4)

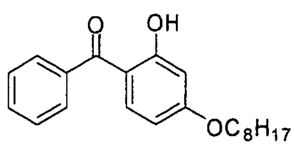

(IV-5)

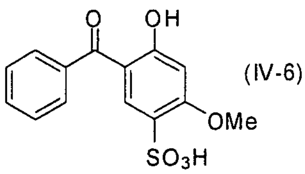

(IV-6)

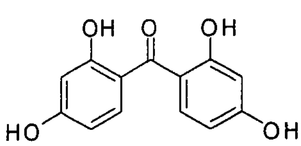

(IV-7)

The ultraviolet absorbents A and B for use in the present invention may be present alone, or may be bound to each other previously or in reaction in the composition. Alternatively, the ultraviolet absorbents A and B may be contained

in the unit structures of a copolymer, while the absorbents are introduced into monomers as bound to a polymerizable group and the monomers polymerized. The monomers containing the ultraviolet absorbents A and B may be copolymerized with another monomer containing no absorbent. Preferably, the monomers are contained respectively in composition, and the copolymer is formed by copolymerization thereof at a desired time.

The ultraviolet absorbent composition of the present invention may further contain a light stabilizer, or an antioxidant.

Preferable examples of the light stabilizer and the antioxidant include compounds described in JP-A-2004-117997. Specifically, compounds described on page 29, middle paragraph Nos. [0071] to [0111] of JP-A-2004-117997 are preferable. Especially, compounds represented by formula (TS-I), (TS-II), (TS-IV), or (TS-V) described on the paragraph No. [0072] are preferable.

The ultraviolet absorbent composition according to the present invention may be in any form, for example, liquid dispersion, solution or polymer material. The ultraviolet absorbent composition according to the present invention may contain any other desirable components according to application, in addition to the ultraviolet absorbents A and B.

The ultraviolet absorbent composition according to the present invention is preferably in the dispersed state as dispersed in a dispersing medium. Hereinafter, the ultraviolet absorbent dispersion according to the present invention will be described.

The medium for dispersing the ultraviolet absorbent according to the present invention is arbitrary. Examples thereof include water, organic solvents, resins or resin solutions. These media may be used alone or in combination of two or more.

Examples of the organic solvents as the dispersing medium that can be used in the present invention include hydrocarbon-based solvents such as pentane, hexane, and octane; aromatic solvents such as benzene, toluene, and xylene; ether-based solvents such as diethylether and methyl-t-butylether; alcoholic solvents such as methanol, ethanol, and isopropanol; ester-based solvents such as acetone, ethyl acetate and butyl acetate; ketone-based solvents such as methyl ethyl ketone; nitrile-based solvents such as acetonitrile and propionitrile; amide-based solvents such as N,N-dimethylformamide, N,N-dimethylacetamide, and N-methylpyrrolidone; sulfoxide-based solvents such as dimethylsulfoxide; amine-based solvents such as triethylamine and tributylamine; carboxylic acid-based solvents such as acetic acid and propionic acid; halogen-based solvents such as methylene chloride and chloroform; and heteroring-based solvents such as tetrahydrofuran and pyridine. These solvents may be used as a mixture at any rate.

Examples of the resins as the dispersing medium that can be used in the present invention include various known thermoplastic and thermosetting resins commonly used for production of molded article, sheet, film and others. Examples of the thermoplastic resins include polyethylene series resins, polypropylene series resins, poly(meth)acrylic ester series resins, polystyrene series resins, styrene-acrylonitrile series resins, acrylonitrile-butadiene-styrene series resins, polyvinyl chloride series resins, polyvinylidene chloride series resins, polyvinyl acetate series resins, polyvinylbutyral series resins, ethylene-vinyl acetate series copolymers, ethylene-vinylalcohol series resins, polyethylene terephthalate resins (PET), polybutylene terephthalate resins (PBT), liquid crystal polyester resins (LCP), polyacetal resins (POM), polyamide resins (PA), polycarbonate resins, polyurethane resins, and polyphenylene sulfide resins (PPS), and these resins may be used alone or as polymer blend or alloy of two or more. The resin may be used as a thermoplastic molding material containing a natural resin and additionally a filler such as glass fiber, carbon fiber, semi-carbonized fiber, cellulosic fiber or glass bead or a flame retardant. As needed, resin additives traditionally used, such as polyolefin series resin fine powder, polyolefin series wax, ethylene bisamide wax, and metal soap, may be used alone or in combination.

Examples of the thermosetting resins include epoxy resins, melamine resins, and unsaturated polyester resins, and the resin may be used as a thermosetting molding material containing a natural resin and additionally a filler, such as glass fiber, carbon fiber, semi-carbonized fiber, cellulosic fiber or glass bead, and a flame retardant.

The ultraviolet absorbent dispersion according to the present invention may contain other additives such as dispersant, antifoam, preservative, antifreezing agent, surfactant, and others. The dispersion may contain any other compounds additionally. Examples of the other additives include dye, pigment, infrared absorbent, flavoring agent, polymerizable compound, polymer, inorganic material or metal.

For example, a high-shearing force high-speed-agitation dispersing machine or a high-strength ultrasonic dispersing machine may be used as the apparatus for preparation of the ultraviolet absorbent dispersion according to the present invention. Specific examples thereof include colloid mill, homogenizer, capillary emulsifier, liquid siren, electromagnetic-distortion ultrasonic wave generator or an emulsifier having a Pallmann whistle. The high-speed-agitation dispersing machine favorably used in the present invention is a dispersing machine in which a dispersing part is revolving in liquid at high speed (500 to 15,000 rpm, preferably 2,000 to 4,000 rpm) such as dissolver, polytron, homomixer, homoblender, keddy mill, or jet agitator. The high-speed-agitation dispersing machine that can be used in the present invention is also called a dissolver or a high-speed impeller dispersing machine, and, as described in JP-A-55-129136, a dispersing machine having impellers of saw-teeth shaped plate alternately bent in the vertical direction that are connected to the shaft revolving at high speed is also a favorable example.

Various methods may be used in preparation of an emulsified dispersion containing a hydrophobic compound. For example, in dissolving a hydrophobic compound in an organic solvent, the hydrophobic compound is dissolved in a solvent or a mixture of two or more selected from high-boiling point organic materials, water-immiscible low boiling point organic solvents and water-miscible organic solvents, and the solution is then dispersed in water or an aqueous hydrophilic colloid solution in the presence of a surfactant compound. The water-insoluble phase containing the hydrophobic compound and the aqueous phase may be mixed by the so-called normal mixing method of adding the water-insoluble phase into the agitated aqueous phase or by the reverse mixing method of adding the phases reversely.

The content of the ultraviolet absorbent composition in the ultraviolet absorbent dispersion according to the present invention may not be determined specifically, because it varies according to application and type of usage, and is thus arbitrary according to application. Preferably, the content is 0.001 to 50 mass%, more preferably 0.01 to 20 mass%, with respect to the total amount of the ultraviolet absorbent dispersion.

The ultraviolet absorbent composition according to the present invention is favorably used in the state of a solution dissolved in a liquid medium. Hereinafter, the ultraviolet absorbent solution according to the present invention will be described.

The liquid dissolving the ultraviolet absorbent composition according to the present invention is arbitrary. It is, for example, water, an organic solvent, a resin or a resin solution. Examples of the organic solvent, the resin, and the resin solution include those described above as the dispersing medium. These may be used alone or in combination.

The solution of the ultraviolet absorbent composition according to the present invention may contain any other compounds additionally. Examples of the other additives include dye, pigment, infrared absorbent, flavoring agent, polymerizable compound, polymer, inorganic material or metal. Components other than the ultraviolet absorbent composition according to the present invention may not necessarily be dissolved.

The content of the ultraviolet absorbent composition in the ultraviolet absorbent solution according to the present invention may not be determined specifically, because it varies according to application and type of usage, and thus the concentration is arbitrary according to application. The concentration in the entire solution is preferably 0.001 to 30 mass%, more preferably 0.01 to 10 mass%. A solution at higher concentration may be prepared in advance and diluted at a desired time before use. The dilution solvent is selected arbitrarily from the solvents described above.

The polymer composition is used in preparation of the polymer material according to the present invention. The polymer composition for use in the present invention contains a polymer substance described below and the ultraviolet absorbent composition according to the present invention.

The ultraviolet absorbent composition according to the present invention can be contained in the polymer substance in various methods. When the ultraviolet absorbent composition according to the present invention is compatible with the polymer substance, the ultraviolet absorbent composition according to the present invention may be added to the polymer substance directly. The ultraviolet absorbent composition according to the present invention may be dissolved in a cosolvent compatible with the polymer substance, and then the obtained solution be added to the polymer substance. The ultraviolet absorbent composition according to the present invention may be dispersed in a high-boiling point organic solvent or a polymer, and the obtained dispersion be added to the polymer substance.

The boiling point of high-boiling point organic solvent is preferably 180°C or higher, more preferably 200°C or higher. The melting point of the high-boiling point organic solvent is preferably 150°C or lower, more preferably 100°C or lower. Examples of the high-boiling point organic solvents include phosphoric esters, phosphonic esters, benzoic esters, phthalic esters, fatty acid esters, carbonate esters, amides, ethers, halogenated hydrocarbons, alcohols and paraffins. Phosphoric esters, phosphonic esters, phthalic ester, benzoic esters and fatty acid esters are preferable.

The method of adding the ultraviolet absorbent composition according to the present invention is determined, by reference to the description in JP-A-58-209735, JP-A-63-264748, JP-A-4-191851, JP-A-8-272058, and British Patent No. 2016017A.

The content of the ultraviolet absorbent composition in the ultraviolet absorbent solution according to the present invention is not determined specifically, because it varies according to application and type of usage, and the concentration is arbitrary according to desirable application. It is preferably 0.001 to 10 mass%, more preferably 0.01 to 5 mass%, in the polymer material.

The ultraviolet absorbent composition according to the present invention is preferably used for a polymer material. Hereinafter, the polymer material according to the present invention will be described.

Although practically sufficient ultraviolet-shielding effect is obtained only with the ultraviolet absorbent composition according to the present invention in the present invention, a white pigment which has higher hiding power such as titanium oxide may be used for assurance. In addition, a trace (0.05 mass% or less) amount of colorant may be used additionally, if the appearance or the color tone is of a problem or as needed. Alternatively, a fluorescent brightener may be used additionally for applications demanding transparency or whiteness. Examples of the fluorescent brighteners include commercialized products, the compounds represented by Formula [1] and typical exemplary compounds 1 to 35 described in JP-A-2002-53824.

Hereinafter, the polymer substance that can be used in the polymer composition will be described. The polymer

substance is a natural or synthetic polymer or copolymer. Examples thereof include the followings:

<1> Monoolefin and diolefinic polymers such as polypropylene, polyisobutylene, polybut-1-ene, poly-4-methyl pent-1-ene, polyvinylcyclohexane, polyisoprene and polybutadiene; cycloolefin polymers such as of cyclopentene or norbomene; polyethylenes (crosslinked as needed) such as high-density polyethylene (HDPE), high-density and high-molecular weight polyethylene (HDPE-HMW), high-density and ultrahigh molecular weight polyethylene (HDPE-UHMW), medium-density polyethylene (MDPE), low-density polyethylene (LDPE), and linear low-density polyethylene (LLDPE), (VLDPE) and (ULDPE).
Polyolefins (that is, polymers of the monoolefins exemplified in the paragraph above), preferably polyethylene and polypropylene, may be prepared by various methods, particularly by the following methods:

a) Radical polymerization (normally under high pressure and elevated temperature), and
b) Catalytic polymerization normally by using one or more metals in the groups IVb, Vb, VIb and VIII of the Periodic Table.

The metal is normally bound to one or more ligands, typically $\pi$- or $\sigma$-coordinating groups such as oxide, halide, alcoholate, ester, ether, amine, alkyl, alkenyl and/or aryl. The metal complex is in the free state or immobilized on a base material such as activated magnesium chloride, titanium (III) chloride, alumina or silicon oxide. The catalyst may be soluble or insoluble in the polymerization medium. The catalyst may be used as it is in polymerization or in combination with another activation agent, such as metal alkyl, metal hydride, metal alkyl halide, metal alkyl oxide or metal alkyloxane, the metal being an element in the groups Ia, IIa and/or IIIa of the Periodic Table. The activation agent may be modified properly with an other ester, ether, amine or silylether group. Such a catalyst system is normally called Philips, Standard Oil-Indiana, Ziegler (Natta), TNZ (Du Pont), metallocene or single site catalyst (SSC).
<2> Mixture of the polymers described in <1> above such as polypropylene/polyisobutylene, polypropylene/polyethylene mixture (such as PP/HDPE and PP/LDPE), and mixture of different polyethylenes (such as LDPE/HDPE).
<3> Copolymers of a monoolefin and a diolefin or a monoolefin or diolefin with another vinyl monomer such as ethylene/propylene copolymer, mixture of linear low-density polyethylene (LLDPE) and its low-density polyethylene (LDPE), propylene/but-1-ene copolymer, propylene/isobutylene copolymer, ethylene/but-1-ene copolymer, ethylene/hexene copolymer, ethylene/methylpentene copolymer, ethylene/heptene copolymer, ethylene/octene copolymer, ethylene/vinylcyclohexane copolymer, ethylene/cycloolefin copolymer (such as COC (Cyclo-Olefin Copolymer) of ethylene/norbornene), ethylene/1-olefin copolymer releasing 1-olefin, propylene/butadiene copolymer, isobutylene/isoprene copolymer, ethylene/vinylcyclohexene copolymer, ethylene/alkyl acrylate copolymer, ethylene/alkyl methacrylate copolymer, ethylene/vinyl acetate copolymer or ethylene/acrylic acid copolymer and the salts thereof (ionomers); and terpolymers of diene such as ethylene, propylene, hexadiene, dicyclopentadiene or ethylidene-norbornene; and mixtures of such copolymers and the polymer described in the above 1) such as polypropylene/ethylene-propylene copolymer, LDPE/ethylene-vinyl acetate copolymer (EVA), LDPE/ethylene-acrylic acid copolymer (EAA), and mixtures of LLDPE/EVA, LLDPE/EAA and alternating or random polyalkylene/carbon monooxide copolymer and the other polymer such as polyamide.
<4> Hydrocarbon resins (for example, having 5 to 9 carbon atoms) containing hydrogenated derivatives (such as tackifier) and mixtures of polyalkylene and starch.
The homopolymers and copolymers described in <1> to <4> above may have any three-dimensional structure, syndiotactic, isotactic, hemiisotactic or atactic; and atactic polymers are preferable. Stereoblock polymers are also included.
<5> Polystyrene, poly(p-methylstyrene), and poly($\alpha$-methylstyrene).
<6> Aromatic homopolymer and copolymers prepared from aromatic vinyl monomers including all isomers of styrene, $\alpha$-methylstyrene, and vinyltoluene, in particular all isomers of p-vinyltoluene, ethylstyrene, propylstyrene, vinyl biphenyl, vinylnaphthalene, and vinylanthracene, and the mixture thereof. The homopolymers and copolymers may have any three-dimensional structure, syndiotactic, isotactic, hemiisotactic or atactic; and atactic polymers are preferable. Stereoblock polymers are also included.

<6a> Copolymers of the aromatic vinyl monomers or comonomers selected from ethylene, propylene, dienes, nitriles, acids, maleic anhydride, maleimide, vinyl acetate and vinyl chloride or its acryl derivative and the mixture thereof, such as styrene/butadiene, styrene/acrylonitrile, styrene/ethylene (copolymer), styrene/alkyl methacrylate, styrene/butadiene/alkyl acrylate, styrene/butadiene/alkyl methacrylate, styrene/maleic anhydride, and styrene/acrylonitrile/methyl acrylate; styrene copolymers and other polymers including high shock-resistant mixtures such as polyacrylate, diene polymer, and ethylene/propylene/diene terpolymer; and styrene block

copolymers such as styrene/butadiene/styrene, styrene/isoprene/styrene, styrene/ethylene/butylene/styrene and styrene/ethylene/propylene/styrene.

<6b> Hydrogenated aromatic polymers prepared from the hydrogenated polymers described in <6>, in particular polycyclohexylethylene (PCHE), often called polyvinylcyclohexane (PVCH), prepared by hydrogenation of atactic polystyrene.

<6c> Hydrogenated aromatic polymers prepared by hydrogenation of the polymers described in <6a> above.

The homopolymers and copolymers may have any three-dimensional structure, syndiotactic, isotactic, hemiisotactic or atactic, and atactic polymers are preferable. Stereoblock polymers are also included.

<7> Graft copolymers of an aromatic vinyl monomer such as styrene or α-methylstyrene, including graft copolymers of polybutadiene/styrene; polybutadiene-styrene or polybutadiene-acrylonitrile copolymer/styrene; polybutadiene/styrene and acrylonitrile (or methacrylonitrile); polybutadiene/styrene, acrylonitrile and methyl methacrylate; polybutadiene/styrene and maleic anhydride; polybutadiene/styrene, acrylonitrile and maleic anhydride or maleimide; polybutadiene/styrene and maleimide; polybutadiene/styrene and alkyl acrylate or methacrylate; ethylene/propylene/diene terpolymer/styrene and acrylonitrile; polyalkyl acrylate or polyalkyl methacrylate/styrene and acrylonitrile; acrylate/butadiene copolymer/styrene and acrylonitrile; and mixtures thereof with the copolymers described in <6> above such as known copolymer mixtures of ABS, SAN, MBS, ASA and AES polymer.

<8> Halogen-containing polymers such as polychloroprene, chlorinated rubber, chlorinated or brominated copolymers of isobutylene-isoprene (halobutyl rubbers), chlorinated or sulfochlorinated polyethylene, ethylene-chlorinated ethylene copolymer, and epichlorohydrin homopolymer and copolymers; in particular, polymers of a halogen-containing vinyl compound such as polyvinyl chloride, polyvinylidene chloride, polyvinyl fluoride, polyvinylidene fluoride, and copolymers thereof such as polyvinyl chloride/vinylidene chloride, polyvinyl chloride/vinyl acetate or vinylidene chloride/vinyl acetate copolymer.

<9> Polymers from α,β-unsaturated acid and the derivatives thereof such as polyacrylates and polymethacrylates; and high-impact polymethyl methacrylate, polyacrylamide and polyacrylonitrile modified with butyl acrylate.

<10> Copolymers of the monomers described in <9> above or with another unsaturated monomer such as acrylonitrile/butadiene copolymer, acrylonitrile/alkyl acrylate copolymer, acrylonitrile/alkoxyalkyl acrylate or acrylonitrile/vinyl halide copolymer and acrylonitrile/alkyl methacrylate/butadiene terpolymer.

<11> Polymers derived from an unsaturated alcohol and an amine, and acyl derivatives or acetals thereof such as polyvinylalcohol, polyvinyl acetate, polyvinyl stearate, polyvinyl benzoate, polyvinyl maleate, polyvinylbutyral, polyallyl phthalate and polyallylmelamine; and copolymers thereof with the olefin described in <1> above.

<12> Homopolymers and copolymers of cyclic ether such as polyalkylene glycols, polyethyleneoxide, polypropyleneoxide or bisglycidylether, and the copolymers thereof.

<13> Polyacetals such as polyoxymethylene and polyoxymethylene containing ethyleneoxide as the comonomer; polyacetals modified with a thermoplastic polyurethane, acrylate or MBS.

<14> Mixtures of polyphenyleneoxide and sulfide, and those of polyphenyleneoxide and styrene polymer or polyamide.

<15> Polyurethanes derived from a polyether, polyester or polybutadiene having a hydroxyl group terminal and an aliphatic or aromatic polyisocyanate, and the precursors thereof.

<16> Polyamides and copolyamides derived from a diamine and a dicarboxylic acid and/or aminocarboxylic acid or the corresponding lactam, such as polyamide 4, polyamide 6, polyamides 6/6, 6/10, 6/9, 6/12, 4/6 and 12/12, polyamide 11, polyamide 12, and an aromatic polyamide from m-xylenediamine and adipic acid; polyamides prepared from hexamethylenediamine and isophthalic and/or terephthalic acid, in the presence or absence of a modifying agent elastomer such as poly-2,4,4-trimethylhexamethylene terephthalamide and poly-m-phenylene isophthalamide; block copolymers of the polyamides above with polyolefin, olefin copolymer, ionomer or chemically bonded or grafted elastomer; block copolymers of the polyamides above with polyether such as polyethylene glycol, polypropylene glycol or polytetramethylene glycol; polyamides or copolyamides modified with EPDM or ABS; and polyamides condensed during processing (RIM polyamides).

<17> Polyurea, polyimide, polyamide-imide, polyether imide, polyester-imide, polyhydantoin and polybenzimidazole.

<18> Polyesters derived from a dicarboxylic acid and a diol and/or a hydroxycarboxylic acid or the corresponding lactone such as polyethylene terephthalate, polybutylene terephthalate, poly-1,4-dimethylolcyclohexane terephthalate, polyalkylene naphthalate (PAN) and polyhydroxybenzoate; block copolyether esters derived from hydroxyl terminal polyethers; and polyesters modified with polycarbonate or MBS; the polyesters and polyester copolymers specified in U.S. Patent No. 5,807,932 (2nd column, line 53) are also incorporated herein by reference.

<19> Polycarbonates and polyester carbonates.

<20> Polyketones.

<21> Polysulfones, polyether sulfones and polyether ketones.

<22> Crosslinked polymers derived from an aldehyde component and another phenol component and also from urea and melamine such as phenol/formaldehyde resin, urea/formaldehyde resin and melamine/formaldehyde resin.
<23> Dry and non-dry alkyd resins.
<24> Unsaturated polyester resins derived from saturated and unsaturated dicarboxylic acids, a polyvalent alcohol, and a crosslinking agent vinyl compound, and less flammable halogen-containing derivatives thereof.
<25> Substitution acrylates, for example, crosslinkable acrylic resins derived from epoxy acrylate, urethane acrylate or polyester acrylate.
<26> Crosslinked alkyd, polyester and acrylate resins crosslinked with a melamine resin, urea resin, isocyanate, isocyanurate, polyisocyanate or epoxy resin.
<27> Crosslinked epoxy resins derived from an aliphatic, alicyclic, heterocyclic or aromatic glycidyl compound, for example, glycidyl ether products of bisphenol A or bisphenol F crosslinked with a common curing agent such as anhydride or amine in the presence or absence of an accelerator.
<28> Natural polymers such as cellulose, and the derivative thereof modified with rubber, gelatin or chemical such as cellulose acetate, cellulose propionate and cellulose butyrate, and cellulose ethers such as methylcellulose; and rosins and the derivatives thereof.
<29> Polymer blends (polyblends) of the polymers described above such as PP/EPDM, polyamide/EPDM or ABS, PVC/EVA, PVC/ABS, PVC/MBS, PC/ABS, PBTP/ABS, PC/ASA, PC/PBT, PVC/CPE, PVC/acrylate, POM/thermoplastic PUR, PC/thermoplastic PUR, POM/acrylate, POM/MBS, PPO/HIPS, PPO/PA6.6 and copolymer, PA/HDPE, PA/PP, PA/PPO, PBT/PC/ABS and PBT/PET/PC.
<30> Natural and synthetic organic materials of a pure monomeric compound or a mixture of the compounds such as mineral oils, animal and vegetable fats, oils and waxes, or synthetic ester (such as phthalate, adipate, phosphate or trimellitate)-based oils, fats and waxes, and mixtures thereof with a synthetic ester and mineral oil at any rate, mixtures typically used as a fiber-spinning composition, and the aqueous emulsions thereof.
<31> Aqueous emulsions of natural or synthetic rubber, for example, a natural latex or latexes of a carboxylated styrene/butadiene copolymer.
<32> Polysiloxanes, for example, the soft hydrophilic polysiloxane described in U.S. Patent No. 4,259,467 and the hard polyorganosiloxane described in U.S. Patent No. 4,355,147.
<33> Polyketimines in combination with an unsaturated acrylpolyacetoacetate resin or an unsaturated acrylic resin including urethane acrylate, polyester acrylate, vinyl or acryl copolymers having a pendant unsaturated group, and acrylated melamines. The polyketimine is prepared from a polyamine and a ketone in the presence of an acid catalyst.
<34> Radiant ray-hardening compositions containing an ethylenically unsaturated monomer or oligomer and a polyunsaturated aliphatic oligomer.
<35> Epoxy melamine resins such as photostabilized epoxy resins crosslinked with a coetherified high-solid content melamine resin sensitive to epoxy groups, such as LSE-4103 (trade name, manufactured by Monsanto).

The polymer substance for use in the present invention is preferably a synthetic polymer, more preferably a polyolefin, an acrylic polymer, polyester, polycarbonate, or a cellulose ester. Among them, polyethylene, polypropylene, poly(4-methylpentene), polymethyl methacrylate, polycarbonate, polyethylene terephthalate, polyethylene naphthalate, polybutylene terephthalate, and triacetylcellulose are particularly preferable.

The polymer substance for use in the present invention is preferably a thermoplastic resin.

The polymer material according to the present invention may contain any additives such as antioxidant, photo stabilizer, processing stabilizer, antidegradant, and compatibilizer, as needed in addition to the polymer substance above and the ultraviolet light inhibitor.

The polymer material according to the present invention contains the polymer substance above. The polymer material according to the present invention may be made only of the polymer substance, or may be formed by using the polymer substance dissolved in a solvent.

The polymer material according to the present invention is applicable to any application where synthetic resin is used, and particularly favorably to applications where there is possibility of exposure to light such as sunlight or ultraviolet light. Specific examples thereof include glass alternatives and their surface-coating agent; coating agents for the window glass, lighting glass and light-protecting glass such as of house, facility, and vehicle; interior and exterior materials such as of house, facility and vehicle, paints for the interior and exterior materials; materials for ultraviolet-emission sources such as fluorescent lamp and mercury lamp; materials for precision machines and electric and electronic devices; materials for shielding electromagnetic and other waves emitted from various displays; containers and packaging material such as of food, beverage, and medicine; discoloration inhibitors for agricultural and industrial sheet or film, print, colored products, dyes and pigments; cosmetics such as anti-sunburn cream, shampoo, rinse, and hair dressing; apparel fiber products such as sport wear, stockings and cap and the fibers; home interior products such as curtain, carpet and wall paper; medical devices such as plastic lens, contact lens and artificial eye; optical materials such as optical filter, prism, mirror, and photographic material; stationery products such as tape and ink; display plates and

devices and the surface-coating agents thereof.

The shape of the polymer material according to the present invention may be flat film, powder, spherical particle, crushed particle, bulky continuous particle, fiber, solenoid, hollow fiber, granule, plate or porous particle.

The polymer material according to the present invention, which contains the ultraviolet absorbent composition according to the present invention, is superior in light resistance (ultraviolet fastness), causing no precipitation or bleed out of the ultraviolet absorbent during long-term use. In addition, the polymer material according to the present invention, which has superior long-wavelength ultraviolet absorption capacity, can be used as an ultraviolet-absorbing filter or container, for protection, for example, of an ultraviolet-sensitive compound therein. It is possible to obtain a molded article (such as container) of the polymer material according to the present invention, for example, by molding the polymer substance by any molding method such as extrusion molding or injection molding. It is also possible to prepare a molded article coated with an ultraviolet-absorbing film made of the polymer material according to the present invention, by coating and drying a solution of the polymer substance on a separately prepared molded article.

When the polymer material according to the present invention is used as an ultraviolet-absorbing filter or film, the polymer substance is preferably transparent. Examples of the transparent polymer materials include cellulose esters (such as diacetylcellulose, triacetylcellulose (TAC), propionylcellulose, butyrylcellulose, acetyl propionyl cellulose, and nitrocellulose), polyamides, polycarbonates, polyesters (such as polyethylene terephthalate, polyethylene naphthalate, polybutylene terephthalate, poly-1,4-cyclohexane dimethylene terephthalate, polyethylene-1,2-diphenoxyethane-4,4'-dicarboxylate, and polybutylene terephthalate), polystyrenes (such as syndiotactic polystyrene), polyolefins (such as polyethylene, polypropylene, and polymethylpentene), polymethyl methacrylate, syndiotactic polystyrene, polysulfones, polyether sulfones, polyether ketones, polyether imides and polyoxyethylene. Preferable are cellulose esters, polycarbonates, polyesters, polyolefins, and acrylic resins. The polymer material according to the present invention may be used as a transparent support, and the transmittance of the transparent support in such a case is preferably 80% or more, more preferably 86% or more.

Hereinafter, the packaging material containing the ultraviolet absorbent according to the present invention will be described. The packaging material containing the ultraviolet absorbent according to the present invention may be a packaging material of any kind of polymer, as long as it contains the compound represented by any one of formulae (4) and (B-Ia). Examples thereof include the thermoplastic resins described in JP-A-8-208765; the polyvinylalcohols described in JP-A-8-151455; the polyvinyl chlorides described in JP-A-8-245849; the polyesters described in JP-A-10-168292 and JP-A-2004-285189; the heat-shrinkable polyesters described in JP-A-2001-323082; the styrene-based resins described in JP-A-10-298397; the polyolefins described in JP-A-11-315175, JP-A-2001-26081, and JP-A-2005-305745; and the ROMP's described in JP-T-2003-524019. It may be, for example, the resin having a vapor-deposition thin film of an inorganic compound described in JP-A-2004-50460 or JP-A-2004-243674. It may be, for example, the paper coated with a resin containing an ultraviolet absorbent described in JP-A-2006-240734.

The packaging material containing the ultraviolet absorbent according to the present invention may be that for packaging anything such as food, beverage, medicine, cosmetics, or individual health care product. Examples thereof include the food packaging materials described in JP-A-11-34261 and JP-A-2003-237825; the colored liquid packaging materials described in JP-A-8-80928; the liquid preparation-packaging materials described in JP-A-2004-51174; the medicine container packaging materials described in JP-A-8-301363 and JP-A-11-276550; the medical sterilization packaging materials described in JP-A-2006-271781; the photographic photosensitive material packaging materials described in JP-A-7-287353; the photograph film packaging materials described in JP-A-2000-56433; the UV-hardening ink packaging materials described in JP-A-2005-178832; and the shrink labels described in JP-A-2003-200966 and JP-A-2006-323339.

The packaging material containing the ultraviolet absorbent according to the present invention may be the transparent packaging material described, for example, in JP-A-2004-51174 or the light-shielding packaging material described, for example, in JP-A-2006-224317.

The packaging material containing the ultraviolet absorbent according to the present invention may have ultraviolet light-shielding property as well as other properties, as described, for example, in JP-A-2001-26081 and JP-A-2005-305745. Examples thereof include the packaging materials having gas-barrier property described, for example, in JP-A-2002-160321; those containing an oxygen indicator as described, for example, in JP-A-2005-156220; and those containing both an ultraviolet absorbent and a fluorescent brightener described, for example, in JP-A-2005-146278.

The packaging material containing the ultraviolet absorbent according to the present invention may be prepared by any method. Examples of the method include the method of forming an ink layer described, for example, in JP-A-2006-130807; the method of melt-extruding and laminating a resin containing an ultraviolet absorbent described, for example, in JP-A-2001-323082 and JP-A-2005-305745; the method of coating on a base film described, for example, in JP-A-9-142539; and the method of dispersing an ultraviolet absorbent in an adhesive described, for example, in JP-A-9-157626.

Hereinafter, the container containing the ultraviolet absorbent according to the present invention will be described. The container containing the ultraviolet absorbent according to the present invention may be a container of any

kind of polymer, as long as it contains the compound represented by any one of formulae (4) and (B-Ia). Examples thereof include the thermoplastic resin containers described in JP-A-8-324572; the polyester containers described in JP-A-2001-48153, JP-A-2005-105004, and JP-A-2006-1568; the polyethylene naphthalate containers described in JP-A-2000-238857; the polyethylene containers described in JP-A-2001-88815; the cyclic olefin-based resin composition containers described in JP-A-7-216152; the plastic containers described in JP-A-2001-270531; and the transparent polyamide containers described in JP-A-2004-83858. It may be the paper container containing a resin described, for example, in JP-A-2001-114262 or JP-A-2001-213427. It may be, alternatively, the glass container having an ultraviolet-absorbing layer described, for example, in JP-A-7-242444, JP-A-8-133787, or JP-A-2005-320408.

The container containing the ultraviolet absorbent according to the present invention is used as containers in various applications including food, beverage, medicine, cosmetics, individual health care product and shampoo. Examples thereof include the liquid fuel-storing containers described in JP-A-5-139434; the golf ball containers described in JP-A-7-289665; the food containers described in JP-A-9-295664 and JP-A-2003-237825; the liquor containers described in JP-A-9-58687; the medicine-filling containers described in JP-A-8-155007; the beverage containers described in JP-A-8-324572 and JP-A-2006-298456; the oily food containers described in JP-A-9-86570; the analytical reagent solution containers described in JP-A-9-113494; the instant noodle containers described in JP-A-9-239910; the light-resistant cosmetic preparation containers described in JP-A-11-180474, JP-A-2002-68322, and JP-A-2005-278678; the medicine containers described in JP-A-11-276550; the high-purity chemical solution containers described in JP-A-11-290420; the liquid agent containers described in JP-A-2001-106218; the UV-hardening ink containers described in JP-A-2005-178832; and the plastic ampoules described in WO 04/93775 pamphlet.

The container containing the ultraviolet absorbent according to the present invention may have ultraviolet-shielding property as well as other properties, as described, for example, in JP-A-5-305975 and JP-A-7-40954. Examples of such containers include the antimicrobial containers described in JP-A-10-237312; the flexuous containers described in JP-A-2000-152974; the dispenser containers described in JP-A-2002-264979; and the biodegradable containers described in, for example, JP-A-2005-255736.

The container containing the ultraviolet absorbent according to the present invention may be prepared by any method. Examples of the method include the two-layer stretching blow-molding method described in JP-A-2002-370723; the multilayer coextrusion blow-molding method described in JP-A-2001-88815; the method of forming an ultraviolet-absorbing layer on the external surface of an container described in JP-A-9-241407; the methods of using a shrinkable film described in JP-A-8-91385, JP-A-9-48935, JP-T-11-514387, JP-A-2000-66603, JP-A-2001-323082, JP-A-2005-105032, and WO 99/29490 pamphlet; and the method of using a supercritical fluid described in JP-A-11-255925.

Hereinafter, the paint and the coated film containing the ultraviolet absorbent according to the present invention will be described. The paint containing the ultraviolet absorbent according to the present invention may be a paint of any composition, as long as it contains the compound represented by any one of formulae (4) and (B-Ia). Examples thereof include those of acrylic resin-base, urethane resin-base, aminoalkyd resin-base, epoxy resin-base, silicone resin-base, and fluororesin-base. To these resins, a base compound, curing agent, diluent, leveling agent or a cissing inhibitor may be added.

For example, when an acrylic urethane resin or a silicon acrylic resin is selected as the transparent resin component, the curing agent is preferably polyisocyanate; and the diluent is preferably a hydrocarbon-based solvent such as toluene or xylene, an ester-based solvent such as isobutyl acetate, butyl acetate and amyl acetate, or an alcohol-based solvent such as isopropyl alcohol or butyl alcohol. The acrylic urethane resin is an acrylic urethane resin obtained by reaction of a methacrylate (typically, methyl methacrylate), hydroxyethyl methacrylate copolymer and a polyisocyanate. In such a case, the polyisocyanate is, for example, tolylene diisocyanate, diphenylmethane diisocyanate, polymethylene polyphenylene polyisocyanate, tolidine diisocyanate, naphthalene diisocyanate, hexamethylene diisocyanate, isophorone diisocyanate, xylylene diisocyanate, dicyclohexylmethane diisocyanate or hexamethylene diisocyanate. Examples of other transparent resin components include polymethyl methacrylate, polymethyl methacrylate/styrene copolymer, polyvinyl chloride and polyvinyl acetate. In addition to these components, a leveling agent such as an acrylic or silicone resin, a cissing inhibitor such as a silicone-based or acrylic inhibitor, and others may be added as needed.

The paint containing the ultraviolet absorbent according to the present invention may be used in any application. Examples thereof include the ultraviolet-shielding paints described in JP-A-7-26177, JP-A-9-169950, JP-A-9-221631, and JP-A-2002-80788; the ultraviolet-infrared-shielding paints described in JP-A-10-88039; the electromagnetic wave-shielding paints described in JP-A-2001-55541; the clear paints described in JP-A-8-81643; the metallic paint compositions described in JP-A-2000-186234; the cation electrodeposition paints described in JP-A-7-166112; the antimicrobial and lead-free cation electrodeposition paints described in JP-A-2002-294165; the powder paints described in JP-A-2000-273362, JP-A-2001-279189, and JP-A-2002-271227; the aqueous intermediate-layer paints, aqueous metallic paints, and aqueous clear paints described in JP-A-2001-9357; the topcoat paints for automobile, construction, and civil work described in JP-A-2001-316630; the hardening paints described in JP-A-2002-356655; the coat-film forming compositions for use on plastic materials such as automobile bumper described in JP-A-2004-937; the paints for a metal plate described in JP-A-2004-2700; the hardening gradient coat films described in JP-A-2004-169182; the coating

materials for an electric wire described in JP-A-2004-107700; the paints for automobile repair described in JP-A-6-49368; the anionic electrodeposition paints described in JP-A-2002-38084 and JP-A-2005-307161; the paints for an automobile described in JP-A-5-78606, JP-A-5-185031, JP-A-10-140089, JP-T-2000-509082, JP-T-2004-520284, and WO 2006/097201 pamphlet; the paints for a coated steel plate described in JP-A-6-1945; the paints for a stainless steel described in JP-A-6-313148; the lamp moth-repellent paints described in JP-A-7-3189; the UV-hardening paints described in JP-A-7-82454; the antimicrobial paints described in JP-A-7-118576; the eyestrain protection paints described in JP-A-2004-217727; the anti-fog paints described in JP-A-2005-314495; the ultra-weather-resistance paints described in JP-A-10-298493; the gradient paints described in JP-A-9-241534; the photocatalyst paints described in JP-A-2002-235028; the strippable paints described in JP-A-2000-345109; the concrete separation paints described in JP-A-6-346022; the anti-corrosion paints described in JP-A-2002-167545; the protective paints described in JP-A-8-324576; the water-repellent protective paints described in JP-A-9-12924; the anti-plate glass scattering paints described in JP-A-9-157581; the alkali-soluble protective paints described in JP-A-9-59539; the aqueous temporary protective paint compositions described in JP-A-2001-181558; the flooring paints described in JP-A-10-183057; the emulsion paints described in JP-A-2001-115080; the two-liquid aqueous paints described in JP-A-2001-262056; the one-liquid paints described in JP-A-9-263729; the UV-hardening paints described in JP-A-2001-288410; the electron beam-hardening paint compositions described in JP-A-2002-69331; the thermosetting paint compositions described in JP-A-2002-80781; the aqueous paints for baking lacquer described in JP-T-2003-525325; the powder paints and the slurry paints described in JP-A-2004-162021; the repair paints described in JP-A-2006-233010; the powder-paint aqueous dispersions described in JP-T-11-514689; the paints for a plastic article described in JP-A-2001-59068 and JP-A-2006-160847; and the electron beam-hardening paints described in JP-A-2002-69331.

The paint containing the ultraviolet absorbent according to the present invention generally contains a paint (containing a transparent resin component as the principal component) and an ultraviolet absorbent. The paint contains the ultraviolet absorbent preferably in an amount of 0 to 20 mass% with respect to the resin. The thickness of the film coated is preferably 2 to 1,000 μm, more preferably 5 to 200 μm. The method of coating the paint is arbitrary, and examples of the method include a spray method, a dipping method, a roller coating method, a flow coater method and a blow coating method. The dry after coating is preferably carried out at a temperature of approximately room temperature to 120°C for 10 to 90 minutes, although the condition may vary according to the paint composition.

The coated film containing the ultraviolet absorbent according to the present invention is a coated film formed by using the paint containing the ultraviolet absorbent according to the present invention that contains the ultraviolet absorbent containing the compound represented by any one of formulae (4) and (B-Ia) above.

Hereinafter, the ink containing the ultraviolet absorbent according to the present invention will be described. The ink containing the ultraviolet absorbent according to the present invention may be any ink in any form, as long as it contains the compound represented by any one of formulae (4) and (B-Ia) above. For example, it may be dye ink, pigment ink, aqueous ink or a solvent ink. It may be used in any application. Examples of the applications include the screen printing ink described in JP-A-8-3502; the flexographic printing ink described in JP-T-2006-521941; the gravure printing ink described in JP-T-2005-533915; the lithographic offset printing ink described in JP-T-11-504954; the letterpress printing ink described in JP-T-2005-533915; the UV ink described in JP-A-5-254277; and the EB ink described in JP-A-2006-30596. Other examples thereof include the inkjet inks described in JP-A-11-199808, WO 99/67337 pamphlet, JP-A-2005-325150, JP-A-2005-350559, JP-A-2006-8811, and JP-T-2006-514130; the photochromic ink described in JP-A-2006-257165; the thermal transfer ink described in JP-A-8-108650; the masking ink described in JP-A-2005-23111; the fluorescence ink described in JP-A-2004-75888; the security ink described in JP-A-7-164729; and the DNA ink described in JP-A-2006-22300.

Any product obtained by using the ink containing the ultraviolet absorbent according to the present invention is also included in the present invention. Examples thereof include the print described in JP-A-2006-70190, and laminated films obtained by laminating the print, and the packaging materials and containers prepared by using the laminated film; and the ink-receiving layer described in JP-A-2002-127596.

Hereinafter, the fiber containing the ultraviolet absorbent according to the present invention will be described. The fiber containing the ultraviolet absorbent according to the present invention may be a fiber of any kind of polymer, as long as it contains the compound represented by any one of formulae (4) and (B-Ia) above. Examples thereof include the polyester fibers described in JP-A-5-117508, JP-A-7-119036, JP-A-7-196631, JP-A-8-188921, JP-A-10-237760, JP-A-2000-54287, JP-A-2006-299428, and JP-A-2006-299438; the polyphenylene sulfide fibers described in JP-A-2002-322360 and JP-A-2006-265770; the polyamide fibers described in JP-A-7-76580, JP-A-2001-348785, JP-A-2003-41434, and JP-A-2003-239136; the epoxy fibers described in WO 03/2661 pamphlet; the aramide fibers described in JP-A-10-251981; the polyurethane fibers described in JP-A-6-228816; and the cellulosic fibers described in JP-T-2005-517822.

The fiber containing the ultraviolet absorbent according to the present invention may be prepared by any method. Examples of the method include the method, as described in JP-A-6-228818, of processing a polymer previously containing the compound represented by any one of formulae (4) and (B-Ia) above into fiber, and the methods, as described,

for example, in JP-A-5-9870, JP-A-8-188921, and JP-A-10-1587, of processing a material processed in a fiber form with a solution containing the compound represented by any one of formulae (4) and (B-Ia) above. As described in JP-A-2002-212884 and JP-A-2006-16710, the fiber may be prepared by using a supercritical fluid.

The fiber containing the ultraviolet absorbent according to the present invention can be used in various applications. Examples thereof include the clothing described in JP-A-5-148703; the backing described in JP-A-2004-285516; the underwear described in JP-A-2004-285517; the blanket described in JP-A-2003-339503; the hosiery described in JP-A-2004-11062; the synthetic leather described in JP-A-11-302982; the moth-repellent mesh sheet described in JP-A-7-289097; the mesh sheet for construction described in JP-A-10-1868; the carpet described in JP-A-5-256464; the moisture-permeable water-repellent sheet described in JP-A-5-193037; the nonwoven fabric described in JP-A-6-1 14991; the ultrafine fiber described in JP-A-11-247028; the fibrous sheet described in JP-A-2000-144583; the refreshing clothing described in JP-A-5-148703; the moisture-permeable water-repellent sheet described in JP-A-5-193037; the flame-resistant synthetic suede cloth structure described in JP-A-7-18584; the resin tarpaulin described in JP-A-8-41785; the filming agent, external wall material, and agricultural greenhouse described in JP-A-8-193136; the net and mesh for construction described in JP-A-8-269850; the filter substrate described in JP-A-8-284063; the stainproof filming agent described in JP-A-9-57889; the mesh fabric and land net described in JP-A-9-137335; the underwater net described in JP-A-10-165045; the ultrafine fibers described in JP-A-11-247027 and 11-247028; the textile fiber described in JP-A-7-310283 and JP-T-2003-528974; the air-bag base cloth described in JP-A-2001-30861; and the ultraviolet-absorbing fiber products described in JP-A-7-324283, JP-A-8-20579, and JP-A-2003-147617.

Hereinafter, the construction material containing the ultraviolet absorbent according to the present invention will be described. The construction material containing the ultraviolet absorbent according to the present invention may be a construction material of any kind of polymer, as long as it contains the compound represented by any one of formulae (4) and (B-Ia) above. Examples thereof include the vinyl chloride-based material described in JP-A-10-6451; the olefinic-based material described in JP-A-10-16152; the polyester-based material described in JP-A-2002-161158; the polyphenylene ether-based material described in JP-A-2003-49065; and the polycarbonate-based material described in JP-A-2003-160724.

The construction material containing the ultraviolet absorbent according to the present invention may be prepared by any method. Examples of the method include the method, as described in JP-A-8-269850, of forming a material containing the compound represented by any one of formulae (4) and (B-Ia) above into a desired shape; the methods, as described, for example, in JP-A-10-205056, of forming a laminate of a material containing the compound represented by any one of formulae (4) and (B-Ia) above; the methods, as described, for example, in JP-A-8-151457, of forming a coated layer containing the compound represented by any one of formulae (4) and (B-Ia) above; and the methods, as described, for example, in JP-A-2001-172531, of forming it by coating a paint containing the compound represented by any one of formulae (4) and (B-Ia) above.

The construction material containing the ultraviolet absorbent according to the present invention can be used in various applications. Examples thereof include the external construction materials described in JP-A-7-3955, JP-A-8-151457, and JP-A-2006-266042; the wood structure for construction described in JP-A-8-197511; the roofing material for construction described in JP-A-9-183159; the antimicrobial construction material described in JP-A-11-236734; the base construction material described in JP-A-10-205056; the antifouling construction material described in JP-A-11-300880; the flame-resistant material described in JP-A-2001-9811; the ceramic construction material described in JP-A-2001-172531; the decorative construction material described in JP-A-2003-328523; the paints for construction described in JP-A-2002-226764; the facing materials described in JP-A-10-6451, JP-A-10-16152, and JP-A-2006-306020; the construction net described in JP-A-8-269850; the moisture-permeable water-repellent sheet for construction described in JP-A-9-277414; the mesh sheet for construction described in JP-A-10-1868; the construction film described in JP-A-7-269016; the decorative film described in JP-A-2003-211538; the coating materials for construction described in JP-A-9-239921, JP-A-9-254345, and JP-A-10-44352; the adhesive composition for construction described in JP-A-8-73825; the civil work construction structure described in JP-A-8-207218; the pathway coating material described in JP-A-2003-82608; the sheet-shaped photocuring resin described in JP-A-2001-139700; the wood-protecting paint described in JP-A-5-253559; the push-switch cover described in JP-A-2005-2941780; the bond-sheeting agent described in JP-A-9-183159; the base construction material described in JP-A-10-44352; the wall paper described in JP-A-2000-226778; the decorative polyester film described in JP-A-2003-211538; the decorative polyester film for molding described in JP-A-2003-211606; and the flooring material described in JP-A-2004-3191.

Hereinafter, the recording medium containing the ultraviolet absorbent according to the present invention will be described. The recording medium containing the ultraviolet absorbent according to the present invention may be any medium, as long as it contains the compound represented by any one of formulae (4) and (B-Ia) above. Examples thereof include the inkjet recording media described in JP-A-9-309260, JP-A-2002-178625, JP-A-2002-212237, JP-A-2003-266926, JP-A-2003-266927, and JP-A-2004-181813; the image-receiving medium for thermal transfer ink described in JP-A-8-108650; the image-receiving sheet for sublimation transfer described in JP-A-10-203033; the image-recording medium described in JP-A-2001-249430; the heat-sensitive recording medium described in JP-A-8-258415;

the reversible heat-sensitive recording media described in JP-A-9-95055, JP-A-2003-145949, and JP-A-2006-167996; and the information-photorecording medium described in JP-A-2002-367227.

Hereinafter, the image display device containing the ultraviolet absorbent according to the present invention will be described. The image display device containing the ultraviolet absorbent according to the present invention may be any device, as long as it contains the compound represented by any one of formulae (4) and (B-Ia) above. Examples thereof include the image display device employing an electrochromic element described in JP-A-2006-301268; the image display device of so-called electronic paper described in JP-A-2006-293155; the plasma display described in JP-A-9-306344; and the image display device employing an organic EL element described in JP-A-2000-223271. The ultraviolet absorbent according to the present invention may be contained, for example, in the ultraviolet-absorbing layer formed in the laminated structure described in JP-A-2000-223271 or in a suitable part such as the circularly polarizing plate described, for example, in JP-A-2005-189645.

Hereinafter, the solar cell cover containing the ultraviolet absorbent according to the present invention will be described. The solar cell according to the present invention may be any kind of solar cell such as crystalline silicon solar cell, amorphous silicon solar cell, or dye-sensitized solar cell. As described in JP-A-2000-174296, a cover material has been used as a part for providing a crystalline silicon solar cell or an amorphous silicon solar cell with antifouling property, impact resistance, and durability. As described in JP-A-2006-282970, dye-sensitized solar batteries, which employ a metal oxide-based semiconductor that is activated by excitation of light (in particular, ultraviolet light) as its electrode material, have a problem of the photosensitizer colorant adsorbed being decomposed and thus the photovoltaic efficiency gradually declining, and for that reason, installation of an additional ultraviolet-absorbing layer was proposed.

The solar cell cover containing the ultraviolet absorbent according to the present invention may be a cover of any kind of polymer. Examples of the polymer include the polyester described in JP-A-2006-310461; the thermosetting transparent resin described in JP-A-2006-257144; the $\alpha$-olefin polymer described in JP-A-2006-210906; the polypropylene described in JP-A-2003-168814; the polyether sulfone described in JP-A-2005-129713; the acrylic resin described in JP-A-2004-227843; and the transparent fluorine resin described in JP-A-2004-168057.

The solar cell cover containing the ultraviolet absorbent according to the present invention may be prepared by any method. For example, the ultraviolet-absorbing layer described in JP-A-11-40833 may be formed; the layers respectively containing the ultraviolet absorbent may be laminated, as described in JP-A-2005-129926; it may be contained in the filler layer resin, as described in JP-A-2000-91611; or a film may be formed, together with the ultraviolet absorbent-containing polymer described in JP-A-2005-346999.

The solar cell cover containing the ultraviolet absorbent according to the present invention may be in any form. Examples thereof include the film and sheet described in JP-A-2000-91610 and JP-A-11-261085; the laminate film described, for example, in JP-A-11-40833; and the cover glass structure described in JP-A-11-214736. The ultraviolet absorbent may be contained in the sealer described in JP-A-2001-261904.

Other examples of applications include the illumination light source covers described in JP-A-8-2000-67629, and JP-A-2005-353554; the synthetic leathers described in JP-A-5-272076 and JP-A-2003-239181; the sport goggle described in JP-A-2006-63162; the deflection lens described in JP-A-2007-93649; the hard-coat film for various plastic products described in JP-A-2001-214121, JP-A-2001-214122, JP-A-2001-315263, JP-A-2003-206422, JP-A-2003-25478, JP-A-2004-137457, and JP-A-2005-132999; the hard-coat film for bonding on external window described in JP-A-2002-36441; the window film described in JP-A-10-250004; the high-definition antiglare hard-coat film described in JP-A-2002-36452; the antistatic hard-coat film described in JP-A-2003-39607; the permeable hard-coat film described in JP-A-2004-114355; the antiforgery recoding media described in JP-A-2002-113937; the turf purpura-preventing agent described in JP-A-2002-293706; the resin film/sheet-bonding sealant described in JP-A-2006-274179; the optical parts described in JP-A-2005-326761; the rubber-coating agent described in JP-A-2006-335855; the agricultural covering materials described in JP-A-10-34841 and JP-A-2002-114879; the color candles described in JP-T-2004-532306 and JP-T-2004-530024; the cloth-rinsing agent composition described in JP-T-2004-525273; the laminated glass described in JP-A-10-194796; the prism sheet described in JP-A-10-287804; the protective layer transfer sheet described in JP-A-2000-71626; the photocuring resin product described in JP-A-2001-139700; the flooring sheet described in JP-A-2001-159228; the water droplet-repellent and heat wave-shielding glass plate described in JP-A-2002-127310; the light-blocking printing label described in JP-A-2002-189415; the fuel cup described in JP-A-2002-130591; the articles with hard-coat film described in JP-A-2002-307619; the intermediate transfer recording medium described in JP-A-2002-307845; the synthetic hair described in JP-A-2006-316395; the low-temperature heat-shrinkable films for label described in WO 99/29490 pamphlet and JP-A-2004-352847; the fishing goods described in JP-A-2000-224942; the micro beads described in JP-A-8-208976; the precoated metal plate described in JP-A-8-318592; the thin film described in JP-A-2005-504735; the heat-shrinkable film described in JP-A-2005-105032; the in-mold molding label described in JP-A-2005-37642; the projection screen described in JP-A-2005-55615; the decorative sheets described in JP-A-9-300537, JP-A-2000-25180, JP-A-2003-19776, and JP-A-2005-74735; the hot-melt adhesive described in JP-A-2001-207144; the adhesives described in JP-T-2002-543265, JP-T-2002-543266 and U.S. Patent No. 6,225,384; the electrodeposition coat and the basecoat described in JP-A-2004-352783; the wood surface-protecting agent described

in JP-A-7-268253; the light-controlling materials, light-controlling films, and light-controlling glasses described in JP-A-2003-253265, JP-A-2005-105131, JP-A-2005-300962, and Japanese Patent No. 3915339; the moth-repellent lamp described in JP-A-2005-304340; the touch panel described in JP-A-2005-44154; the sealant for bonding resin film sheet described in JP-A-2006-274197; the polycarbonate film coating material described in JP-A-2006-89697; the optical fiber tape described in JP-A-2000-231044; and the solid wax described in JP-T-2002-527559.

Hereinafter, the method of evaluating the light stability of the polymer material will be described. Preferable methods of evaluating the light stability of the polymer material are described, for example, in "Methods for Improving the Photostability of Polymers" (CMC Publishing, 2000) p. 85 to 107; "Basis and Physical Properties of High Functional Coatings" (CMC Publishing, 2003), p. 314 to 359; "Durability of Polymer Materials and Composite Material Products" (CMC Publishing, 2005); "Elongation of Lifetime of Polymer Materials and Environmental Measures" (CMC Publishing, 2000); H. Zweifel Ed., "Plastics Additives Handbook, 5th Edition" (Hanser Publishers), p. 238 to 244; and Tadahiko Kutsura, "Basic Seminar 2. Science of Plastic Packaging Container" (Society of packaging Science & Technology, Japan, 2003), Chapter 8.

In addition, the light stability in each application can be evaluated by the following known evaluation methods.

The photodegradation of polymer materials can be determined by the method described in JIS-K7105:1981, JIS-K7101:1981, JIS-K7102:1981, JIS-K7219:1998, JIS-K7350-1:1995, JIS-K7350-2:1995, JIS-K7350-3:1996, JIS-K7350-4:1996 or a method referring to those.

The light stability in the packaging or container application can be determined by the method of JIS-K7105 and a method referring to that. Typical examples thereof include the light transmittance and transparency evaluation of the bottle body and the functional test of the bottle content after ultraviolet irradiation by using a xenon light source described in JP-A-2006-298456; the haze value evaluation after xenon lamp irradiation described in JP-A-2000-238857; the haze value evaluation by using a halogen lamp as the light source described in JP-A-2006-224317; the yellowing evaluation after mercury lamp irradiation by using a blue wool scale described in JP-A-2006-240734; the haze value evaluation by using Sunshine Weather Meter and the visual observation of color development described in JP-A-2005-105004 and JP-A-2006-1568; the ultraviolet light transmittance evaluation described in JP-A-7-40954, JP-A-8-151455, JP-A-10-168292, JP-A-2001-323082, and JP-A-2005-146278; the ultraviolet-blocking evaluation described in JP-A-9-48935 and 9-142539; the light transmittance evaluation described in JP-A-9-241407, JP-A-2004-243674, JP-A-2005-320408, JP-A-2005-305745, and JP-A-2005-156220; the evaluation of the viscosity of the ink in ink container described in JP-A-2005-178832; the light transmittance evaluation, the visual observation of the container sample and the color difference ΔE evaluation after sunlight irradiation described in JP-A-2005-278678; the ultraviolet light transmittance evaluation, the light transmittance evaluation, and the color difference evaluation after white fluorescent lamp irradiation described in JP-A-2004-51174; the light transmittance evaluation, the haze value evaluation, and the color tone evaluation described in JP-A-2004-285189; the yellowness index evaluation described in JP-A-2003-237825; the light-blocking evaluation and the brightness evaluation by using the color difference Formula of the L*a*b* color system described in JP-A-2003-20966; the yellowing evaluation by using the color difference ΔEa*b* of a sample after irradiation of xenon lights of different in wavelength described in JP-A-2002-68322; the ultraviolet absorbance evaluation after ultraviolet light irradiation described in JP-A-2001-26081; the film tensile elongation test after photoirradiation by using Sunshine Weather Meter described in JP-A-10-298397; the antimicrobial evaluation after photoirradiation in a xenon weather meter described in JP-A-10-237312; the evaluation of discoloration of a package content after fluorescent lamp irradiation described in JP-A-9-239910; the evaluation of oil peroxide value and color tone after fluorescent lamp irradiation of a salad oil-filled bottle described in JP-A-9-86570; the evaluation of the difference in absorbance after chemical lamp irradiation described in JP-A-8-301363; the evaluation of surface glossiness retention rate and appearance after photoirradiation by using Sunshine Weather Meter described in JP-A-8-208765; the evaluation of color difference and bending strength after photoirradiation by using Sunshine Weather-O-meter described in JP-A-7-216152; the light-blocking rate evaluation and the evaluation of the peroxide generated in kerosene described in JP-A-5-139434.

The long-term durability thereof when the polymer material is used in the coating and coat film applications can be evaluated according to the method of JIS-K5400, JIS-K5600-7-5:1999, JIS-K5600-7-6:2002, JIS-K5600-7-7:1999, JIS-K5600-7-8:1999, or JIS-K8741 or a method referring to those. Typical examples thereof include the evaluation of the color density, the color difference ΔEa*b* in the CIE L*a*b* color coordinates, and the residual brilliance after photoirradiation in an xenon light-endurance test machine and an UVCON apparatus described in JP-T-2000-509082; the absorbance evaluation after photoirradiation on a film placed on a quartz slide in an xenon arc light-endurance test machine and the evaluation of the color density and the color difference ΔEa*b* in the CIE L*a*b* color coordinates after fluorescent or UV lamp irradiation on wax described in JP-T-2004-520284; the color tone evaluation after photoirradiation in a Metalweather weather-resistance test machine described in JP-A-2006-160847; the evaluation of brilliance retention rate after photoirradiation test by using a metal HID lamp, the evaluation by using color difference ΔEa*b*, and the evaluation of glossiness after photoirradiation by a sunshine carbon arc light source described in JP-A-2005-307161; the evaluation by using color difference ΔEa*b* after photoirradiation in a Metalweather weather-resistance test machine, the brilliance retention rate evaluation, and the appearance evaluation described in JP-A-2002-69331; the brilliance

retention rate evaluation after photoirradiation by using Sunshine Weather-O-Meter described in JP-A-2002-38084; the evaluation by using the color difference ΔEa*b* after photoirradiation in a QUV weather-resistance test machine and the brilliance retention rate evaluation described in JP-A-2001-59068; the brilliance retention rate evaluation after photoirradiation by using Sunshine Weather-O-Meter described in JP-A-2001-115080, JP-A-6-49368, and JP-A-2001-262056; the evaluation of post-irradiation appearance after photoirradiation on a coated plate by using Sunshine Weather-O-Meter described in JP-A-8-324576, JP-A-9-12924, JP-A-9-169950, JP-A-9-241534, and JP-A-2001-181558; the evaluation of the brilliance retention rate and the fluctuation in brightness after photoirradiation by using Sunshine Weather-O-Meter described in JP-A-2000-186234; the evaluation of the appearance of the deteriorated coated film after dew cycle WOM photoirradiation on coated film described in JP-A-10-298493; the evaluation of the ultraviolet light transmittance of coated film described in JP-A-7-26177; the evaluation of the ultraviolet-blocking rate of coated film described in JP-A-7-3189 and JP-A-9-263729; the comparative evaluation of the period until the brilliance retention rate of the coated film declines to 80% by using Sunshine Weather-O-Meter as described in JP-A-6-1945; the evaluation of rusting after photoirradiation by using a Dewpanel Light Control Weather Meter described in JP-A-6-313148; the evaluation of the strength of a concrete to the coated formwork after external exposure described in JP-A-6-346022; the evaluation by using the color difference ΔEa*b* after external photoirradiation, the lattice adhesion test, and the surface appearance evaluation described in JP-A-5-185031; the brilliance retention rate evaluation after external photoirradiation described in JP-A-5-78606; and the evaluation of post-irradiation yellowing (ΔYI) by using a carbon arc light source described in JP-A-2006-63162.

The light stability when the polymer material is used in the ink application is determined by the method of JIS-K5701-1:2000, JIS-K7360-2, or ISO105-B02 or a method referring to those. Specific examples thereof include the evaluation of the color density and the measurement by the CIE L*a*b* color coordinates after photoirradiation by using an office fluorescent lamp or a discoloration tester described in JP-T-2006-514130; the electrophoretic evaluation after ultraviolet light irradiation by using an xenon arc light source described in JP-A-2006-22300; the print concentration evaluation with a xenon fade meter described in JP-A-2006-8811; the ink blurring evaluation by using a 100W chemical lamp described in JP-A-2005-23111; the evaluation of the dye residual ratio in the image-forming range by using a weather meter described in JP-A-2005-325150; the evaluation of print chalking and discoloration by using an Eye Super UV Tester described in JP-A-2002-127596; the evaluation of print by using the color difference ΔEa*b* in the CIE L*a*b* color coordinates after photoirradiation by a xenon fade meter described in JP-A-11-199808 and JP-A-8-108650; and the reflectance evaluation after photoirradiation by using a carbon arc light source described in JP-A-7-164729.

The light stability of the solar cell module can be determined according to the method of JIS-C8917:1998 or JIS-C8938:1995 or a method referring to those. Specific examples thereof include the I-V-measuring photovoltaic efficiency evaluation after photoirradiation by a xenon lamp light source having a sunlight-simulating compensation filter described in JP-A-2006-282970; and the evaluation of discoloration gray scale degree, color, and apparent adhesiveness after photoirradiation by using Sunshine Weather Meter or a fade mater described in JP-A-11-261085 and JP-A-2000-144583.

The light stability of fibers and fiber products can be evaluated according to the method of JIS-L1096:1999, JIS-A5905:2003, JIS-L0842, JIS-K6730, JIS-K7107, DIN75.202, SAEJ1885, SN-ISO-105-B02, or AS/NZS4399 or a method referring to those. Examples thereof include the ultraviolet light transmittance evaluation described in JP-A-10-1587, JP-A-2006-299428, and JP-A-2006-299438; the blue scale discoloration evaluation after photoirradiation by using a xenon light source or a carbon arc light source described in JP-A-6-228816, JP-A-7-76580, JP-A-8-188921, JP-A-11-247028, JP-A-11-247027, JP-A-2000-144583, JP-A-2002-322360, JP-A-2003-339503, and JP-A-2004-11062; the UV-blocking rate evaluation described in JP-A-2003-147617; the ultraviolet-blocking property evaluation described in JP-A-2003-41434; the blue scale discoloration evaluation after dry cleaning and after irradiation by using a carbon arc light source described in JP-A-11-302982; the evaluation of lightness index and color difference ΔE* according to chromaticness index after irradiation by using a Fade-O-meter described in JP-A-7-119036 and JP-A-10-251981; the tensile strength evaluation after photoirradiation by using a UV tester or Sunshine Weather Meter described in JP-A-9-57889, JP-A-9-137335, JP-A-10-1868, and JP-A-10-237760; the total transmission and strength retention evaluation described in JP-A-8-41785 and JP-A-8-193136; the ultraviolet protection factor (UPF) evaluation described in JP-T-2003-528974, JP-T-2005-517822, and JP-A-8-20579; the discoloration gray scale evaluation after irradiation by using a high-temperature fade meter described in JP-A-6-228818, JP-A-7-324283, JP-A-7-196631, and JP-A-7-18584; the appearance evaluation after external photoirradiation described in JP-A-7-289097; the evaluation of yellowness index (YI) and yellowing degree (ΔYI) after ultraviolet irradiation described in JP-A-7-289665; and the remission evaluation described in JP-T-2003-528974.

The light stability of the construction material can be evaluated according to the method of JIS-A1415:1999 or a method referring to that. Specific examples thereof include the surface color tone evaluation after photoirradiation by using Sunshine Weather-O-Meter described in JP-A-2006-266402; the appearance evaluation after irradiation by using a carbon arc light source, the post-irradiation appearance evaluation by using an Eye Super UV Tester, the post-irradiation absorbance evaluation, the post-irradiation chromaticity, the color difference evaluation, and the evaluation by using the

color difference ΔEa*b* of CIE L*a*b* color coordinates after photoirradiation by using a metal HID lamp light source, and brilliance retention rate evaluation described in JP-A-2004-3191 and JP-A-2006-306020; the evaluation of the change in haze value after photoirradiation by using Sunshine Weather Meter and the elongation retention rate after photoirradiation by using a tensile test machine described in JP-A-10-44352, JP-A-2003-211538, JP-A-9-239921, JP-A-9-254345, and JP-A-2003-211606; the evaluation of ultraviolet transmittance after solvent dip-coating and the visual evaluation of post-irradiation appearance by using an Eye Super UV Tester described in JP-A-2002-161158; the evaluation of brilliance change after a QUV test described in JP-A-2002-226764; the brilliance retention rate evaluation after irradiation by using Sunshine Weather-O-Meter described in JP-A-2001-172531; the evaluation by using the color difference ΔEa*b* after ultraviolet irradiation by using a black light blue fluorescent lamp described in JP-A-11-300880; the evaluation of post-irradiation adhesion retention rate and ultraviolet-blocking property by using a UVCON acceleration test machine described in JP-A-10-205056; the appearance evaluation, the total light transmittance evaluation, the haze change evaluation, and tensile shear adhesive strength evaluation after external exposure (JIS-A1410) described in JP-A-8-207218 and JP-A-9-183159; the evaluation of total light transmittance of the light in the entire wavelength range, the haze evaluation, and the yellowing degree evaluation after irradiation by using a xenon weather meter described in JP-A-8-151457; and the evaluation of yellowing degree (ΔYI) and ultraviolet absorbent residual ratio after irradiation by using Sunshine Weather-O-Meter described in JP-A-7-3955.

The light stability when the polymer material is used in the recording medium application can be evaluated according to the method of JIS-K7350 or a method referring to that. Specific examples thereof include the evaluation of the difference in base color in the printing unit after fluorescent lamp irradiation described in JP-A-2006-167996; the evaluation of image density residual rate after irradiation by using a xenon weather meter described in JP-A-10-203033 and JP-A-2004-181813; the evaluation of the change in reflection density after irradiation by using a xenon weather meter described in JP-A-2002-207845; the yellowing degree evaluation based on the L*a*b* evaluation system after irradiation by using a Santest CPS photodiscoloration tester described in JP-A-2003-266926; the post-irradiation discoloration evaluation by using a fade meter described in JP-A-2003-145949; the visual evaluation of post-irradiation discoloration by using a xenon fade meter described in JP-A-2002-212237; the color density retention rate evaluation after indoor sunlight irradiation and the post-irradiation color density retention rate evaluation by using a xenon weather meter described in JP-A-2002-178625; the evaluation of post-exposure C/N by using a fade meter described in JP-A-2002-367227; the fog density evaluation after fluorescent lamp irradiation described in JP-A-2001-249430; the optical reflection density evaluation and the erasability evaluation after irradiation by using a fluorescent lamp described in JP-A-9-95055; the evaluation of post-irradiation color difference ΔE* by using an Atlas fade meter described in JP-A-9-309260; the visual evaluation of post-irradiation discoloration by using a carbon arc fade meter described in JP-A-8-258415; the evaluation of the retention rate of organic EL element color-changing property described in JP-A-2000-223271; and the measurement and evaluation of organic EL display brightness after photoirradiation by a xenon discoloration tester described in JP-A-2005-189645.

Other evaluation methods include those of JIS-K7103 and ISO/DIS9050 or a method referring to those. Specific examples thereof include the appearance evaluation after irradiation of a polycarbonate coating film by a UV tester described in JP-A-2006-89697; the blue scale evaluation after irradiation of a synthetic hair with ultraviolet light described in JP-A-2006-316395; the evaluation of water contact angle on a test cloth after irradiation by using an accelerated weather-resistance test machine described in JP-A-2006-335855; the evaluation of a visual image projected on a projection screen after irradiation by using a weather-resistance test machine described in JP-A-2005-55615; the evaluation of the deterioration of sample surface and visual evaluation of appearance after irradiation by using a Sunshine Weather Meter or a metal weather meter described in JP-A-2005-74735; the visual evaluation of appearance after photoirradiation by using a metal lamp reflector described in JP-A-2005-326761; the evaluation of the light transmittance of bottle label described in JP-A-2002-189415 and JP-A-2004-352847; the evaluation of polypropylene deterioration after irradiation by using a xenon weather meter under humid condition described in JP-A-2003-19776; the evaluation of the deterioration of a hard-coat film by using Sunshine Weather-O-Meter, and the deterioration evaluation, the hydrophilicity evaluation and the abrasion resistance evaluation of the base material described in JP-A-2002-36441 and JP-A-2003-25478; the evaluation of the gray scale color difference of synthetic leather after irradiation by using a xenon lamp light described in JP-A-2003-239181; the evaluation of liquid crystal device characteristics after irradiation by using a mercury lamp described in JP-A-2003-253265; the post-irradiation adhesiveness evaluation by using Sunshine Weather-O-Meter described in JP-A-2002-307619; the evaluation of the degree of turf purpura described in JP-A-2002-293706; the evaluation of ultraviolet light transmittance and tensile strength after irradiation by using a xenon arc light source described in JP-A-2002-114879; the concrete adhesion velocity evaluation described in JP-A-2001-139700; the appearance evaluation and the coated-film adhesiveness evaluation after irradiation by using Sunshine Weather-O-Meter described in JP-A-2001-315263; the evaluation of post-irradiation yellowing degree and adhesiveness by using a carbon arc light source described in JP-A-2001-214121 and JP-A-2001-214122; the adhesiveness evaluation by using a ultraviolet fade meter described in JP-A-2001-207144; the evaluation of insect-repellency when illumination is turned on described in JP-A-2000-67629; the evaluation of the laminated glass yellowing degree (ΔYI) by using an Eye Super UV Tester described

in JP-A-10-194796; the evaluation of the surface appearance and brilliance retention rate after QUV irradiation and humidity-resistance tests described in JP-A-8-318592; the evaluation of color difference over time by using a dew panel light control weather meter described in JP-A-8-208976; the evaluation of the glossiness (DI) and the yellowness index (YI) in the wood base-coated state after irradiation by using a xenon Weather-O-meter described in JP-A-7-268253; the ultraviolet absorbance evaluation after repeated processing of UV irradiation and storage in dark described in JP-T-2002-5443265 and JP-T-2002-543266; and the evaluation of dye discoloration color difference ΔE after ultraviolet irradiation described in JP-T-2004-532306.

The ultraviolet absorbent composition according to the present invention is superior in ultraviolet-absorbing capacity in the UV-A and UV-B ranges, and also advantageously has no absorption in the visible range. Further, the usage of particular ultraviolet absorbent enables to provide a high compatibility to a polymer, thereby preventing bleed out, and also to provide a high solubility to various solvents, thereby improving operation efficiency.

EXAMPLES

The present invention will be described in more detail based on the following examples, but the invention is not intended to be limited thereby.

Example 1

(Preparation of ultraviolet absorbent composition)

Ultraviolet absorbent composition samples 1 to 45 in combination of ultraviolet absorbents A and B were prepared, as shown in the following Tables 4 and 5. In the following Tables 4 and 5, the ratio of the ultraviolet absorbents A to B (A:B) is expressed by molar ratio.

[Table 4]

Table 4

| Sample | Ultraviolet absorbent A | Ultraviolet absorbent B | A:B | Formula of Ultraviolet absorbent B | Classification of Ultraviolet absorbent B | Remarks |
|---|---|---|---|---|---|---|
| 1 | S-06 | II-2 | 1:1 | (IIa), (IIb) | B-(1) | This invention |
| 2 | S-06 | II-3 | 1:1 | (IIa), (IIb) | B-(1) | This invention |
| 3 | S-06 | II-4 | 1:1 | (IIa), (IIb) | B-(1) | This invention |
| 4 | 82 | II-4 | 1:4 | (IIa), (IIb) | B-(1) | This invention |
| 5 | S-01 | II-5 | 1:1 | (IIa), (IIb) | B-(1) | This invention |
| 6 | S-01 | II-6 | 1:1 | (IIa), (IIb) | B-(1) | This invention |
| 7 | S-01 | II-8 | 1:1 | (IIa), (IIb) | B-(1) | This invention |
| 8 | S-01 | II-10 | 1:1 | (IIa), (IIb) | B-(1) | This invention |
| 9 | S-01 | II-1 | 1:1 | (IIa), (IIb) | B-(1) | This invention |
| 10 | S-03 | II-1 | 1:1 | (IIa), (IIb) | B-(1) | This invention |
| 11 | S-06 | II-1 | 1:1 | (IIa), (IIb) | B-(1) | This invention |
| 12 | S-09 | II-1 | 1:1 | (IIa), (IIb) | B-(1) | This invention |
| 13 | S-10 | II-1 | 1:1 | (IIa), (IIb) | B-(1) | This invention |
| 14 | S-11 | II-1 | 1:1 | (IIa), (IIb) | B-(1) | This invention |
| 17 | 1 | II-1 | 1:4 | (IIa), (IIb) | 8-(1) | This invention |
| 18 | 11 | II-1 | 1:4 | (IIa), (IIb) | B-(1) | This invention |
| 19 | 12 | II-1 | 1:4 | (IIa), (IIb) | B-(1) | This invention |
| 20 | 81 | II-1 | 1:4 | (IIa), (IIb) | B-(1) | This invention |

(continued)

| Sample | Ultraviolet absorbent A | Ultraviolet absorbent B | A:B | Formula of Ultraviolet absorbent B | Classification of Ultraviolet absorbent B | Remarks |
|---|---|---|---|---|---|---|
| 21 | 82 | II-1 | 1:4 | (IIa), (IIb) | B-(1) | This invention |
| 22 | S-01 | III-1 | 1:1 | (III) | B-(1) | This invention |
| 24 | 87 | III-1 | 1:2 | (III) | B-(1) | This invention |
| 25 | 88 | III-3 | 1:2 | (III) | B-(2) | This invention |
| 26 | S-01 | IV-1 | 1:1 | (IV) | B-(1) | This invention |
| 27 | S-01 | IV-2 | 1:1 | (IV) | B-(1) | This invention |
| 28 | 82 | IV-3 | 1:3 | (IV) | B-(2) | This invention |
| 29 | S-01 | IV-3 | 1:1 | (IV) | B-(2) | This invention |
| 30 | S-01 | IV-4 | 1:1 | (IV) | B-(2) | This invention |

[Table 5]

Table 5 (Continued to Table 4)

| Sample | Ultraviolet absorbent A | Ultraviolet absorbent B | A:B | Formula of Ultraviolet absorbent B | Classification of Ultraviolet absorbent B | Remarks |
|---|---|---|---|---|---|---|
| 32 | 82 | IV-2 | 1:4 | (IV) | B-(1) | This invention |
| 33 | S-01 | None | 1:0 | - | - | Comparative example |
| 34 | None | II-1 | 0:1 | (IIa), (IIb) | B-(1) | Comparative example |
| 35 | S-01 | IV-1 | 1:1 | (IV) | B-(1) | Comparative example |
| 36 | II-2 | II-1 | 1:1 | (IIa), (IIb) | B-(1) | Comparative example |
| 37 | IV-2 | II-1 | 1:1 | (IIa), (IIb) | B-(1) | Comparative example |
| 38 | II-3 | II-1 | 1:1 | (IIa), (IIb) | B-(1) | Comparative example |
| 39 | II-4 | II-1 | 1:1 | (IIa), (IIb) | B-(1) | Comparative example |
| 40 | III-1 | II-1 | 1:1 | (IIa), (IIb) | B-(1) | Comparative example |
| 41 | U-1 | II-1 | 1:1 | (IIa), (IIb) | B-(1) | Comparative example |
| 42 | U-1 | IV-3 | 1:1 | (IV) | B-(2) | Comparative example |
| 43 | U-1 | III-3 | 1:1 | (III) | B-(2) | Comparative example |

(continued)

| Sample | Ultraviolet absorbent A | Ultraviolet absorbent B | A:B | Formula of Ultraviolet absorbent B | Classification of Ultraviolet absorbent B | Remarks |
|---|---|---|---|---|---|---|
| 44 | S-01 | U-2 | 1:1 | - | B-(2) | Comparative example |
| 45 | 82 | U-2 | 1:1 | - | B-(2) | Comparative example |

The absorption maximum wavelength, the half value width, and the rate of the absorbance at 320 nm relative to that at the absorption maximum wavelength of each compound used in preparation of the samples 1 to 45 were determined by preparing a solution in ethyl acetate of each compound at a concentration of approximately $5 \times 10^{-5}$ $mol{\cdot}dm^{-3}$ and measuring the UV spectrum of the solution in a 1-cm quartz cell by using a spectrophotometer UV-3600 (trade name) manufactured by Shimadzu Corporation. The absorption maximum wavelength, the half value width, and the rate of the absorbance at 320 nm relative to that at the absorption maximum wavelength were calculated form the spectral chart obtained. Results are summarized in the following Tables 6 and 7.

[Table 6]

Table 6

| Compound | Absorption maximum wavelength (nm) | Half value width (nm) | Absorbance at 320 nm relative to that at the absorption maximum wavelength (%) | Classification of Ultraviolet absorbent |
|---|---|---|---|---|
| S-01 | 376 | 38 | 10 | Ultraviolet absorbent A |
| S-03 | 376 | 38 | 9 | Ultraviolet absorbent A |
| S-06 | 381 | 37 | 9 | Ultraviolet absorbent A |
| S-17 | 351 | 39 | 20 | Ultraviolet absorbent A |
| S-18 | 361 | 38 | 25 | Ultraviolet absorbent A |
| 1 | 38 0 | 29 | 11 | Ultraviolet absorbent A |
| 11 | 381 | 27 | 7 | Ultraviolet absorbent A |
| 12 | 382 | 28 | 15 | Ultraviolet absorbent A |
| 81 | 381 | 26 | 7 | Ultraviolet absorbent A |
| 82 | 383 | 28 | 14 | Ultraviolet absorbent A |
| 87 | 383 | 27 | 15 | Ultraviolet absorbent A |
| 88 | 383 | 26 | 14 | Ultraviolet absorbent A |

[Table 7]

Table 7 (Continued to Table 6)

| Compound | Absorption maximum wavelength (nm) | Half value width (nm) | Absorbance at 320 nm relative to that at the absorption maximum wavelength (%) | Classification of Ultraviolet absorbent |
|---|---|---|---|---|
| II-1 | 342 | 86 | 82 | Ultraviolet absorbent B-(2) |

(continued)

| Compound | Absorption maximum wavelength (nm) | Half value width (nm) | Absorbance at 320 nm relative to that at the absorption maximum wavelength (%) | Classification of Ultraviolet absorbent |
|---|---|---|---|---|
| II-2 | 350 | 97 | 83 | Ultraviolet absorbent B-(2) |
| II-3 | 339 | 82 | 77 | Ultraviolet absorbent B-(2) |
| II-4 | 346 | 83 | 83 | Ultraviolet absorbent B-(2) |
| II-5 | 343 | 57 | 86 | Ultraviolet absorbent B-(2) |
| II-6 | 337 | 79 | 79 | Ultraviolet absorbent B-(2) |
| II-7 | 349 | 88 | 87 | Ultraviolet absorbent B-(2) |
| II-8 | 341 | 78 | 69 | Ultraviolet absorbent B-(2) |
| II-9 | 302 | 90 | 71 | Ultraviolet absorbent B-(1) |
| II-10 | 349 | 86 | 84 | Ultraviolet absorbent B-(2) |
| III-1 | 346 | 76 | 58 | Ultraviolet absorbent B-(2) |
| III-2 | 287 | 75 | 48 | Ultraviolet absorbent B-(1) |
| III-3 | 288 | 78 | 50 | Ultraviolet absorbent B-(1) |
| III-4 | 274 | 47 | 41 | Ultraviolet absorbent B-(1) |
| III-5 | 348 | 80 | 61 | Ultraviolet absorbent B-(2) |
| IV-1 | 349 | 35 | 27 | Ultraviolet absorbent B-(2) |
| IV-2 | 346 | 61 | 50 | Ultraviolet absorbent B-(2) |
| IV-3 | 286 | 69 | 63 | Ultraviolet absorbent B-(1) |
| IV-4 | 290 | 95 | 72 | Ultraviolet absorbent B-(1) |
| IV-5 | 287 | 67 | 64 | Ultraviolet absorbent B-(1) |
| IV-6 | 288 | 70 | 65 | Ultraviolet absorbent B-(1) |
| IV-7 | 282 | 72 | 75 | Ultraviolet absorbent B-(1) |

The compounds of the ultraviolet absorbent A used in preparation of the samples 1 to 45 each were a compound having a molar extinction coefficient at the absorption maximum wavelength of 20,000 or more.

[Chemical formula 47]

(U-1)

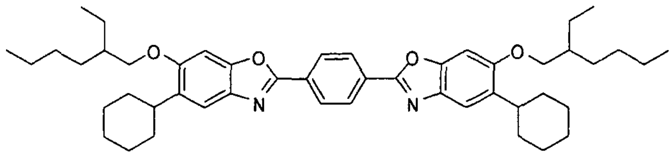

(U-2)

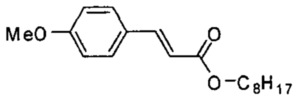

The compound (U-1) is a long-wavelength ultraviolet absorbent described in JP-A-2002-53824. The compound (U-2) corresponds to the aforementioned cinnamic acid ester-based ultraviolet absorbent B. The results of the absorption maximum wavelength, the half value width, and the rate of absorbance at 320 nm relative to that at the absorption maximum wavelength of each of the compound (U-1) and the compound (U-2) are shown in Table 8 set forth below.

[Table 8]

Table 8

| Compound | Absorption maximum wavelength (nm) | Half value width (nm) | Absorbance at 320 nm relative to that at the absorption maximum wavelength (%) | Classification of Ultraviolet absorbent |
|---|---|---|---|---|
| U-1 | 371 | 54 | 25 | Ultraviolet absorbent A |
| U-2 | 307 | 51 | 63 | Ultraviolet absorbent B-(1) |

(Evaluation)

Five (5) mg of each ultraviolet absorbent composition sample prepared was dissolved in 100 ml of ethyl acetate; and the absorbances of the solution in a 1-cm quartz cell at measurement wavelengths of 300 nm, 350 nm, 380 nm and 400 nm were measured respectively in a spectrophotometer UV-3600 (trade name) manufactured by Shimadzu Corporation. When the absorbance at a measurement wavelength of 300 nm, 350 nm or 380 nm was 1 or more, the sample was designated as "o", while, when it was less than 1, the sample was designated as "×". In addition, when the absorbance at 400 nm was less than 0.2, the sample was designated as "o", while, when it was 0.2 or more, the sample was designated as "×". Further, when apparent color development was visually recognized, absorption wave form was evaluated on scale of "×" to "◎" (namely, four ranks of "×", "Δ", "○", and "◎"), providing that the case where it was apparent that the light in the entire ultraviolet range was not completely absorbed was designated as "×", and the case where the light in the entire ultraviolet range was completely absorbed is designated as "◎". The results are shown in Tables 9 and 10.

[Table 9]

Table 9

| Sample | 300 nm | 350 nm | 380 nm | 400 nm | Evaluation | Remarks |
|---|---|---|---|---|---|---|
| 1 | ○ | ○ | ○ | ○ | ◎ | This invention |
| 2 | ○ | ○ | ○ | ○ | ◎ | This invention |
| 3 | ○ | ○ | ○ | ○ | ◎ | This invention |
| 4 | ○ | ○ | ○ | ○ | ◎ | This invention |

(continued)

| Sample | 300 nm | 350 nm | 380 nm | 400 nm | Evaluation | Remarks |
|---|---|---|---|---|---|---|
| 5 | ○ | ○ | ○ | ○ | ◎ | This invention |
| 6 | ○ | ○ | ○ | ○ | ◎ | This invention |
| 7 | ○ | ○ | ○ | ○ | ◎ | This invention |
| 8 | ○ | ○ | ○ | ○ | ◎ | This invention |
| 9 | ○ | ○ | ○ | ○ | ◎ | This invention |
| 10 | ○ | ○ | ○ | ○ | ◎ | This invention |
| 11 | ○ | ○ | ○ | ○ | ◎ | This invention |
| 12 | ○ | ○ | ○ | ○ | ◎ | This invention |
| 13 | ○ | ○ | ○ | ○ | ◎ | This invention |
| 14 | ○ | ○ | ○ | ○ | ◎ | This invention |
| 17 | ○ | ○ | ○ | ○ | ○ | This invention |
| 18 | ○ | ○ | ○ | ○ | ○ | This invention |
| 19 | ○ | ○ | ○ | ○ | ◎ | This invention |
| 20 | ○ | ○ | ○ | ○ | ◎ | This invention |
| 21 | ○ | ○ | ○ | ○ | ◎ | This invention |
| 22 | ○ | ○ | ○ | ○ | ◎ | This invention |
| 24 | ○ | ○ | ○ | ○ | ◎ | This invention |
| 25 | ○ | ○ | ○ | ○ | ◎ | This invention |
| 26 | ○ | ○ | ○ | ○ | ◎ | This invention |
| 27 | ○ | ○ | ○ | ○ | ◎ | This invention |
| 28 | ○ | ○ | ○ | ○ | ◎ | This invention |
| 29 | ○ | ○ | ○ | ○ | ◎ | This invention |
| 30 | ○ | ○ | ○ | ○ | ◎ | This invention |

[Table 10]

Table 10 (Continued to Table 9)

| Sample | 300 nm | 350 nm | 380 nm | 400 nm | Evaluation | Remarks |
|---|---|---|---|---|---|---|
| 32 | ○ | ○ | ○ | ○ | ◎ | This invention |
| 33 | × | × | ○ | ○ | × | Comparative example |
| 34 | ○ | ○ | × | ○ | Δ | Comparative example |
| 35 | × | ○ | ○ | ○ | Δ | Comparative example |
| 36 | ○ | ○ | ○ | × | × | Comparative example |
| 37 | ○ | ○ | × | ○ | × | Comparative example |
| 38 | ○ | ○ | ○ | × | × | Comparative example |
| 39 | ○ | ○ | ○ | × | × | Comparative example |
| 40 | × | ○ | ○ | × | × | Comparative example |
| 41 | ○ | ○ | ○ | ○ | ○ | Comparative example |
| 42 | ○ | ○ | ○ | ○ | ○ | Comparative example |

(continued)

| Sample | 300 nm | 350 nm | 380 nm | 400 nm | Evaluation | Remarks |
|---|---|---|---|---|---|---|
| 43 | ○ | ○ | ○ | ○ | ○ | Comparative example |
| 44 | ○ | ○ | ○ | ○ | ○ | Comparative example |
| 45 | ○ | ○ | ○ | ○ | ○ | Comparative example |

As shown in the results of Tables 9 and 10, when only the ultraviolet absorbent A was used, it was possible to shield the light in the long-wavelength ultraviolet range reliably and allow transmission of the light at 400 nm, but it was not possible to shield the light in the shorter-wavelength ultraviolet range at all (sample 33) (Evaluation "×"). When only the ultraviolet absorbent B was used, it was possible to completely shield the light in the short-wavelength ultraviolet range, but it was not possible to shield the light in the long-wavelength ultraviolet range (sample 34) (Evaluation "Δ"). In addition, when an ultraviolet absorbent showing less than 30% of absorbance at 320 nm of the absorbance at the absorption maximum wavelength was used as the ultraviolet absorbent B, it was not enough to shield the light in the short-wavelength ultraviolet range (sample 35). When an ultraviolet absorbent A having an absorption maximum wavelength of less than 350 nm or having a half value width of more than 50 nm was used, it was not possible to shield the light in the long-wavelength ultraviolet range, or the solution developed color, because it has absorption at 400 nm (samples 36 to 40) (Evaluation "×").

When the compound (U-1) that was a long-wavelength ultraviolet absorbent and was not defined in the present invention was used, it was possible to give good absorbing property and shield the light not only in the short-wavelength ultraviolet range, but also in the long-wavelength ultraviolet range (samples 41 to 43). However, these samples were inferior in compatibility as shown in the later-described Example 4. Further, when the compound (U-2) that was an example of the less preferable embodiment in the present invention was used, the compound exhibited such a good absorption and it was possible to shield the light not only in the short-wavelength ultraviolet range, but also in the long-wavelength ultraviolet range (samples 44 to 45). However, these samples were somewhat inferior in light fastness as shown in the later-described Example 2.

In contrast, with the ultraviolet absorbent composition according to the present invention, which contained the ultraviolet absorbent A having an absorption maximum wavelength of 350 nm or more and 400 nm or less and having a half value width of 50 nm or less and also the ultraviolet absorbent B showing 30% or more of absorbance at 320 nm of the absorbance at the absorption maximum wavelength, it was possible to shield the light in the entire ultraviolet range while keeping the absorbance at 400 nm lower (Evaluation "o"). Particularly, it has been made clear that when the ultraviolet absorbent represented by formula (4) or (B-Ia) was used as the ultraviolet absorbent A, the light in the short-wavelength ultraviolet range was efficiently absorbed (evaluation "◎"). In addition, when the compound 1, 11, 12, 81, 82, 87 or 88 was used as the ultraviolet absorbent A, it was possible to shield the light in the long-wavelength ultraviolet range sufficiently even when the ratio of the ultraviolet absorbent A was small.

Example 2

(Preparation of molded plates 101 to 109)

One (1) kg of a polymethyl methacrylate resin (PMMA) and 0.1 g of the composition sample 1 were agitated in a stainless steel tumbler for 1 hour. The mixture was melted and blended by a vent extruder at 230°C and extruded into pellets for molding by an ordinary method. The pellets were dried at 80°C for 3 hours, and then, molded into a molded plate 101 having a thickness of 3 mm by an injection molding machine.

Molded plates 102 to 105 were prepared in a similar manner to the molded plate 101, except that the composition sample 1 was replaced with the composition sample 4, 7, 16, or 18 in preparation of the molded plate 101.

Alternatively, molded plates 106 to 109 were prepared in a similar manner to the molded plate 101, except that the composition sample 1 was replaced with the composition sample 36, 39, 44 or 45 in preparation of the molded plate 101.

(Evaluation)

Each molded plate prepared was photoirradiated by a xenon lamp with its UV filter removed at an illuminance of 100,000 lux for 100 hours, and the residual amount of the ultraviolet absorbent after irradiation was determined. The residual amount was calculated according to the following Formula:

$$\text{Residual amount (\%)} = 100 \times (100 - \text{Transmittance after irradiation})/(100 - \text{Transmittance before irradiation})$$

The transmittance is a value determined at 380 nm. The results are shown in Table 11.

[Table 11]

Table 11

| Molded plate No. | Sample | Residual amount (%) | Formula of Ultraviolet absorbent A | Formula of Ultraviolet absorbent B | Remarks |
|---|---|---|---|---|---|
| 101 | 1 | 93 | (4) | (IIa) | This invention |
| 102 | 4 | 94 | (B-Ia) | (IIa) | This invention |
| 103 | 7 | 93 | (4) | (IIa) | This invention |
| 105 | 18 | 94 | (B-Ia) | (IIa) | This invention |
| 106 | 36 | 94 | (IIa) | (IIa) | Comparative example |
| 107 | 39 | 93 | (IIa) | (IIa) | Comparative example |
| 108 | 44 | 68 | (4) | (U-2) | Comparative example |
| 109 | 45 | 65 | (B-Ia) | (U-2) | Comparative example |

As shown in the results in Table 11, the molded plates 101 to 105 prepared with the ultraviolet absorbent composition according to the present invention had a favorable light fastness similar to that of the molded plate in Comparative Example containing a combination of traditional rigid ultraviolet absorbents. Further, it has been found that when a cynnamic acid ester-based ultraviolet absorbent (U-2) was used as an ultraviolet absorbent B, light fastness of each of the molded plates 108 and 109 was somewhat inferior to the molded plates prepared with the preferable ultraviolet absorbent B.

Example 3

(Preparation of PET films 201 to 207)

A transparent coating consisting of 100 g of DIANAL LR-1065 (trade name, manufactured by Mitsubishi Rayon, 40% methylethylketone (MEK) solution of an acrylic resin) and 0.5 g of the composition sample 5 was applied on a 100-$\mu$m polyethylene terephthalate (PET) film to be a dry film thickness of approximately 30 $\mu$m with a bar coater, and dried to give a PET film 201 having an ultraviolet-absorbing layer.
PET films 202 to 205 were prepared in a similar manner to the PET film 201, except that the composition sample 5 was replaced with the composition sample 15, 21, 27 or 30 in preparation of the PET film 201.
Alternatively, PET films 206 and 207 were prepared in a similar manner to the PET film 201, except that the composition sample 5 was replaced with the composition sample 36 or 39 in preparation of the PET film 201.

(Evaluation)

A solid image in magenta color was printed on an inkjet-recording paper and dried sufficiently by using an inkjet printer (PIXUS iP1500, trade name, manufactured by Canon), and the PET film prepared above was placed and fixed thereon as an ultraviolet-absorbing layer as the outermost layer. The film was adhered to a southward window glass

with its PET film facing the light and left as it was for 12 weeks for a light-resistance test.

Significant discoloration was confirmed in the comparative PET films 206 and 207 by visual observation. In contrast, each PET film 201 to 205 having the ultraviolet-absorbing layer containing the ultraviolet absorbent composition sample according to the present invention 5, 15, 21, 27 or 30 retained a color tone almost similar to that immediately after printing. The facts mean that the polymer material according to the present invention containing the ultraviolet absorbent composition according to the present invention is also favorable as an ultraviolet-absorbing film for protection of a light-labile compound for an extended period of time.

Example 4

(Evaluation of the compatibility with acrylic resin)

A transparent coating containing 200 g of DIANAL LR-1065 (trade name, manufactured by Mitsubishi Rayon, 40% methylethylketone (MEK) solution of an acrylic resin) and 35 g of the composition sample 1, 6, 17, 19, 22, 31, 34, 41, 42 or 43 was prepared. The coating was coated on a 80-μm polyethylene terephthalate (PET) film with a bar coater to be a thickness of approximately 30 μm and dried, to give a PET film having an ultraviolet-absorbing layer (samples 501 to 510). The compatibility was evaluated by visual observation of the PET film thus prepared.

In the following Table 12, "○" indicates that the film was transparent, "Δ" indicates that the film had particulate powders observable on the surface by a careful visual observation, and "×" indicates that particulate powders were clearly observed on the surface of the film.

[Table 12]

Table 12

| Sample No. | Sample | Appearance (Compatibility) | Remarks |
|---|---|---|---|
| 501 | 1 | ○ | This invention |
| 502 | 6 | ○ | This invention |
| 503 | 17 | ○ | This invention |
| 504 | 19 | ○ | This invention |
| 505 | 22 | ○ | This invention |
| 507 | 34 | × | Comparative example |
| 508 | 41 | × to Δ | Comparative example |
| 509 | 42 | × to Δ | Comparative example |
| 510 | 43 | × to Δ | Comparative example |

As shown in the results in Table 12, the samples 501 to 506 according to the present invention were more favorable in compatibility to the resin than the sample in Comparative Example 507 using only one kind of ultraviolet absorbent, and also than the samples in Comparative Examples 508 to 510 containing other long-wavelength ultraviolet absorbent.

Example 5

(Preparation of PMMA films 601 to 610)

0.4 kg of a PMMA (acrylic) resin and 1.5 g of the composition sample 5 were agitated in a stainless steel tumbler for 1 hour. The mixture was melted and blended by a vent extruder at 230°C and extruded into pellets for molding by an ordinary method. The pellets were dried at 90°C for 3 hours, and then, molded into a PMMA film 601 having a thickness of about 130 μm by an injection molding machine.

PMMA films 602 to 605 were prepared in a similar manner to the PMMA films 601, except that the composition sample 5 was replaced with the composition sample 21, 23, 25 or 44 in preparation of the PMMA film 601.

A transparent coating consisting of 100 g of DIANAL LR-1065 (trade name, manufactured by Mitsubishi Rayon,

40% methylethylketone (MEK) solution of an acrylic resin) and 0.5 g of the composition sample 5 was applied on a 100-μm polyethylene terephthalate (PET) film to be a dry film thickness of approximately 30 μm with a bar coater, and dried to give a PET film 606 having an ultraviolet-absorbing layer.

PET films 607 to 610 were prepared in a similar manner to the PET film 606, except that the composition sample 5 was replaced with the composition sample 21, 23, 25 or 44 in preparation of the PET film 606.

(Evaluation)

A solid image in magenta color was printed on an inkjet-recording paper and dried sufficiently by using an inkjet printer (PIXUS iP1500, trade name, manufactured by Canon), and the PET film prepared above was placed and fixed thereon as an ultraviolet-absorbing layer as the outermost layer. A light-resistance test after 70 hour light irradiation was performed under the follow conditions. Namely, light irradiation was continued for 70 hours so as to be illuminance of 150,000 using a UV filter-omitted xenon lamp so that the light could be irradiated from a PET side. The degree of color fading after 70 hour light irradiation was evaluated by visual observation, providing that the case where no color fading was observed is designated as "◎", the case where some degree of color fading was observed is designated as "○", and the case where color fading was clearly observed is designated as "×".

[Table 13]

Table 13

| Sample No. | Sample | Appearance (color fading property) | Embodiment | Classification of Ultraviolet absorbent B | Remarks |
|---|---|---|---|---|---|
| 601 | 5 | ○ | Kneading type PET | B-(2) | This invention |
| 602 | 21 | ○ | Kneading type PET | B-(2) | This invention |
| 604 | 25 | ◎ | Kneading type PET | B-(1) | This invention |
| 605 | 44 | Δ | Kneading type PET | B-(2) | Comparative example |
| 606 | 5 | ◎ | Coating type PET | B-(2) | This invention |
| 607 | 21 | ◎ | Coating type PET | B-(2) | This invention |
| 609 | 25 | ◎ to ○ | Coating type | B-(1) | This invention |
| 610 | 44 | Δ | Coating type PET | B-(2) | Comparative example |

With respect to PMMA film 605 and PET film 610 using the ultraviolet absorbent B which does not belong to the preferable embodiment of the present invention, it was confirmed by a visual observation that color fading was recognized in each of the kneading type PET film and the coating type PET film. In contrast, with respect to PMMA films 601 and 602, and PET films 606 and 607 using the ultraviolet absorbent B-(2) in the present invention, no color fading was observed in the coating type PET films, whereas some degree of color fading was observed in the kneading type PMMA films. On the other hand, with respect to PMMA films 603 and 604, and PET films 608 and 609, each of which uses the ultraviolet absorbent B-(1) in the present invention, almost no color fading was observed in both the kneading type PMMA films and the coating type PET films. From these results, it has been found that a polymer material of the present invention containing the ultraviolet absorbent composition of the present invention is excellent as an ultraviolet absorbing film for a long term protection of a compound that is less fastness to light.

INDUSTRIAL APPLICABILITY

The ultraviolet absorbent composition of the present invention can be preferably used for a polymer material. This polymer material is applicable to any application where synthetic resin is used, and particularly favorably to applications where there is possibility of exposure to light such as sunlight or ultraviolet light. Specific examples thereof include glass alternatives and their surface-coating agent; coating materials for the window glass, lighting glass and light-protecting glass such as of house, facility, and vehicle; interior and exterior materials such as of house, facility and vehicle, and paints for the interior and exterior materials; materials for ultraviolet-emission sources such as fluorescent lamp and mercury lamp; materials for precision machines and electric and electronic devices; materials for shielding electromagnetic and other waves emitted from various displays; containers or packaging materials for foods, chemicals and drugs; discoloration inhibitors for agricultural and industrial sheet or film, print, colored products, dyes and pigments; cosmetics such as anti-sunburn cream, shampoo, rinse, and hair dressing; apparel fiber products such as sport wear, stockings and cap and the fibers; home interior products such as curtain, carpet and wall paper; medical devices such as plastic lens, contact lens and artificial eye; optical materials such as optical filter, prism, mirror, and photographic material; stationery products such as tape and ink; and display plates and devices and the surface-coating agents thereof.

The polymer material according to the present invention, which contains the ultraviolet absorbent according to the present invention, is superior in light resistance (ultraviolet fastness), causing no precipitation or bleed out of the ultraviolet absorbent during long-tem use. In addition, the polymer material according to the present invention, which has superior long-wavelength ultraviolet absorption capacity, can be used as an ultraviolet-absorbing filter or container, for protection, for example, of an ultraviolet-sensitive compound therein. It is also possible to prepare a molded article coated with an ultraviolet-absorbing film made of the polymer material according to the present invention.

Further, the ultraviolet absorbent of the present invention is preferably used as packing materials, coatings, coated films, inks, fibers, construction materials, recording media, display devices, or covers for a solar cell, each of which contains the ultraviolet absorbent.

## Claims

**1.** An ultraviolet absorbent composition, comprising:

at least one kind of ultraviolet absorbent A having an absorption maximum wavelength of from 350 nm to 400 nm, a half value width of 55 nm or less and a molar extinction coefficient of 20,000 or more at the absorption maximum wavelength; and

at least one kind of ultraviolet absorbent B having an absorption maximum wavelength of 350 nm or less and showing 30% or more of absorbance at 320 nm of the absorbance at the absorption maximum wavelength;

wherein the absorption wavelength molar extinction coefficient and the half value width are determined by preparing a solution in ethyl acetate as a solvent at a concentration of approximately 5 x $10^{-5}$ mol/$dm^3$ and by measurement using a quartz cell having an optical path of 10mm, the half value width being the width of the absorption band at half the maximum absorption; and

wherein the ultraviolet absorbent A comprises a compound represented by Formula (4) or Formula (B-Ia);

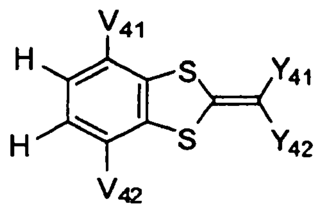

Formula (4)

wherein $Y_{41}$ and $Y_{42}$ each independently represents a monovalent substituent; one of $Y_{41}$ and $Y_{42}$ represents a cyano group, and the other represents a substituted or unsubstituted alkylcarbonyl group, a substituted or unsubstituted arylcarbonyl group, a substituted or unsubstituted heterocyclic carbonyl group, a substituted or unsubstituted alkylsulfonyl group, or a substituted or unsubstituted arylsulfonyl group; and $V_{41}$ and $V_{42}$ each independently represents a hydrogen atom or a monovalent substituent;

Formula (B－ I a)

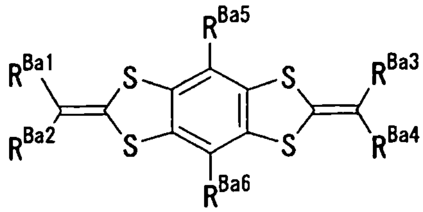

wherein $R^{Ba1}$, $R^{Ba2}$, $R^{Ba3}$ and $R^{Ba4}$ each independently represents a monovalent substituent; at least one of $R^{Ba1}$, $R^{Ba2}$, $R^{Ba3}$ and $R^{Ba4}$ represents a cyano group, a substituted or unsubstituted alkoxycarbonyl group, a substituted or unsubstituted aryloxycarbonyl group, a substituted or unsubstituted carbamoyl group, a substituted or unsubstituted alkylcarbonyl group, a substituted or unsubstituted arylcarbonyl group, a substituted or unsubstituted alkylsulfonyl group, or a substituted or unsubstituted arylsulfonyl group; and $R^{Ba5}$ and $R^{Ba6}$ each independently represent a substituted or unsubstituted alkoxy group, a substituted or unsubstituted aryloxy group, a substituted or unsubstituted acyloxy group, a substituted or unsubstituted alkoxycarbonyloxy group, a substituted or unsubstituted aryloxycarbonyloxy group, a substituted or unsubstituted carbamoyloxy group, a substituted or unsubstituted amino group, a substituted or unsubstituted acylamino group, or a substituted or unsubstituted carbamoylamino group.

2. The ultraviolet absorbent composition according to Claim 1, wherein the ultraviolet absorbent B is an ultraviolet absorbent having the absorption maximum wavelength of less than 320 nm.

3. The ultraviolet absorbent composition according to Claim 1, wherein the ultraviolet absorbent B is an ultraviolet absorbent having the absorption maximum wavelength of from 320 nm to 350 nm.

4. The ultraviolet absorbent composition according to any preceding claim, wherein the ratio of the ultraviolet absorbent A to the ultraviolet absorbent B is in the range of 1:4 to 2:1.

5. The ultraviolet absorbent composition according to Claim 1, wherein at least one of the pair of $R^{Ba1}$ and $R^{Ba2}$ and the pair of $R^{Ba3}$ and $R^{Ba4}$ does not form any ring.

6. The ultraviolet absorbent composition according to Claim 1, wherein the pair of $R^{Ba1}$ and $R^{Ba2}$ and the pair of $R^{Ba3}$ and $R^{Ba4}$ do not form any ring.

7. The ultraviolet absorbent composition according to any preceding claim, wherein the ultraviolet absorbent B comprises a compound represented by Formula (IIa) or formula (IIb):

[Chemical formula 6]

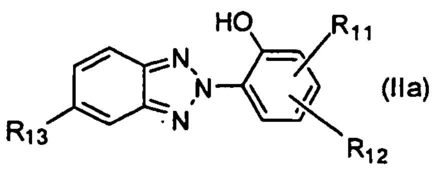
(IIa)

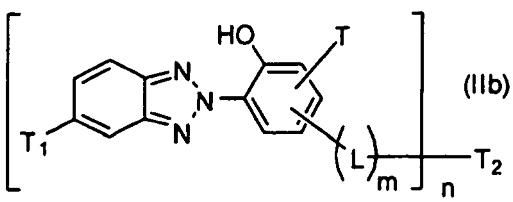
(IIb)

wherein $R^{11}$ represents a hydrogen atom, a substituted or unsubstituted alkyl group, a substituted or unsubstituted cycloalkyl group, or a substituted or unsubstituted aryl group;
$R^{12}$ represents a hydrogen atom, a halogen atom, a substituted or unsubstituted alkyl group, or a substituted or unsubstituted aryl group;
$R^{13}$ represents a hydrogen atom, a halogen atom, a substituted or unsubstituted alkyl group, a substituted or unsubstituted alkoxy group, or $-COOR_{14}$ group wherein $R_{14}$ represents a hydrogen atom, a substituted or unsubstituted alkyl group, or a substituted or unsubstituted aryl group;
T represents a hydrogen atom, or a substituted or unsubstituted alkyl group;
$T_1$ represents a hydrogen atom, a halogen atom, a substituted or unsubstituted alkyl group, a substituted or

unsubstituted aryl group, or a substituted or unsubstituted alkoxy group;
L represents a divalent linking group or a single bond;
m represents 0 or 1;
n represents an integer of 1 to 4; and
when n is 1, $T_2$ represents a halogen atom, a substituted or unsubstituted alkyl group, or a substituted or unsubstituted aryl group; when n is 2, $T_2$ represents a divalent substituent; when n is 3, $T_2$ represents a trivalent substituent; and when n is 4, $T_2$ represents a tetravalent substituent.

**8.** The ultraviolet absorbent composition according to any of Claims 1 to 6, wherein the ultraviolet absorbent B comprises a compound represented by Formula (III) :

[Chemical formula 7]

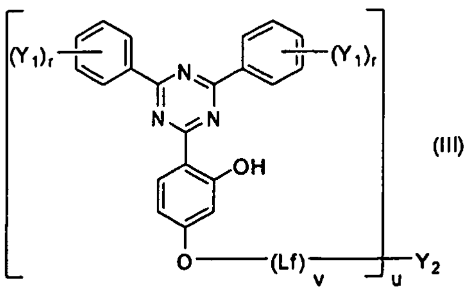

(III)

wherein the substituent $Y_1$ represents a hydrogen atom, a hydroxyl group, a substituted or unsubstituted alkyl group, a substituted or unsubstituted aryl group, or a substituted or unsubstituted alkoxy group;
Lf represents a divalent linking group or a single bond;
u represents 1 or 2;
v represents 0 or 1;
r represents an integer of 1 to 3; and
when u is 1, $Y_2$ represents a hydrogen atom, a substituted or unsubstituted alkyl group, or a substituted or unsubstituted aryl group; and when u is 2, $Y_2$ represents a divalent substituent.

**9.** The ultraviolet absorbent composition according to any of Claims 1 to 6, wherein the ultraviolet absorbent B comprises a compound represented by Formula (IVa) or Formula (IVb):

[Chemical formula 8]

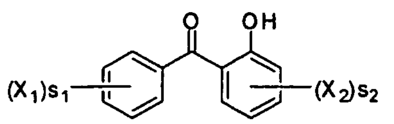

(IVa)

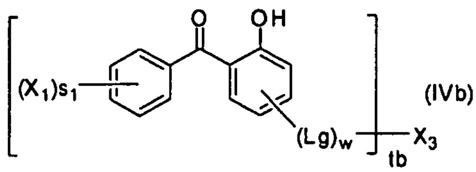

(IVb)

wherein, in Formula (IVa), $X_1$ and $X_2$ each independently represents a hydrogen atom, a halogen atom, a hydroxyl group, a substituted or unsubstituted alkyl group, a substituted or unsubstituted phenyl group, a substituted or unsubstituted alkoxy group, a substituted or unsubstituted alkylsulfonyl group, a substituted or unsubstituted arylsulfonyl group, a sulfonic acid group, a substituted or unsubstituted alkyloxycarbonyl group, a substituted or unsubstituted aryloxycarbonyl group, or a substituted or unsubstituted amino group; and s1 and s2 each independently represents an integer of 1 to 3; and
wherein, in formula (IVb), $X_1$ represents a hydrogen atom, a halogen atom, a hydroxyl group, a substituted or unsubstituted alkyl group, a substituted or unsubstituted phenyl group, a substituted or unsubstituted alkoxy group, a substituted or unsubstituted alkylsulfonyl group, a substituted or unsubstituted arylsulfonyl group, a sulfonic acid group, a substituted or unsubstituted alkyloxycarbonyl group, a substituted or unsubstituted aryloxycarbonyl group, or a substituted or unsubstituted amino group;
s1 represents an integer of 1 to 3;
Lg represents a divalent substituent or a single bond;
w represents 0 or 1;

tb represents 1 or 2; and
when tb is 1, $X_3$ represents a hydrogen atom, a halogen atom, a hydroxyl group, a substituted or unsubstituted alkyl group, a substituted or unsubstituted phenyl group, a substituted or unsubstituted alkoxy group, a substituted or unsubstituted alkylsulfonyl group, a substituted or unsubstituted arylsulfonyl group, a sulfonic acid group, a substituted or unsubstituted alkyloxycarbonyl group, a substituted or unsubstituted aryloxycarbonyl group, or a substituted or unsubstituted amino group; and when tb is 2, $X_3$ represents a divalent substituent.

**10.** The ultraviolet absorbent composition according to any one of Claims 7 to 9, wherein the ultraviolet absorbent B comprises at least one kind of compound selected from the following compound group B:

[Compound Group B]
Compound represented by Formula (IIa) described above

(II-1) 2-(2'-hydroxy-3',5'-di-t-amylphenyl)benzotriazole
(II-2) 2-(3-t-butyl-5-methyl-2-hydroxyphenyl)-5-chlorobenzotriazole
(II-3) 2-(2-hydroxy-5-t-octylphenyl)benzotriazole
(II-4) 2-ethylhexyl-3-[3-t-butyl-4-hydroxy-5-(5-chloro-2H-benzotriazole-2-yl)phenyl] propionate
(II-5) 2-(2H-benzotriazole-2-yl)-6-dodecyl-4-methyl-phenol
(II-6) 2-(2H-benzotriazole-2-yl)-4-t-butylphenol
(II-7) 2-(2H-benzotriazole-2-yl)-6-(1-methyl-1-phenylethyl)-4-(1,1-3,3-tetramethylbutyl)phenol
(II-8) 2-(2H-benzotriazole-2-yl)-4-methylphenol
(II-9) 2-(2H-benzotriazole-2-yl)-4,6-bis(1-methyl-1-phenylethyl)phenol

· Compound represented by Formula (IIb) described above

(II-10) 2,2'-methylene-bis[6-(2H-benzotriazole-2-yl)-4-(1,1,3,3-tetramethylbutyl)phenol]

· Compound represented by Formula (III) described above

(III-1) 2,4-bis(2-hydroxy-4-butoxyphenyl)-6-(2,4-dibutoxyphenyl)-1,3,5-triazine
(III-2) 2,6-bis(2,4-dimethylphenyl)-4-(2-hydroxy-4-octyloxyphenyl)-1,3,5-triazine
(III-3) 2-[4,6-bis(2,4-dimethylphenyl)-1,3,5-triazine-2-yl]-5-[2-hydroxy-3-(2-ethylhexyloxy)propoxy]phenol
(III-4) 2-[2-hydroxy-4-(hexyloxy)phenyl]-4,6-diphenyl-1,3,5-triazine
(III-5) 6-(4-methoxyphenyl)-2,4-bis[4-(2-ethylhexyloxy)-2-hydroxyphenyl]-1,3,5-triazine

· Compound represented by Formula (IVa) or (IVb) described above

(IV-1) hexyl 2-(4-diethylamino-2-hydroxybenzoyl)benzoate
(IV-2) 2,2'-dihydroxy-4,4'-dimethoxybenzophenone
(IV-3) 2-hydroxy-4-methoxybenzophenone
(IV-4) 1,4-bis(4-benzoyl-3-hydroxyphenoxy)butane
(IV-5) 2-hydroxy-4-octoxybenzophenone
(IV-6) 2-hydroxy-4-methoxybenzophenone-5-sulfonic acid
(IV-7) 2,2',4,4'-tetrahydroxybenzophenone

**11.** An ultraviolet absorbent dispersion comprising the ultraviolet absorbent composition as defined in any preceding claim.

**12.** An ultraviolet absorbent solution comprising the ultraviolet absorbent composition as defined in any of Claims 1-10.

**13.** A polymer material, comprising the ultraviolet absorbent composition as defined in any of Claims 1-10.

## Patentansprüche

**1.** Ultraviolett absorbierende Zusammensetzung, umfassend:

zumindest eine Art eines Ultraviolett-Absorptionsmittels A mit einer Wellenlänge des Absorptionsmaximums von 350 bis 400 nm, einer Halbwertsbreite von 55 nm oder weniger und einem molaren Extinktionskoeffizienten von 20.000 oder mehr bei der Wellenlänge des Absorptionsmaximums; und
zumindest eine Art eines Ultraviolett-Absorptionsmittels B, das eine Wellenlänge des Absorptionsmaximums von 350 nm oder weniger aufweist und eine Absorbanz von 30 % oder mehr bei 320 nm der Absorbanz bei der Wellenlänge des Absorptionsmaximums zeigt;
wobei die Absorptionswellenlänge, der molare Extinktionskoeffizient und die Halbwertsbreite durch Herstellung einer Lösung in Ethylacetat als Lösungsmittel bei einer Konzentration von etwa $5 \times 10^{-5}$ mol/dm$^3$ und durch Messung unter Verwendung einer Quarzzelle mit einem optischen Weg von 10 mm bestimmt sind, wobei die Halbwertsbreite die Breite der Absorptionsbande bei der Hälfte der maximalen Absorption ist; und
wobei das Ultraviolett-Absorptionsmittel A eine Verbindung der Formel (4) oder der Formel (B-Ia) umfasst:

Formel (4)

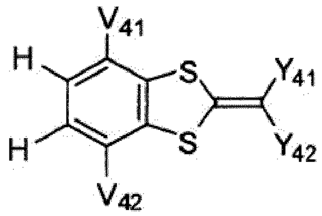

worin $Y_{41}$ und $Y_{42}$ jeweils unabhängig einen monovalenten Substituenten darstellen; eines von $Y_{41}$ und $Y_{42}$ eine Cyanogruppe darstellt und das andere eine substituierte oder unsubstituierte Alkylcarbonylgruppe, eine substituierte oder unsubstituierte Arylcarbonylgruppe, eine substituierte oder unsubstituierte heterocyclische Carbonylgruppe, eine substituierte oder unsubstituierte Alkylsulfonylgruppe oder eine substituierte oder unsubstituierte Arylsulfonylgruppe darstellt; und $V_{41}$ und $V_{42}$ jeweils unabhängig ein Wasserstoffatom oder einen monovalenten Substituenten darstellen;

Formel (B-Ia)

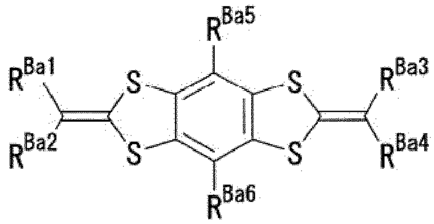

worin $R^{Ba1}$, $R^{Ba2}$, $R^{Ba3}$ und $R^{Ba4}$ jeweils unabhängig einen monovalenten Substituenten darstellen; zumindest eines von $R^{Ba1}$, $R^{Ba2}$, $R^{Ba3}$ und $R^{Ba4}$ eine Cyanogruppe, eine substituierte oder unsubstituierte Alkoxycarbonylgruppe, eine substituierte oder unsubstituierte Aryloxycarbonylgruppe, eine substituierte oder unsubstituierte Carbamoylgruppe, eine substituierte oder unsubstituierte Alkylcarbonylgruppe, eine substituierte oder unsubstituierte Arylcarbonylgruppe, eine substituierte oder unsubstituierte Alkylsulfonylgruppe oder eine substituierte oder unsubstituierte Arylsulfonylgruppe darstellt; und $R^{Ba5}$ und $R^{Ba6}$ jeweils unabhängig eine substituierte oder unsubstituierte Alkoxygruppe, eine substituierte oder unsubstituierte Aryloxygruppe, eine substituierte oder unsubstituierte Acyloxygruppe, eine substituierte oder unsubstituierte Alkoxycarbonyloxygruppe, eine substituierte oder unsubstituierte Aryloxycarbonyloxygruppe, eine substituierte oder unsubstituierte Carbamoyloxygruppe, eine substituierte oder unsubstituierte Aminogruppe, eine substituierte oder unsubstituierte Acylaminogruppe oder eine substituierte oder unsubstituierte Carbamoylaminogruppe darstellen.

**2.** Ultraviolett absorbierende Zusammensetzung gemäss Anspruch 1, wobei das Ultraviolett-Absorptionsmittel B ein Ultraviolett-Absorptionsmittel mit einer Wellenlänge des Absorptionsmaximums von weniger als 320 nm ist.

**3.** Ultraviolett absorbierende Zusammensetzung gemäss Anspruch 1, wobei das Ultraviolett-Absorptionsmittel B ein Ultraviolett-Absorptionsmittel mit einer Wellenlänge des Absorptionsmaximums von 320 bis 350 nm ist.

**4.** Ultraviolett absorbierende Zusammensetzung gemäss einem der vorhergehenden Ansprüche, wobei das Verhältnis

von Ultraviolett-Absorptionsmittel A zu Ultraviolett-Absorptionsmittel B im Bereich von 1:4 bis 2:1 liegt.

**5.** Ultraviolett absorbierende Zusammensetzung gemäss Anspruch 1, wobei zumindest eines des Paares von $R^{Ba1}$ und $R^{Ba2}$ und des Paares von $R^{Ba3}$ und $R^{Ba4}$ keinen Ring bildet.

**6.** Ultraviolett absorbierende Zusammensetzung gemäss Anspruch 1, wobei das Paar von $R^{Ba1}$ und $R^{Ba2}$ und das Paar von $R^{Ba3}$ und $R^{Ba4}$ keinen Ring bilden.

**7.** Ultraviolett absorbierende Zusammensetzung gemäss einem der vorhergehenden Ansprüche, wobei das Ultraviolett-Absorptionsmittel B eine Verbindung der Formel (IIa) oder der Formel (IIb) umfasst:

[Chemische Formel 6]

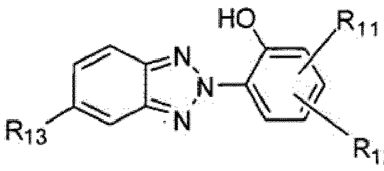
(IIa)

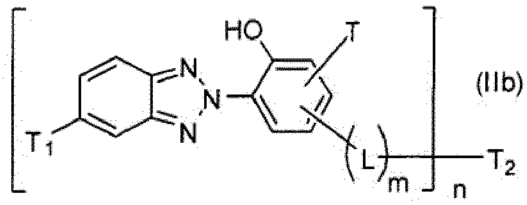
(IIb)

worin

$R^{11}$ ein Wasserstoffatom, eine substituierte oder unsubstituierte Alkylgruppe, eine substituierte oder unsubstituierte Cycloalkylgruppe oder eine substituierte oder unsubstituierte Arylgruppe darstellt;
$R^{12}$ ein Wasserstoffatom, ein Halogenatom, eine substituierte oder unsubstituierte Alkylgruppe oder eine substituierte oder unsubstituierte Arylgruppe darstellt;
$R^{13}$ ein Wasserstoffatom, ein Halogenatom, eine substituierte oder unsubstituierte Alkylgruppe, eine substituierte oder unsubstituierte Alkoxygruppe oder $-COOR_{14}$-Gruppe darstellt, worin $R_{14}$ ein Wasserstoffatom, eine substituierte oder unsubstituierte Alkylgruppe oder eine substituierte oder unsubstituierte Arylgruppe darstellt;
T ein Wasserstoffatom oder eine substituierte oder unsubstituierte Alkylgruppe darstellt;
$T_1$ ein Wasserstoffatom, ein Halogenatom, eine substituierte oder unsubstituierte Alkylgruppe, eine substituierte oder unsubstituierte Arylgruppe oder eine substituierte oder unsubstituierte Alkoxygruppe darstellt;
L eine divalente Verknüpfungsgruppe oder eine Einfachbindung darstellt;
m 0 oder 1 darstellt;
n eine ganze Zahl von 1 bis 4 darstellt; und
wenn n 1 ist, $T_2$ ein Halogenatom, eine substituierte oder unsubstituierte Alkylgruppe oder eine substituierte oder unsubstituierte Arylgruppe darstellt; wenn n 2 ist, $T_2$ einen divalenten Substituenten darstellt; wenn n 3 ist, $T_2$ einen trivalenten Substituenten darstellt und wenn n 4 ist, $T_2$ einen tetravalenten Substituenten darstellt.

**8.** Ultraviolett absorbierende Zusammensetzung gemäss einem der Ansprüche 1 bis 6, wobei das Ultraviolett-Absorptionsmittel B eine Verbindung der Formel (III) umfasst:

[Chemische Formel 7]

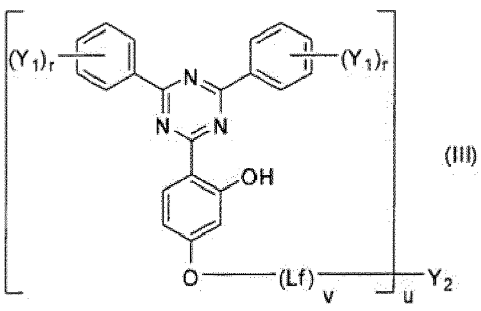
(III)

worin der Substituent $Y_1$ ein Wasserstoffatom, eine Hydroxylgruppe, eine substituierte oder unsubstituierte Alkylgruppe, eine substituierte oder unsubstituierte Arylgruppe oder eine substituierte oder unsubstituierte Alkoxygruppe darstellt;
Lf eine divalente Verknüpfungsgruppe oder eine Einfachbindung darstellt;
u 1 oder 2 darstellt;
v 0 oder 1 darstellt;
r eine ganze Zahl von 1 bis 3 darstellt; und
wenn u 1 ist, $Y_2$ ein Wasserstoffatom, eine substituierte oder unsubstituierte Alkylgruppe oder eine substituierte oder unsubstituierte Arylgruppe darstellt; und wenn u 2 ist, $Y_2$ einen divalenten Substituenten darstellt.

**9.** Ultraviolett absorbierende Zusammensetzung gemäss einem der Ansprüche 1 bis 6, wobei das Ultraviolett-Absorptionsmittel B eine Verbindung der Formel (IVa) oder der Formel (IVb) umfasst:

[Chemische Formel 8]

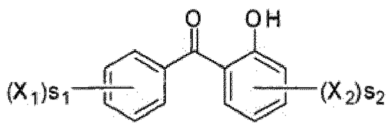
(IVa)

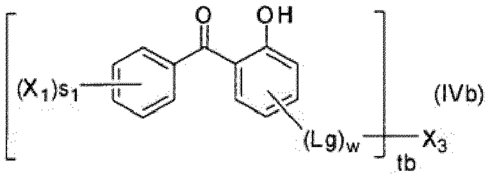
(IVb)

wobei in der Formel (IVa) $X_1$ und $X_2$ jeweils unabhängig ein Wasserstoffatom, ein Halogenatom, eine Hydroxylgruppe, eine substituierte oder unsubstituierte Alkylgruppe, eine substituierte oder unsubstituierte Phenylgruppe, eine substituierte oder unsubstituierte Alkoxygruppe, eine substituierte oder unsubstituierte Alkylsulfonylgruppe, eine substituierte oder unsubstituierte Arylsulfonylgruppe, eine Sulfonsäuregruppe, eine substituierte oder unsubstituierte Alkyloxycarbonylgruppe, eine substituierte oder unsubstituierte Aryloxycarbonylgruppe oder eine substituierte oder unsubstituierte Aminogruppe darstellen; und s1 und s2 jeweils unabhängig eine ganze Zahl von 1 bis 3 darstellen; und
wobei in Formel (IVb) $X_1$ ein Wasserstoffatom, ein Halogenatom, eine Hydroxylgruppe, eine substituierte oder unsubstituierte Alkylgruppe, eine substituierte oder unsubstituierte Phenylgruppe, eine substituierte oder unsubstituierte Alkoxygruppe, eine substituierte oder unsubstituierte Alkylsulfonylgruppe, eine substituierte oder unsubstituierte Arylsulfonylgruppe, eine Sulfonsäuregruppe, eine substituierte oder unsubstituierte Alkyloxycarbonylgruppe, eine substituierte oder unsubstituierte Aryloxycarbonylgruppe oder eine substituierte oder unsubstituierte Aminogruppe darstellt;
s1 eine ganze Zahl von 1 bis 3 darstellt;
Lg einen divalenten Substituenten oder eine Einfachbindung darstellt;
w 0 oder 1 darstellt;
tb 1 oder 2 darstellt; und
wenn tb 1 ist, $X_3$ ein Wasserstoffatom, ein Halogenatom, eine Hydroxylgruppe, eine substituierte oder unsubstituierte Alkylgruppe, eine substituierte oder unsubstituierte Phenylgruppe, eine substituierte oder unsubstituierte Alkoxygruppe, eine substituierte oder unsubstituierte Alkylsulfonylgruppe, eine substituierte oder unsubstituierte Arylsulfonylgruppe, eine Sulfonsäuregruppe, eine substituierte oder unsubstituierte Alkyloxycarbonylgruppe, eine substituierte oder unsubstituierte Aryloxycarbonylgruppe oder eine substituierte oder unsubstituierte Aminogruppe darstellt; und wenn tb 2 ist, $X_3$ einen divalenten Substituenten darstellt.

**10.** Ultraviolett absorbierende Zusammensetzung gemäss irgendeinem der Ansprüche 7 bis 9, wobei das Ultraviolett-Absorptionsmittel B zumindest eine Art an Verbindungen, ausgewählt aus der nachstehenden Verbindungsgruppe B, umfasst:

VERBINDUNGSGRUPPE B
Verbindung der oben beschriebenen Formel (IIa):

(II-1) 2-(2'-Hydroxy-3',5'-di-t-amylphenyl)benzotriazol
(II-2) 2-(3-t-Butyl-5-methyl-2-hydroxyphenyl)-5-chlorbenzotriazol
(II-3) 2-(2-Hydroxy-5-t-octylphenyl)benzotriazol
(II-4) 2-Ethylhexyl-3-[3-t-butyl-4-hydroxy-5-(5-chlor-2H-benzotriazol-2-yl)phenyl]propionat
(II-5) 2-(2H-Benzotriazol-2-yl)-6-dodecyl-4-methylphenol

(II-6) 2-(2H-Benzotriazol-2-yl)-4-t-butylphenol
(II-7) 2-(2H-Benzotriazol-2-yl)-6-(1-methyl-1-phenylethyl)-4-(1,1-3,3-tetramethylbutyl)phenol
(II-8) 2-(2H-Benzotriazol-2-yl)-4-methylphenol
(II-9) 2-(2H-Benzotriazol-2-yl)-4,6-bis(1-methyl-1-phenylethyl)phenol

Verbindung der oben beschriebenen Formel (IIb):

(II-10) 2,2'-Methylen-bis[6-(2H-benzotriazol-2-yl)-4-(1,1,3,3-tetramethylbutyl)phenol]

Verbindung der oben beschriebenen Formel (III):

(III-1) 2,4-Bis(2-hydroxy-4-butoxyphenyl)-6-(2,4-dibutoxyphenyl)-1,3,5-triazin
(III-2) 2,6-Bis(2,4-dimethylphenyl)-4-(2-hydroxy-4-octyloxyphenyl)-1,3,5-triazin
(III-3) 2-[4,6-Bis(2,4-dimethylphenyl)-1,3,5-triazin-2-yl]-5-[2-hydroxy-3-(2-ethylhexyloxy)propoxy]-phenol
(III-4) 2-[2-Hydroxy-4-(hexyloxy)phenyl]-4,6-diphenyl-1,3,5-triazin
(III-5) 6-(4-Methoxyphenyl)-2,4-bis[4-(2-ethylhexyl-oxy)-2-hydroxyphenyl]-1,3,5-triazin

Verbindung der oben beschriebenen Formel (IVa) oder (IVb) :

(IV-1) Hexyl 2-(4-diethylamino-2-hydroxybenzoyl)-benzoat
(IV-2) 2,2'-Dihydroxy-4,4'-dimethoxybenzophenon
(IV-3) 2-Hydroxy-4-methoxybenzophenon
(IV-4) 1,4-Bis(4-benzoyl-3-hydroxyphenoxy)butan
(IV-5) 2-Hydroxy-4-octoxybenzophenon
(IV-6) 2-Hydroxy-4-methoxybenzophenon-5-sulfonsäure
(IV-7) 2,2',4,4'-Tetrahydroxybenzophenon.

**11.** Ultraviolett absorbierende Dispersion, umfassend die Ultraviolett absorbierende Zusammensetzung wie in einem der vorhergehenden Ansprüche definiert.

**12.** Ultraviolett absorbierende Lösung, umfassend die Ultraviolett absorbierende Zusammensetzung wie in einem der Ansprüche 1 bis 10 definiert.

**13.** Polymermaterial, umfassend die Ultraviolett absorbierende Zusammensetzung wie in einem der Ansprüche 1 bis 10 definiert.

## Revendications

**1.** Composition d'absorbants d'ultraviolet, comprenant :

au moins un type d'absorbant d'ultraviolet A présentant une longueur d'onde maximale d'absorption allant de 350 nm à 400 nm, une largeur de demi-absorption de 55 nm ou moins et un coefficient d'extinction molaire de 20 000 ou plus à la longueur d'onde maximale d'absorption ; et
au moins un type d'absorbant d'ultraviolet B présentant une longueur d'onde maximale d'absorption de 350 nm ou moins et présentant 30 % ou plus d'absorbance à 320 nm de l'absorbance à la longueur d'onde maximale d'absorption ;
dans laquelle le coefficient d'extinction molaire de longueur d'onde d'absorption et la largeur de demi-absorption sont déterminés en préparant une solution dans l'acétate d'éthyle jouant le rôle de solvant à une concentration d'approximativement 5 x $10^{-5}$ moles/$dm^3$ et par une mesure en utilisant une cellule de quartz ayant un trajet optique de 10 mm, la largeur de demi-absorption étant la largeur de la bande d'absorption à la moitié de l'absorption maximale ; et
dans laquelle l'absorbant d'ultraviolet A comprend un composé représenté par la formule (4) ou la formule (B-Ia) ;

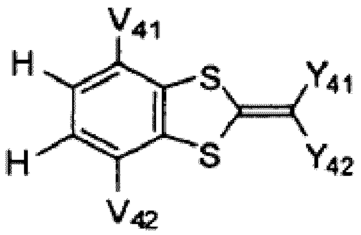

Formule (4)

dans laquelle $Y_{41}$ et $Y_{42}$ représentent chacun indépendamment un substituant monovalent; un parmi $Y_{41}$ et $Y_{42}$ représente un groupe cyano, et l'autre représente un groupe alkylcarbonyle substitué ou non substitué, un groupe arylcarbonyle substitué ou non substitué, un groupe carbonyle hétérocyclique substitué ou non substitué, un groupe alkylsulfonyle substitué ou non substitué, ou un groupe arylsulfonyle substitué ou non substitué ; et $V_{41}$ et $V_{42}$ représentent chacun indépendamment un atome d'hydrogène ou un substituant monovalent ;

Formule (B-Ia)

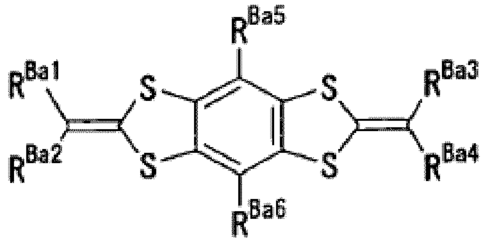

dans laquelle $R^{Ba1}$, $R^{Ba2}$, $R^{Ba3}$ et $R^{Ba4}$ représentent chacun indépendamment un substituant monovalent; au moins un parmi $R^{Ba1}$, $R^{Ba2}$, $R^{Ba3}$ et $R^{Ba4}$ représente un groupe cyano, un groupe alcoxycarbonyle substitué ou non substitué, un groupe aryloxycarbonyle substitué ou non substitué, un groupe carbamoyle substitué ou non substitué, un groupe alkylcarbonyle substitué ou non substitué, un groupe arylcarbonyle substitué ou non substitué, un groupe alkylsulfonyle substitué ou non substitué, ou un groupe arylsulfonyle substitué ou non substitué ; et $R^{Ba5}$ et $R^{Ba6}$ représentent chacun indépendamment un groupe alcoxy substitué ou non substitué, un groupe aryloxy substitué ou non substitué, un groupe acyloxy substitué ou non substitué, un groupe alcoxycarbonyloxy substitué ou non substitué, un groupe aryloxycarbonyloxy substitué ou non substitué, un groupe carbamoyloxy substitué ou non substitué, un groupe amino substitué ou non substitué, un groupe acylamino substitué ou non substitué, ou un groupe carbamoylamino substitué ou non substitué.

2. Composition d'absorbants d'ultraviolet selon la revendication 1, dans laquelle l'absorbant d'ultraviolet B est un absorbant d'ultraviolet présentant la longueur d'onde maximale d'absorption inférieure à 320 nm.

3. Composition d'absorbants d'ultraviolet selon la revendication 1, dans laquelle l'absorbant d'ultraviolet B est un absorbant d'ultraviolet présentant la longueur d'onde maximale d'absorption de 320 nm à 350 nm.

4. Composition d'absorbants d'ultraviolet selon une quelconque revendication précédente, dans laquelle le rapport de l'absorbant d'ultraviolet A sur l'absorbant d'ultraviolet B est situé dans la plage allant de 1 : 4 à 2 : 1.

5. Composition d'absorbants d'ultraviolet selon la revendication 1, dans laquelle au moins une parmi la paire de $R^{Ba1}$ et $R^{Ba2}$ et la paire de $R^{Ba3}$ et $R^{Ba4}$ ne forme aucun cycle.

6. Composition d'absorbants d'ultraviolet selon la revendication 1, dans laquelle la paire de $R^{Ba1}$ et $R^{Ba2}$ et la paire de $R^{Ba3}$ et $R^{Ba4}$ ne forment aucun cycle.

7. Composition d'absorbants d'ultraviolet selon une quelconque revendication précédente, dans laquelle l'absorbant d'ultraviolet B comprend un composé représenté par la formule (IIa) ou la formule (IIb) :

[Formule chimique 6]

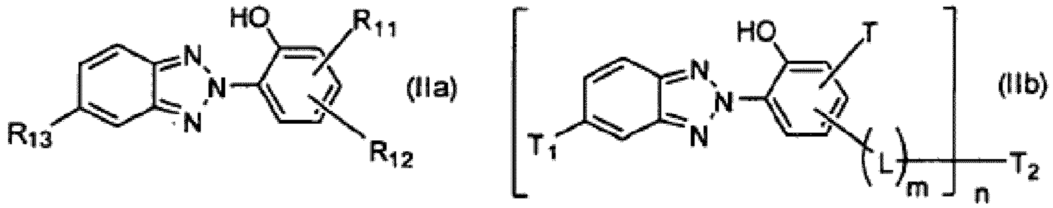

dans laquelle $R^{11}$ représente un atome d'hydrogène, un groupe alkyle substitué ou non substitué, un groupe cycloalkyle substitué ou non substitué, ou un groupe aryle substitué ou non substitué ;
$R^{12}$ représente un atome d'hydrogène, un atome d'halogène, un groupe alkyle substitué ou non substitué, ou un groupe aryle substitué ou non substitué ;
$R^{13}$ représente un atome d'hydrogène, un atome d'halogène, un groupe alkyle substitué ou non substitué, un groupe alcoxy substitué ou non substitué, ou un groupe $-COOR_{14}$ dans lequel $R_{14}$ représente un atome d'hydrogène, un groupe alkyle substitué ou non substitué, ou un groupe aryle substitué ou non substitué ;
T représente un atome d'hydrogène, ou un groupe alkyle substitué ou non substitué ;
$T_1$ représente un atome d'hydrogène, un atome d'halogène, un groupe alkyle substitué ou non substitué, un groupe aryle substitué ou non substitué, ou un groupe alcoxy substitué ou non substitué ;
L représente un groupe de liaison divalent ou une liaison simple ;
m représente 0 ou 1 ;
n représente un nombre entier allant de 1 à 4 ; et
quand n est 1, $T_2$ représente un atome d'halogène, un groupe alkyle substitué ou non substitué, ou un groupe aryle substitué ou non substitué ; quand n est 2, $T_2$ représente un substituant divalent; quand n est 3, $T_2$ représente un substituant trivalent ; et quand n est 4, $T_2$ représente un substituant tétravalent.

**8.** Composition d'absorbants d'ultraviolet selon l'une quelconque des revendications 1 à 6, dans laquelle l'absorbant d'ultraviolet B comprend un composé représenté par la formule (III) :

[Formule chimique 7]

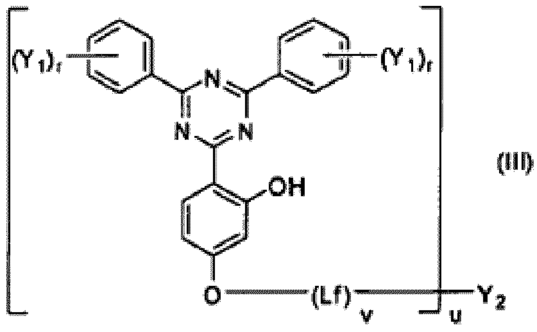

dans laquelle le substituant $Y_1$ représente un atome d'hydrogène, un groupe hydroxyle, un groupe alkyle substitué ou non substitué, un groupe aryle substitué ou non substitué, ou un groupe alcoxy substitué ou non substitué ;
Lf représente un groupe de liaison divalent ou une liaison simple ;
u représente 1 ou 2 ;
v représente 0 ou 1 ;
r représente un nombre entier allant de 1 à 3 ; et
quand u est 1, $Y_2$ représente un atome d'hydrogène, un groupe alkyle substitué ou non substitué, ou un groupe aryle substitué ou non substitué ; et quand u est 2, $Y_2$ représente un substituant divalent.

**9.** Composition d'absorbants d'ultraviolet selon l'une quelconque des revendications 1 à 6, dans laquelle l'absorbant d'ultraviolet B comprend un composé représenté par la formule (IVa) ou la formule (IVb) :

[Formule chimique 8]

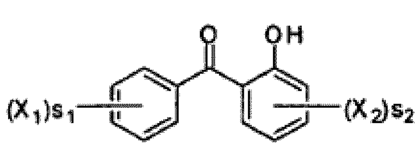 (IVa) 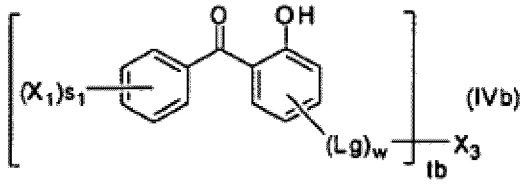 (IVb)

dans laquelle, dans la formule (IVa), $X_1$ et $X_2$ représentent chacun indépendamment un atome d'hydrogène, un atome d'halogène, un groupe hydroxyle, un groupe alkyle substitué ou non substitué, un groupe phényle substitué ou non substitué, un groupe alcoxy substitué ou non substitué, un groupe alkylsulfonyle substitué ou non substitué, un groupe arylsulfonyle substitué ou non substitué, un groupe acide sulfonique, un groupe alkyloxycarbonyle substitué ou non substitué, un groupe aryloxycarbonyle substitué ou non substitué, ou un groupe amino substitué ou non substitué; et s1 et s2 représentent chacun indépendamment un nombre entier allant de 1 à 3 ; et

dans laquelle, dans la formule (IVb), $X_1$ représente un atome d'hydrogène, un atome d'halogène, un groupe hydroxyle, un groupe alkyle substitué ou non substitué, un groupe phényle substitué ou non substitué, un groupe alcoxy substitué ou non substitué, un groupe alkylsulfonyle substitué ou non substitué, un groupe arylsulfonyle substitué ou non substitué, un groupe acide sulfonique, un groupe alkyloxycarbonyle substitué ou non substitué, un groupe aryloxycarbonyle substitué ou non substitué, ou un groupe amino substitué ou non substitué ;

s1 représente un nombre entier allant de 1 à 3 ;

Lg représente un substituant divalent ou une liaison simple ;

w représente 0 ou 1 ;

tb représente 1 ou 2 ; et

quand tb est 1, $X_3$ représente un atome d'hydrogène, un atome d'halogène, un groupe hydroxyle, un groupe alkyle substitué ou non substitué, un groupe phényle substitué ou non substitué, un groupe alcoxy substitué ou non substitué, un groupe alkylsulfonyle substitué ou non substitué, un groupe arylsulfonyle substitué ou non substitué, un groupe acide sulfonique, un groupe alkyloxycarbonyle substitué ou non substitué, un groupe aryloxycarbonyle substitué ou non substitué, ou un groupe amino substitué ou non substitué ; et quand tb est 2, $X_3$ représente un substituant divalent.

**10.** Composition d'absorbants d'ultraviolet selon l'une quelconque des revendications 7 à 9, dans laquelle l'absorbant d'ultraviolet B comprend au moins un type de composé sélectionné dans le groupe B de composés suivant :

[Groupe B de composés]

Composé représenté par la formule (IIa) décrite ci-dessus

(II-1) le 2-(2'-hydroxy-3',5'-di-t-amylphényl)benzotriazole
(II-2) le 2-(3-t-butyl-5-méthyl-2-hydroxyphényl)-5-chlorobenzotriazole
(II-3) le 2-(2-hydroxy-5-t-octylphényl)benzotriazole
(II-4) le propionate de 2-éthylhexyl-3-[3-t-butyl-4-hydroxy-5-(5-chloro-2H-benzotriazole-2-yl)phényle]
(II-5) le 2-(2H-benzotriazole-2-yl)-6-dodécyl-4-méthyl-phénol
(II-6) le 2-(2H-benzotriazole-2-yl)-4-t-butylphénol
(II-7) le 2-(2H-benzotriazole-2-yl)-6-(1-méthyl-1-phényléthyl)-4-(1,1-3,3-tétraméthylbutyl)phénol
(II-8) le 2-(2H-benzotriazole-2-yl)-4-méthylphénol
(II-9) le 2-(2H-benzotriazole-2-yl)-4,6-bis(1-méthyl-1-phényléthyl)phénol

• Composé représenté par la formule (IIb) décrite ci-dessus

(II-10) le 2,2'-méthylène-bis[6-(2H-benzotriazole-2-yl)-4-(1,1,3,3-tétraméthyl-butyl)phénol]

• Composé représenté par la formule (III) décrite ci-dessus

(III-1) la 2,4-bis(2-hydroxy-4-butoxyphényl)-6-(2,4-dibutoxyphényl)-1,3,5-triazine
(III-2) la 2,6-bis(2,4-diméthylphényl)-4-(2-hydroxy-4-octyloxyphényl)-1,3,5-triazine
(III-3) le 2-[4,6-bis(2,4-diméthylphényl)-l,3,5-triazine-2-yl]-5-[2-hydroxy-3-(2-éthylhexyloxy)propoxy]phénol
(III-4) la 2-[2-hydroxy-4-(hexyloxy)phényl]-4,6-diphényl-1,3,5-triazine
(III-5) la 6-(4-méthoxyphényl)-2,4-bis[4-(2-éthylhexyloxy)-2-hydroxyphényl]-1,3,5-triazine

• Composé représenté par la formule (IVa) ou (IVb) décrite ci-dessus

(IV-1) le 2-(4-diéthylamino-2-hydroxybenzoyl)benzoate d'hexyle
(IV-2) la 2,2'-dihydroxy-4,4'-diméthoxybenzophénone
(IV-3) la 2-hydroxy-4-méthoxybenzophénone
(IV-4) le 1,4-bis(4-benzoyl-3-hydroxyphénoxy)butane
(IV-5) la 2-hydroxy-4-octoxybenzophénone
(IV-6) l'acide 2-hydroxy-4-méthoxybenzophénone-5-sulfonique
(IV-7) la 2,2',4,4'-tétrahydroxybenzophénone.

**11.** Dispersion d'absorbants d'ultraviolet comprenant la composition d'absorbants d'ultraviolet telle que définie dans une quelconque revendication précédente.

**12.** Solution d'absorbants d'ultraviolet comprenant la composition d'absorbants d'ultraviolet telle que définie dans l'une quelconque des revendications 1 à 10.

**13.** Matériau polymère, comprenant la composition d'absorbants d'ultraviolet telle que définie dans l'une quelconque des revendications 1 à 10.

*Fig. 1*

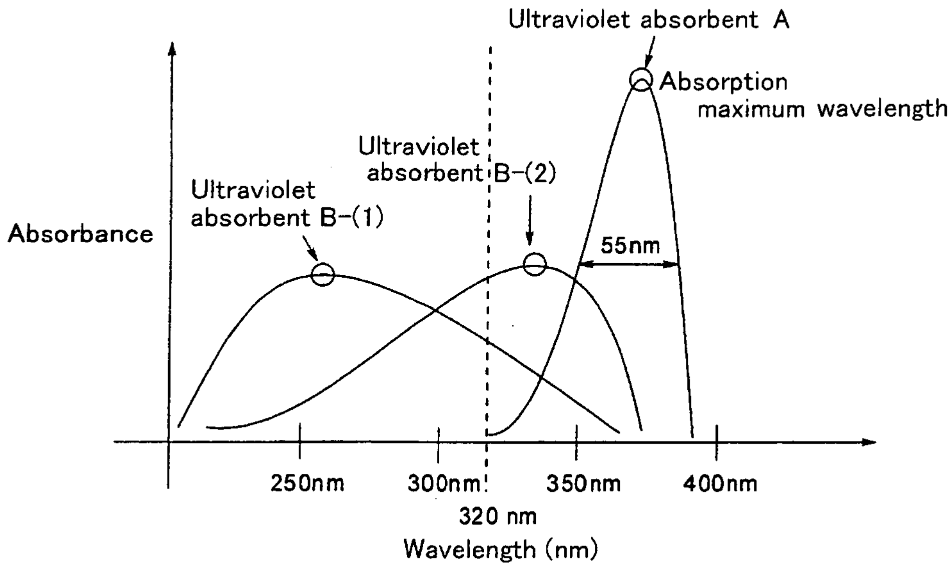
Ultraviolet absorbent A
Absorption maximum wavelength
Ultraviolet absorbent B-(2)
Ultraviolet absorbent B-(1)
Absorbance
55nm
250nm
300nm
350nm
400nm
320 nm
Wavelength (nm)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 5339033 A
- JP 5345639 A
- JP 6056466 A
- JP 2006316107 A
- JP 6145387 A
- JP 2003177235 A
- JP 2005517787 T
- JP 7285927 W
- JP 60170842 A
- JP 49011155 B
- EP 1300700 A
- JP 2002169020 A
- JP 49001115 A
- JP 4338759 A
- JP 3054566 A
- JP 63225382 A
- JP 6080672 A
- DE 3728452
- JP 51100097 A
- JP 5506428 T
- JP 1053455 B
- JP 61189530 A
- JP 62260152 A
- JP 63053544 A
- JP 63056651 A
- EP 27242 A
- WO 2006009451 A
- JP 2004117997 A
- JP 55129136 A
- JP 58209735 A
- JP 63264748 A
- JP 4191851 A
- JP 8272058 A
- GB 2016017 A
- JP 2002053824 A
- US 5807932 A
- US 4259467 A
- US 4355147 A
- JP 8208765 A
- JP 8151455 A
- JP 8245849 A
- JP 10168292 A
- JP 2004285189 A
- JP 2001323082 A
- JP 10298397 A
- JP 11315175 A
- JP 2001026081 A
- JP 2005305745 A
- JP 2003524019 T
- JP 2004050460 A
- JP 2004243674 A
- JP 2006240734 A
- JP 11034261 A
- JP 2003237825 A
- JP 8080928 A
- JP 2004051174 A
- JP 8301363 A
- JP 11276550 A
- JP 2006271781 A
- JP 7287353 A
- JP 2000056433 A
- JP 2005178832 A
- JP 2003200966 A
- JP 2006323339 A
- JP 2006224317 A
- JP 2002160321 A
- JP 2005156220 A
- JP 2005146278 A
- JP 2006130807 A
- JP 9142539 A
- JP 8324572 A
- JP 2001048153 A
- JP 2005105004 A
- JP 2006001568 A
- JP 2000238857 A
- JP 2001088815 A
- JP 7216152 A
- JP 2001270531 A
- JP 2004083858 A
- JP 2001114262 A
- JP 2001213427 A
- JP 7242444 A
- JP 8133787 A
- JP 2005320408 A
- JP 5139434 A
- JP 7289665 A
- JP 9295664 A
- JP 9058687 A
- JP 8155007 A
- JP 2006298456 A
- JP 9086570 A
- JP 9113494 A
- JP 9239910 A
- JP 11180474 A
- JP 2002068322 A
- JP 2005278678 A
- JP 11290420 A
- JP 2001106218 A

- WO 0493775 A
- JP 5305975 A
- JP 7040954 A
- JP 10237312 A
- JP 2000152974 A
- JP 2002264979 A
- JP 2005255736 A
- JP 2002370723 A
- JP 9241407 A
- JP 8091385 A
- JP 9048935 A
- JP 11514387 T
- JP 2000066603 A
- JP 2005105032 A
- WO 9929490 A
- JP 11255925 A
- JP 7026177 A
- JP 9169950 A
- JP 9221631 A
- JP 2002080788 A
- JP 10088039 A
- JP 2001055541 A
- JP 8081643 A
- JP 2000186234 A
- JP 7166112 A
- JP 2002294165 A
- JP 2000273362 A
- JP 2001279189 A
- JP 2002271227 A
- JP 2001009357 A
- JP 2001316630 A
- JP 2002356655 A
- JP 2004000937 A
- JP 2004002700 A
- JP 2004169182 A
- JP 2004107700 A
- JP 6049368 A
- JP 2002038084 A
- JP 2005307161 A
- JP 5078606 A
- JP 5185031 A
- JP 10140089 A
- JP 2000509082 T
- JP 2004520284 T
- WO 2006097201 A
- JP 6001945 A
- JP 6313148 A
- JP 7003189 A
- JP 7082454 A
- JP 7118576 A
- JP 2004217727 A
- JP 2005314495 A
- JP 10298493 A
- JP 9241534 A
- JP 2002235028 A
- JP 2000 A
- JP 345109 A
- JP 6346022 A
- JP 2002167545 A
- JP 8324576 A
- JP 9012924 A
- JP 9157581 A
- JP 9059539 A
- JP 2001181558 A
- JP 10183057 A
- JP 2001115080 A
- JP 2001262056 A
- JP 9263729 A
- JP 2001288410 A
- JP 2002069331 A
- JP 2002080781 A
- JP 2003525325 T
- JP 2004162021 A
- JP 2006233010 A
- JP 11514689 T
- JP 2001059068 A
- JP 2006160847 A
- JP 8003502 A
- JP 2006521941 T
- JP 2005533915 T
- JP 11504954 T
- JP 5254277 A
- JP 2006030596 A
- JP 11199808 A
- WO 9967337 A
- JP 2005325150 A
- JP 2005350559 A
- JP 2006008811 A
- JP 2006514130 T
- JP 2006257165 A
- JP 8108650 A
- JP 2005023111 A
- JP 2004075888 A
- JP 7164729 A
- JP 2006022300 A
- JP 2006070190 A
- JP 2002127596 A
- JP 5117508 A
- JP 7119036 A
- JP 7196631 A
- JP 8188921 A
- JP 10237760 A
- JP 2000054287 A
- JP 2006299428 A
- JP 2006299438 A
- JP 2002322360 A
- JP 2006265770 A
- JP 7076580 A
- JP 2001348785 A
- JP 2003041434 A
- JP 2003239136 A
- WO 032661 A
- JP 10251981 A
- JP 6228816 A
- JP 2005517822 T
- JP 6228818 A

- JP 5009870 A
- JP 10001587 A
- JP 2002212884 A
- JP 2006016710 A
- JP 5148703 A
- JP 2004285516 A
- JP 2004285517 A
- JP 2003339503 A
- JP 2004011062 A
- JP 11302982 A
- JP 7289097 A
- JP 10001868 A
- JP 5256464 A
- JP 5193037 A
- JP 6114991 A
- JP 11247028 A
- JP 2000144583 A
- JP 7018584 A
- JP 8041785 A
- JP 8193136 A
- JP 8269850 A
- JP 8284063 A
- JP 9057889 A
- JP 9137335 A
- JP 10165045 A
- JP 11247027 A
- JP 7310283 A
- JP 2003528974 T
- JP 2001030861 A
- JP 7324283 A
- JP 8020579 A
- JP 2003147617 A
- JP 10006451 A
- JP 10016152 A
- JP 2002161158 A
- JP 2003049065 A
- JP 2003160724 A
- JP 10205056 A
- JP 8151457 A
- JP 2001172531 A
- JP 7003955 A
- JP 2006266042 A
- JP 8197511 A
- JP 9183159 A
- JP 11236734 A
- JP 11300880 A
- JP 2001009811 A
- JP 2003328523 A
- JP 2002226764 A
- JP 2006306020 A
- JP 9277414 A
- JP 7269016 A
- JP 2003211538 A
- JP 9239921 A
- JP 9254345 A
- JP 10044352 A
- JP 8073825 A
- JP 8207218 A
- JP 2003082608 A
- JP 2001139700 A
- JP 5253559 A
- JP 20052941780 A
- JP 2000226778 A
- JP 2003211606 A
- JP 2004003191 A
- JP 9309260 A
- JP 2002178625 A
- JP 2002212237 A
- JP 2003266926 A
- JP 2003266927 A
- JP 2004181813 A
- JP 10203033 A
- JP 2001249430 A
- JP 8258415 A
- JP 9095055 A
- JP 2003145949 A
- JP 2006167996 A
- JP 2002367227 A
- JP 2006301268 A
- JP 2006293155 A
- JP 9306344 A
- JP 2000223271 A
- JP 2005189645 A
- JP 2000174296 A
- JP 2006282970 A
- JP 2006310461 A
- JP 2006257144 A
- JP 2006210906 A
- JP 2003168814 A
- JP 2005129713 A
- JP 2004227843 A
- JP 2004168057 A
- JP 11040833 A
- JP 2005129926 A
- JP 2000091611 A
- JP 2005346999 A
- JP 2000091610 A
- JP 11261085 A
- JP 11214736 A
- JP 2001261904 A
- JP 8200067629 A
- JP 2005353554 A
- JP 5272076 A
- JP 2003239181 A
- JP 2006063162 A
- JP 2007093649 A
- JP 2001214121 A
- JP 2001214122 A
- JP 2001315263 A
- JP 2003206422 A
- JP 2003025478 A
- JP 2004137457 A
- JP 2005132999 A
- JP 2002036441 A
- JP 10250004 A
- JP 2002036452 A

- JP 2003039607 A
- JP 2004114355 A
- JP 2002113937 A
- JP 2002293706 A
- JP 2006274179 A
- JP 2005 A
- JP 326761 A
- JP 2006335855 A
- JP 10034841 A
- JP 2002114879 A
- JP 2004532306 T
- JP 2004530024 T
- JP 2004525273 T
- JP 10194796 A
- JP 10287804 A
- JP 2000071626 A
- JP 2001159228 A
- JP 2002127310 A
- JP 2002189415 A
- JP 2002130591 A
- JP 2002307619 A
- JP 2002307845 A
- JP 2006316395 A
- JP 2004352847 A
- JP 2000224942 A
- JP 8208976 A
- JP 8318592 A
- JP 2005504735 A
- JP 2005037642 A
- JP 2005055615 A
- JP 9300537 A
- JP 2000025180 A
- JP 2003019776 A
- JP 2005074735 A
- JP 2001207144 A
- JP 2002543265 T
- JP 2002543266 T
- US 6225384 B
- JP 2004352783 A
- JP 7268253 A
- JP 2003253265 A
- JP 2005105131 A
- JP 2005300962 A
- JP 3915339 B
- JP 2005304340 A
- JP 2005044154 A
- JP 2006274197 A
- JP 2006089697 A
- JP 2000231044 A
- JP 2002527559 T
- JP 2003020966 A
- JP 2006266402 A
- JP 2002207845 A
- JP 2005326761 A
- JP 2000067629 A
- JP 20025443265 T

**Non-patent literature cited in the description**


- **SUMIO TOKITA.** Chemistry Seminar 9. Color Chemistry. Maruzen, 1982, 150-161
- Experimental Chemistry Lecture, Chapter 7 Spectroscopy II. Maruzen, 1992, 180-186
- Experimental Chemistry Lecture, Chapter 3 Basic Operation III. Maruzen, 1991, 154
- **SUMIO TOKITA.** Chemistry Seminar 9, Color Chemistry. Maruzen, 1982, 154-155
- New Experimental Chemistry Lecture, Chapter 9 Analytical Chemistry [II. Maruzen, 1977, 244
- *Journal of Chemical Crystallography,* 1997, vol. 27, 516
- *Bioorganic & Medicinal Chemistry Letters,* 1997, vol. 7, 652
- *Journal of Organic Chemistry,* 1978, vol. 43, 2153
- *Synthesis,* 1986, 968
- *Liebigs Ann. Chem.,* 1969, vol. 726, 103-109
- *Journal of Organic Chemistry,* 1990, vol. 55, 5347-5350
- *JOURNAL OF ORGANIC CHEMISTRY,* 1994, vol. 59, 3077-3081
- *Tetrahedron Letters,* 1991, vol. 32, 4897-4900
- *TETRAHEDRON LETTERS,* 1977, vol. 26, 2225
- *Tetrahedron,* 1993, vol. 49, 3035-3042
- *Journal of the American Chemical Society,* 1958, vol. 80, 1662-1664
- *JOURNAL OF THE AMERICAN CHEMICAL SOCIETY,* 1995, vol. 117, 9995-10002
- *Phosphorus, Sulfur, and Silicon,* 1997, vol. 120-121, 121-143
- *Chem. Commun.,* 2004, 1758-1759
- Development of Polymer Additives and Environmental Measures. CMC Publishing, 2003
- New Trend of Functional Polymer Additives. Toray Research Center Inc, 1999
- Fine Chemicals. Toray Research Center Inc, May 2004, 28-38
- New Trend of Functional Polymer Additives. Toray Research Center Inc, 1999, 96-140
- Development of Polymer Additives and Environmental Measures. CMC Publishing, 2003, 54-64
- Methods for Improving the Photostability of Polymers. CMC Publishing, 2000, 85-107
- Basis and Physical Properties of High Functional Coatings. CMC Publishing, 2003, 314-359
- Durability of Polymer Materials and Composite Material Products. CMC Publishing, 2005
- Elongation of Lifetime of Polymer Materials and Environmental Measures. CMC Publishing, 2000

- Plastics Additives Handbook. Hanser Publishers, 238-244
- **TADAHIKO KUTSURA.** Basic Seminar 2. Science of Plastic Packaging Container. Society of packaging Science & Technology, 2003